# EUROPEAN PATENT APPLICATION

(11) **EP 4 663 716 A1**
(43) Date of publication of application: **17.12.2025**
(21) Application number: 24859988.8
(22) Date of filing: 30.08.2024
(51) Int. Cl.: C09K 3/18, D06M 13/395, D06M 15/248, D06M 15/263, D06M 15/564, D06M 15/643

(54) **WATER REPELLENT COMPOSITION**

(30) Priority: 01.09.2023 JP 2023142400
(71) Applicant: Daikin Industries, Ltd., Osaka-shi, Osaka 530-0001 (JP)
(72) Inventor: YAMAGUCHI, Nozomi, Osaka-Shi, Osaka 530-0001 (JP); YAMAMOTO, Yuki, Osaka-Shi, Osaka 530-0001 (JP)
(74) Representative: Hoffmann Eitle
(86) International application number: PCT/JP2024/031325
(87) International publication number: WO 2025/047963

(57) **Abstract**

A water-repellent composition capable of imparting both favorable water-repellency and favorable slip resistance to a textile product is provided by A water-repellent composition comprising a non-fluorine copolymer (A) comprising a repeating unit derived from a hydrophobic monomer (a1) having a hydrocarbon group having 2 to 40 carbon atoms, and a repeating unit derived from at least one chloride monomer (a2) selected from the group consisting of vinyl chloride and vinylidene chloride, wherein in the non-fluorine copolymer (A), an amount of repeating units derived from the monomer (a2) is 1 to 9% by weight based on a sum of an amount of repeating units derived from the monomer (a1) and the amount of repeating units derived from the monomer (a2).

## Description

### Technical Field

The present disclosure relates to a water-repellent composition.

### Background Art

Development of non-fluorine-based water-repellent agents for imparting water-repellency to a substrate (particularly textile products) has been pursued.

### Citation List

### Patent Literature

Patent Literature 1: WO 2021/132172
Patent Literature 2: JP 2020-189980 A

### Summary of Invention

### Technical Problem

When conventional water-repellent agents are used for textile products, sliding (i.e., slip) of seams may result in reducing reliability of the textile products.

An object of the present disclosure is to provide a water-repellent composition capable of imparting both favorable water-repellency and favorable slip resistance to a textile product.

### Solution to Problem

The present disclosure includes the following aspects:
[Item 1] A water-repellent composition comprising a non-fluorine copolymer (A) comprising a repeating unit derived from a hydrophobic monomer (a1) having a hydrocarbon group having 2 to 40 carbon atoms, and a repeating unit derived from at least one chloride monomer (a2) selected from the group consisting of vinyl chloride and vinylidene chloride,
   wherein in the non-fluorine copolymer (A), an amount of repeating units derived from the monomer (a2) is 1 to 9% by weight based on a sum of an amount of repeating units derived from the monomer (a1) and the amount of repeating units derived from the monomer (a2).
[Item 2] The water-repellent composition according to item 1, wherein the hydrocarbon group in the hydrophobic monomer (a1) is a linear alkyl group having 10 or more carbon atoms.
[Item 3] The water-repellent composition according to item 1 or 2, wherein the hydrophobic monomer (a1) is a compound represented by formula:

   CH₂ =C(-R¹²)-C(=O)-Y¹¹-(R¹¹)ₖ

   wherein R¹¹ is a hydrocarbon group having 2 to 40 carbon atoms,
   R¹² is a hydrogen atom, a monovalent organic group or a halogen atom,
   Y¹¹ is a divalent to tetravalent group composed of at least one selected from a direct bond, a divalent to tetravalent hydrocarbon group having one carbon atom, - C₆H₄-, -O-, -C(=O)-, -S(=O)₂- and -NR'-, wherein R' is a hydrogen atom or a hydrocarbon group having 1 to 4 carbon atoms, and
   k is 1 to 3.
[Item 4] The water-repellent composition according to any one of items 1 to 3, comprising silicone.
[Item 5] The water-repellent composition according to item 4, wherein an amount of the silicone is 0.1 to 10 parts by mass per 100 parts by mass of the non-fluorine copolymer (A) .
[Item 6] The water-repellent composition according to any one of items 1 to 5, wherein in the non-fluorine copolymer (A), the amount of repeating units derived from the monomer (a2) is 3 to 7% by weight based on the sum of the amount of repeating units derived from the monomer (a1) and the amount of repeating units derived from the monomer (a2).
[Item 7] The water-repellent composition according to any one of items 1 to 6, further comprising an isocyanate derivative (B).
[Item 8] The water-repellent composition according to item 7, wherein the isocyanate derivative (B) has an alkyl group having 12 or more and 30 or less carbon atoms.
[Item 9] The water-repellent composition according to item 7 or 8, wherein the isocyanate derivative (B) is polyurethane.
[Item 10] The water-repellent composition according to any one of items 7 to 9, wherein an amount of the isocyanate derivative (B) is 0.1 to 10 parts by mass per 100 parts by mass of the non-fluorine copolymer (A).
[Item 11] The water-repellent composition according to any one of items 7 to 10, wherein the isocyanate derivative (B) is a compound obtained by a reaction of at least one active hydrogen compound selected from the group consisting of a hydrocarbon alcohol, a modified sugar alcohol compound, and a modified hydroxy acid compound, with at least one raw material isocyanate selected from the group consisting of an acyclic aliphatic polyisocyanate and a derivative thereof.
[Item 12] The water-repellent composition according to item 1,
   wherein the hydrophobic monomer (a1) is a compound represented by formula:

      CH₂ =C(-R¹²)-C(=O)-Y¹¹-(R¹¹)ₖ

      wherein R¹¹ is a hydrocarbon group having 2 to 40 carbon atoms,
      R¹² is a hydrogen atom, a monovalent organic group or a halogen atom,
      Y¹¹ is a divalent to tetravalent group composed of at least one selected from a direct bond, a divalent to tetravalent hydrocarbon group having one carbon atom, - C₆H₄-, -O-, -C(=O)-, -S(=O)₂- and -NR'-, wherein R' is a hydrogen atom or a hydrocarbon group having 1 to 4 carbon atoms, and
      k is 1 to 3, and
   in the non-fluorine copolymer (A), the amount of repeating units derived from the monomer (a2) is 3 to 7% by weight based on the sum of the amount of repeating units derived from the monomer (a1) and the amount of repeating units derived from the monomer (a2).
[Item 13] The water-repellent composition according to item 1,
   wherein the hydrophobic monomer (a1) is a compound represented by formula:

      CH₂ =CH-C(=O) -Y¹¹-R¹¹

      wherein R¹¹ is an alkyl group having 12 or more and 25 or less carbon atoms,
      Y¹¹ is -O- or -O-(CH₂)ₘ-NH-C(=O)-, and
      m is an integer of 2 or 4,
   the chloride monomer (a2) is vinyl chloride, and
   in the non-fluorine copolymer (A), the amount of repeating units derived from the monomer (a2) is 3 to 7% by weight based on the sum of the amount of repeating units derived from the monomer (a1) and the amount of repeating units derived from the monomer (a2).
[Item 14] A method for producing a textile product, comprising applying the water-repellent composition according to any one of items 1 to 13 to a fibrous substrate.
[Item 15] The method for producing a textile product according to item 14, comprising, before applying the water-repellent composition to the fibrous substrate, imparting to fibers one or more functional groups selected from the group consisting of
   a monovalent group represented by -SO₃M¹, wherein M¹ represents a monovalent cation,
   a monovalent group represented by -COOM², wherein M² represents a monovalent cation, and
   a monovalent group represented by -O-P(O)(OX¹)(OX²),
   wherein X¹ and X² each independently represent a hydrogen atom or an alkyl group having 1 to 22 carbon atoms.
[Item 16] A textile product to which the non-fluorine copolymer (A) in the water-repellent composition according to any one of items 1 to 13 is adhered.
[Item 17] The textile product according to item 16, to which a compound having one or more functional groups selected from the group consisting of
   a monovalent group represented by -SO₃M¹, wherein M¹ represents a monovalent cation,
   a monovalent group represented by -COOM², wherein M² represents a monovalent cation, and
   a monovalent group represented by -O-P(O)(OX¹)(OX²),
   wherein X¹ and X² each independently represent a hydrogen atom or an alkyl group having 1 to 22 carbon atoms, is adhered.

### Advantageous Effects of Invention

The water-repellent composition in the present disclosure can impart both favorable water-repellency and favorable slip resistance to a substrate (particularly a textile product).

### Description of Embodiments

### <Definition of Terms>

As used herein, the "n valent group" means a group having n bonds, i.e., a group forming n bonds. Also, the "n valent organic group" means a n valent group containing carbon. Such an organic group is not limited, but can be a hydrocarbon group or a derivatives thereof. The derivative of the hydrocarbon group means a group that has one or more of, for example, N, O, S, Si, or an amide, sulfonyl, siloxane, carbonyl, carbonyloxy, or halogen at an end or in a molecular chain of the hydrocarbon group.

As used herein, the "hydrocarbon group" means a group containing carbon and hydrogen, the group obtained by having removed hydrogen atoms from the hydrocarbon. Such a hydrocarbon group is not limited, but examples thereof include C₁₋₂₀ hydrocarbon groups, such as an aliphatic hydrocarbon group and an aromatic hydrocarbon group. The above-described "aliphatic hydrocarbon group" may be linear, branched, or cyclic, and may be either saturated or unsaturated. The hydrocarbon group may contain one or more ring structures. The hydrocarbon group may be substituted with one or more substituents.

In the present description, regardless of whether "independently at each occurrence," "independently with each other," "each independently," or similar expressions are explicitly stated, with the exception of case where they are exceptions, when a term (symbol) that may occur a plurality of times in a chemical structure is defined, the definition applies independently at each occurrence.

The chemical structures described herein should be understood not to encompass a chemical structure that would be recognized by a person skilled in the art as being chemically impossible or extremely unstable.

### <Water-Repellent Composition>

The water-repellent composition in the present disclosure includes a non-fluorine copolymer (A) containing a repeating unit derived from a hydrophobic monomer (a1) having a hydrocarbon group having 2 to 40 carbon atoms, and a repeating unit derived from at least one chloride monomer (a2) selected from the group consisting of vinyl chloride and vinylidene chloride. In the non-fluorine copolymer (A), the amount of repeating units derived from the monomer (a2) is 1 to 9% by weight based on the sum of the amount of repeating units derived from the monomer (a1) and the amount of repeating units derived from the monomer (a2). The water-repellent composition in the present disclosure is capable of adhering to a substrate (particularly a textile product) to impart both favorable water-repellency and favorable slip resistance to the substrate.

The water-repellent composition may further contain an isocyanate derivative (B). The water-repellent composition may further contain other components (silicone, wax, an organic acid, a surfactant, an organic solvent, etc.).

### [(A) Non-Fluorine Copolymer]

The non-fluorine copolymer (A) is free of fluorine atoms.

The non-fluorine copolymer (A) contains
a repeating unit derived from the hydrophobic monomer (a1) and
a repeating unit derived from the chloride monomer (a2). The non-fluorine copolymer (A) may further contain
a cyclic hydrocarbon group-containing monomer (a3) and/or
a crosslinkable monomer (a4). The non-fluorine copolymer (A) may contain other monomer (a5).

### ((a1) Hydrophobic Monomer)

The hydrophobic monomer (a1) has one ethylenically unsaturated double bond and a hydrocarbon group having 2 to 40 carbon atoms.

The hydrophobic monomer (a1) may have at least one hydrocarbon group having 2 to 40 carbon atoms. The hydrocarbon group is preferably an aliphatic hydrocarbon group, in particular a saturated aliphatic hydrocarbon group, and in particular an alkyl group. The hydrocarbon group may be linear or branched and preferably linear. The number of carbon atoms of the hydrocarbon group may be 2 or more, 3 or more, 4 or more, 6 or more, 8 or more, 10 or more, 11 or more, 12 or more, 14 or more, or 16 or more and preferably 6 or more. The number of carbon atoms of the hydrocarbon group may be 40 or less, 30 or less, 25 or less, 22 or less, or 20 or less and preferably 30 or less.

Hydrophobic monomer (a1) may be a monomer represented by the formula:

CH₂=C(-R¹²)-C(=O)-Y¹¹-(R¹¹)ₖ

wherein
R¹¹ is a hydrocarbon group having 2 to 40 carbon atoms,
R¹² is a hydrogen atom, a monovalent organic group or a halogen atom,
Y¹¹ is a divalent to tetravalent group composed of at least one selected from a direct bond, a divalent to tetravalent hydrocarbon group having one carbon atom, - C₆H₄-, -O-, -C(=O)-, -S(=O)₂- and -NR'- wherein R' is a hydrogen atom or a hydrocarbon group having 1 to 4 carbon atoms, and
k is 1 to 3.

R¹¹ is preferably a branched or linear (preferably long linear chain) hydrocarbon group. The hydrocarbon group is preferably an aliphatic hydrocarbon group, particularly a saturated aliphatic hydrocarbon group, and in particular an alkyl group. The -CH₃ group has a lower surface free energy than -CH₂- and is more likely to exhibit a liquid-repellency. For this reason, a structure with many branches and many -CH₃ groups is preferred. A long chain alkyl group of a certain length, on the other hand, exhibits a high liquid-repellency derived for its crystallinity. Therefore, it can be a branched hydrocarbon group (for example, a branched alkyl group), particularly a t-butyl group or isopropyl group, a group with a multi-branched structure, or a long chain hydrocarbon group (or a long linear hydrocarbon group), for example, an alkyl group. The number of carbon atoms of R¹¹ may be 2 or more, 3 or more, 4 or more, 6 or more, 8 or more, 10 or more, 11 or more, 12 or more, 14 or more, 16 or more, or 18 or more, and is preferably 10 or more. The number of carbon atoms of R¹¹ may be 40 or less, 30 or less, 25 or less, 20 or less, 15 or less, or 12 or less.

k is 1, 2 or 3. k = 3 when Y¹¹ has a tetravalent hydrocarbon group having one carbon atom, for example. k = 2 when Y¹¹ has a trivalent hydrocarbon group having one carbon atom, for example. k = 1 when Y¹¹ has no trivalent or tetravalent hydrocarbon groups having one carbon atom (for example, when Y¹¹ has a divalent hydrocarbon group having one carbon atom (-CH₂-) (for example, 1 to 6 such groups)).

R¹² may be a hydrogen atom, methyl group, halogen atom, substituted or unsubstituted benzyl group, substituted or unsubstituted phenyl group. Examples of R¹² are a hydrogen atom, methyl group, chlorine atom, bromine atom, iodine atom, and cyano group. R¹² is preferably a hydrogen atom, methyl group, and chlorine atom. R¹² is more preferably a methyl group. When R¹² is a methyl group, a higher liquid-repellency can be obtained. R¹² may be a hydrogen atom in view of particularly its reactivity.

Y¹¹ is preferably a divalent group. Examples of divalent to tetravalent hydrocarbon groups having one carbon atom are -CH₂-, -CH= with a branched structure and -C≡ with a branched structure.

Y¹¹ may be -Y'-, -Y'-Y'-, -Y'-C(=O)-, -C(=O)-Y'-, - Y'-C(=O)-Y'-, -Y'-X'-, -Y'-X'-Y'-, -Y'-X'-Y'-C(=O)-, -Y'-X'-C(=O)-Y'-, -Y'-X'-Y'-C(=O)-Y'-, or -Y'-X'-Y'-X'-wherein, Y' is each independently a direct bond, -O-, - NR'- (where R' is a hydrogen atom or a hydrocarbon group having 1 to 4 carbon atoms) or -S(=O)₂-, and X' is - (CH₂)ₘ- (where m is an integer of 1 to 5), a linear hydrocarbon group having an unsaturated bond having 1 to 5 carbon atoms, a hydrocarbon group having a branched structure having 1 to 5 carbon atoms, or -(CH₂)₁-C₆H₄-(CH₂)₁- (where l is each independently an integer of 0 to 5, and -C₆H₄- is a phenylene group). It is preferable that Y¹¹ should not be a divalent hydrocarbon group singly.

Specific examples of Y¹¹ are -O-, -NH-, -O-C(=O)-, - NH-C(=O)-, -O-C(=O)-NH-, -NH-C(=O)-O-, -NH-C(=O)-NH-, -O-C₆H₄-, -NH-C₆H₄-, -O-(CH₂)ₘ-O-, -NH-(CH₂)ₘ-NH-, -O-(CH₂)ₘ-NH-, -NH-(CH₂)ₘ-O-, -O-(CH₂)ₘ-O-C(=O)-, -O-(CH₂)ₘ-C(=O)-O-, -NH-(CH₂)ₘ-O-C(=O)-, -NH-(CH₂)ₘ-C(=O)-O-, -O-(CH₂)ₘ-O-C(=O)-NH-, -O-(CH₂)ₘ-NH-C(=O)-O-, -O-(CH₂)ₘ-C(=O)-NH-, -O-(CH₂)ₘ-NH-C(=O)-, -O-(CH₂)ₘ-NH-C(=O)-NH-, -O-(CH₂)ₘ-O-C₆H₄-, -O-(CH₂)ₘ-NH-S(=O)₂-, -O-(CH₂)ₘ-S(=O)₂-NH-, -NH-(CH₂)ₘ-NH-S(=O)₂-, -NH-(CH₂)ₘ-S(=O)₂-NH-, -NH-(CH₂)ₘ-O-C(=O)-NH-, - NH-(CH₂)ₙ-NH-C(=O)-O-, -NH-(CH₂)ₘ-C(=O)-NH-, -NH-(CH₂)ₘ-NH-C (=O) -, -NH-(CH₂)_{M}-NH-C(=O)-NH-, -NH-(CH₂)ₘ-O-C₆H₄-, or - NH-(CH₂)ₘ-NH-C₆H₄-, wherein m is an integer of 1 to 5 and particularly 2 or 4.

Y¹¹ is preferably -O-, -NH-, -O-(CH₂)ₘ-O-C(=O)-, -O-(CH₂)ₘ-NH-C(=O)-, -O-(CH₂)ₘ-O-C(=O)-NH-, -O-(CH₂)ₘ-NH-C(=O)-O-, -O-(CH₂)ₘ-NH-C(=O)-NH-, -O-(CH₂)ₘ-NH-S(=O)₂- or -O-(CH₂)ₘ-S(=O)₂-NH-, -NH-(CH₂)ₘ-O-C(=O)-, -NH-(CH₂)ₘ-NH-C(=O)-, -NH-(CH₂)ₘ-O-C(=O)-NH-, -NH-(CH₂)ₘ-NH-C(=O)-O-, or -NH-(CH₂)ₘ-NH-C(=O)-NH-, wherein m is an integer of 1 to 5 and particularly 2 or 4. Y¹¹ is more preferably -O-, - O-(CH₂)ₘ-O-C(=O)-NH-, -O-(CH₂)ₘ-NH-C(=O)-O- or -O-(CH₂)ₘ-NH-C(=O)-, -O-(CH₂)ₘ-NH-S(=O)₂- or -O-(CH₂)ₘ-S(=O)₂-NH-, and particularly preferably -O-(CH₂)ₘ-NH-C(=O)-.

Y¹¹ is further preferably -O-, -O-(CH₂)ₘ-O-C(=O)-NH-, -O-(CH₂)ₘ-NH-C(=O)-O-, or -O-(CH₂)ₘ-NH-C(=O)-, wherein m is an integer of 1 to 5 and particularly 2 or 4.

Y¹¹ is particularly preferably -O- or -O-(CH₂)₂-NH-C(=O)-.

Hydrophobic monomer (a1) is preferably free of a reactive group or hydrophilic group. Examples of the reactive groups are an epoxy group, chloromethyl group, bromomethyl group, iodomethyl group, isocyanate group, and block isocyanate group. Examples of the hydrophilic groups are a hydroxyl group, polyalkylene oxide group, amino group, carboxylic acid group, sulfonic acid group, phosphoric acid group, alkali metal or alkaline earth metal salt groups of carboxylic acid, sulfonic acid, or phosphoric acid, ammonium salt groups in which a chloride or bromide or iodide ion is a counter anion, and other ionic groups. Here, the reactive group may also serve as the hydrophilic group.

Hydrophobic monomer (a1) may have a water solubility at 25°C of 10 g/l or less, 5 g/l or less, 3 g/l or less, 1 g/l or less, 0.5 g/l or less, or 0.1 g/l or less and preferably 3 g/l or less. A homopolymer of hydrophobic monomer (a1) may have a water solubility at 25°C of 10 g/l or less, 5 g/l or less, 3 g/l or less, 1 g/l or less, 0.5 g/l or less, or 0.1 g/l or less and preferably 3 g/l or less.

A water contact angle of a homopolymer of hydrophobic monomer (a1) may be 75° or more, 80° or more, 85° or more, 90° or more, 95° or more, 100° or more, 101° or more, 103° or more, 105° or more, 110° or more, 115° or more, or 120° or more, and preferably 90° or more or 100° or more. The water contact angle of the homopolymer of hydrophobic monomer (a1) may be 160° or less, 150° or less, 140° or less, 130° or less, 125° or less, or 110° or less. The water contact angle within the aforementioned range is preferred in view of a liquid-repellency of a copolymer and particularly of a water-repellency. The water contact angle of the homopolymer may be a value obtained by spin-coating a surface of a silicon wafer substrate with a homopolymer solution with a solid content of 1.0% in chloroform, dropping 2 µL of water on the coating film, and measuring the contact angle 1 second after the dropping.

Specific examples of hydrophobic monomer (a1) are as follows. Each of the compounds of the following chemical formulas is an acrylic compound having a hydrogen atom at the α-position, and may also be a methacrylic compound having a methyl group at the α-position or an α-chloroacrylic compound having a chlorine atom at the α-position.

CH₂=CHC(=O)OC₁₈H₃₇

CH₂=CHC(=O)OCₙH₂ₙ₊₁

CH₂=CHC(=O)OC₂H₄OC(=O)NHC₁₈H₃₇

CH₂=CHC(=O)OC₂H₄NHC(=O) OC₁₈H₃₇

CH₂=CHC(=O)OCₘH₂ₘNHC(=O)CₙH₂ₙ₊₁

CH₂=CHC(=O)OC₂H₄OC(=O)NHCₙH₂ₙ₊₁

CH₂=CHC(=O)OC₂H₄NHC(=O)OCₙH₂ₙ₊₁

CH₂=CHC(=O)OC₂H₄NHC(=O) NHCₙH₂ₙ₊₁

CH₂=CHC(=O)OC₄H₈OC(=O) NHCₙH₂ₙ₊₁

CH₂=CHC(=O)NHCₘH₂ₘOC(=O) NHCₙH₂ₙ₊₁

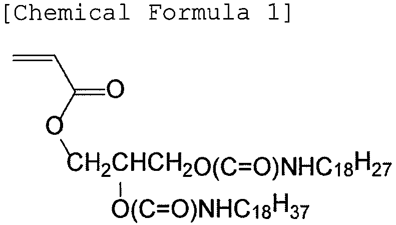

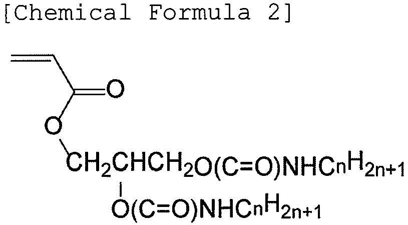

CH₂=CHC(=O)OCₘH₂ₘNHSO₂CₙH₂ₙ₊₁

CH₂=CHC(=O)OCₘH₂ₘSO₂NHCₙH₂ₙ₊₁

wherein n is a numeral of 3 to 40 and m is a numeral of 1 to 5.

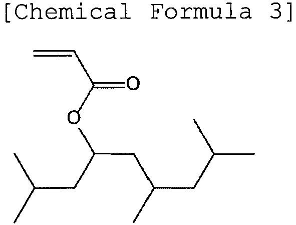

Preferred specific examples of hydrophobic monomer (a1) include stearyl (meth)acrylate, butyl (meth)acrylate, t-butyl (meth)acrylate, octyl (meth)acrylate, isooctyl (meth)acrylate, decyl (meth)acrylate, isodecyl (meth)acrylate, nonyl (meth)acrylate, isononyl (meth)acrylate, lauryl (meth)acrylate, icosyl (meth)acrylate, behenyl (meth)acrylate, stearyl α-chloroacrylate, icosyl α-chloroacrylate, behenyl α-chloroacrylate, stearamidoethyl (meth)acrylate, 2-stearamidoethyl acrylate, CH₂=CHC(=O)OC₂H₄NHSO₂C₁₈H₃₇, and the like. These may be used singly or in combination of two or more thereof.

From the viewpoint of liquid repellency, the hydrophobic monomer (a1) may contain the hydrophobic monomer (a1) having an amide group, a urea group or a urethane group. Hydrophobic monomer (a1) may be a combination of a hydrophobic monomer (a1) having an amide group, urea group or urethane group and a hydrophobic monomer (a1) free of an amide group, urea group or urethane group. Examples of hydrophobic monomer (a1) having an amide group, urea group or urethane group include CH₂=C(-R¹²)-C(=O)-O-(CH₂)ₙ-NH-C(=O)-R¹¹, CH₂=C(-R¹²)-C(=O)-O-(CH₂)ₘ-O-C(=O)-NH-R¹¹, CH₂=C(-R¹²)-C(=O)-O-(CH₂)ₘ-NH-C(=O)-O-R¹¹, and CH₂=C(-R¹²)-C(=O)-O-(CH₂)ₘ-NH-C(=O)-NH-R¹¹. Hydrophobic monomer (a1) may contain CH₂=C(-R¹²)-C(=O)-O-(CH₂)ₙ-NH-C(=O)-R¹¹.

### ((a2) Chloride Monomer)

The non-fluorine copolymer (A) contains a repeating unit derived from at least one chloride monomer (a2) selected from the group consisting of vinyl chloride and vinylidene chloride. The chloride monomer (a2) is preferably vinyl chloride.

### ((a3) Cyclic hydrocarbon group-containing monomer)

The non-fluorine copolymer (A) may have a repeating unit derived from a cyclic hydrocarbon group-containing monomer (a3). Cyclic hydrocarbon group-containing monomer (a3) is a monomer having a cyclic hydrocarbon group and may be a monomer having one ethylenically unsaturated double bond and a cyclic hydrocarbon group.

Cyclic hydrocarbon group-containing monomer (a3) preferably has a (meth)acrylic group as an ethylenically unsaturated double bond, and for example, it may have a (meth)acrylate group or (meth)acrylamide group as an ethylenically unsaturated double bond.

The cyclic hydrocarbon group may be aliphatic or aromatic and is preferably aliphatic. The cyclic hydrocarbon group may be saturated or unsaturated and is preferably saturated. The cyclic hydrocarbon group may be a monocyclic group, polycyclic group, or bridged ring group and is preferably the bridged ring group. The cyclic hydrocarbon group may have a chain group (for example, linear or branched chain hydrocarbon group).

The number of carbon atoms of the cyclic hydrocarbon group may be 4 or more, 6 or more, or 8 or more, and may be 30 or less, 26 or less, 22 or less, 18 or less, or 14 or less.

Specific examples of the cyclic hydrocarbon groups include a cyclohexyl group, t-butylcyclohexyl group, adamantyl group, 2-methyl-2-adamantyl group, 2-ethyl-2-adamantyl group, bornyl group, isobornyl group, norbornyl group, dicyclopentanyl group, dicyclopentenyl group, benzyl group, phenyl group, naphthyl group, 2-t-butylphenyl group, a residual group formed by removing one or more hydrogen atoms from any of these groups (for example, a cyclohexylene group, adamantylene group, phenylene group, and naphthylene group), and a group formed by substituting any of these groups.

Specific examples of cyclic hydrocarbon group-containing monomer (a3) include cyclohexyl (meth)acrylate, t-butylcyclohexyl (meth)acrylate, benzyl (meth)acrylate, isobornyl (meth)acrylate, dicyclopentanyl (meth)acrylate, dicyclopentenyl (meth)acrylate, dicyclopentanyloxyethyl (meth)acrylate, tricyclopentanyl (meth)acrylate, adamantyl (meth)acrylate, 2-methyl-2-adamantyl (meth)acrylate, 2-ethyl-2-adamantyl (meth)acrylate, and an acrylamide compound from any of these acrylates. These may be used singly or in combination of two or more thereof.

### ((a4) Crosslinkable monomer)

The non-fluorine copolymer (A) may have a repeating unit derived from a crosslinkable monomer (a4). Crosslinkable monomer (a4) is a monomer capable of imparting crosslinkability to a copolymer and may have at least two selected from the group consisting of a reactive group and an olefinic carbon-carbon double bond. Crosslinkable monomer (a4) may be a compound having at least two ethylenically unsaturated double bonds, or a compound having at least one ethylenically unsaturated double bond and at least one reactive group.

Crosslinkable monomer (a4) preferably has a (meth)acrylic group as an ethylenically unsaturated double bond, and for example, it may have a (meth)acrylate group or (meth)acrylamide group as an ethylenically unsaturated double bond.

Examples of the reactive groups include a hydroxyl group, epoxy group, chloromethyl group, block isocyanate group, amino group, carboxyl group, carbonyl group, and isocyanate group (block isocyanate group).

Specific examples of crosslinkable monomer (a4) include diacetone (meth)acrylamide, N-methylol (meth)acrylamide, hydroxyethyl (meth)acrylamide, glycidyl (meth)acrylate, hydroxymethyl (meth)acrylate, hydroxyethyl (meth)acrylate, 2,3-dihydroxypropyl (meth)acrylate, 3-chloro-2-hydroxypropyl (meth)acrylate, 2-acetoacetoxyethyl (meth)acrylate, butadiene, isoprene, chloroprene, vinyl monochloroacetate, vinyl methacrylate, glycidyl(meth)acrylate, 1,4-butanediol di(meth)acrylate, 1,6-hexanediol di(meth)acrylate, 1,9-nonanediol di(meth)acrylate, neopentylglycol di(meth)acrylate, and an acrylamide compound from any of these acrylates. These may be used singly or in combination of two or more thereof. These may be used singly or in combination of two or more thereof.

### ((a5) Other Monomer)

The non-fluorine copolymer (A) may contain a repeating unit derived from other monomer (a5) other than the monomers (a1) to (a4).

Specific examples of the other monomers (a5) include, for example, ethylene, a halogenated olefin, vinyl acetate, acrylonitrile, an alkoxy polyalkylene glycol (meth) acrylate, and a vinyl alkyl ether. The other fluorine-free monomers are not limited to these examples. These may be used singly or in combination of two or more thereof.

### (Composition of polymer)

The amount of repeating units derived from hydrophobic monomer (a1) may be 50% by weight or more, 60% by weight or more, 65% by weight or more, 70% by weight or more, 75% by weight or more, 80% by weight or more, or 85% by weight or more, relative to the non-fluorine copolymer (A). The amount of repeating units derived from hydrophobic monomer (a1) may be 99% by weight or less, 98% by weight or less, 95% by weight or less, 90% by weight or less, 80% by weight or less, 70% by weight or less, or 60% by weight or less, relative to the non-fluorine copolymer (A).

In the repeating units derived from hydrophobic monomer (a1), the proportion of hydrophobic monomer (a1) having an amide group, urea group or urethane group may be 1% by weight or more, 3% by weight or more, 5% by weight or more, 10% by weight or more, 20% by weight or more, 30% by weight or more, 50% by weight or more, or 75% by weight or more. In the repeating units derived from hydrophobic monomer (a1), the proportion of hydrophobic monomer (a1) having an amide group, urea group, or urethane group may be 100% by weight or less, 90% by weight or less, 80% by weight or less, or 70% by weight or less.

The amount of repeating units derived from chloride monomer (a2) may be 1% by weight or more, 2% by weight or more, 3% by weight or more, 4% by weight or more, or 5% by weight or more, relative to the non-fluorine copolymer (A). The amount of repeating units derived from chloride monomer (a2) may be 15% by weight or less, 13% by weight or less, 11% by weight or less, 10% by weight or less, 9% by weight or less, 8% by weight or less, 7% by weight or less, 6% by weight or less, or 5% by weight or less, relative to the non-fluorine copolymer (A).

In the non-fluorine copolymer (A), the amount of repeating units derived from the chloride monomer (a2) may be 1% by weight or more, 2% by weight or more, 3% by weight or more, 4% by weight or more, or 5% by weight or more and preferably 3% by weight or more, based on the sum of the amount of repeating units derived from the hydrophobic monomer (a1) and the amount of repeating units derived from the chloride monomer (a2).

In the non-fluorine copolymer (A), the amount of repeating units derived from the chloride monomer (a2) may be 9% by weight or less, 8% by weight or less, 7% by weight or less, 6% by weight or less, or 5% by weight or less, preferably 7% by weight or less, and more preferably 5% by weight or less, based on the sum of the amount of repeating units derived from the hydrophobic monomer (a1) and the amount of repeating units derived from the chloride monomer (a2).

The amount of repeating units derived from cyclic hydrocarbon group-containing monomer (a3) may be 0.5% by weight or more, 1% by weight or more, 3% by weight or more, or 4% by weight or more, relative to the non-fluorine copolymer (A). The amount of repeating units derived from cyclic hydrocarbon group-containing monomer (a3) may be 30% by weight or less, 20% by weight or less, 15% by weight or less, 10% by weight or less, 7.5% by weight or less, or 5% by weight or less, relative to the non-fluorine copolymer (A).

The amount of repeating units derived from crosslinkable monomer (a4) may be 0.5% by weight or more, 1% by weight or more, 3% by weight or more, or 4% by weight or more, relative to the non-fluorine copolymer (A). The amount of repeating units derived from crosslinkable monomer (a4) may be 30% by weight or less, 20% by weight or less, 15% by weight or less, 10% by weight or less, 7.5% by weight or less, or 5% by weight or less, relative to the non-fluorine copolymer (A).

The amount of repeating units derived from the other monomer (a5) may be 0.5% by weight or more, 1% by weight or more, 3% by weight or more, or 4% by weight or more, based on the non-fluorine copolymer (A). The amount of repeating units derived from the other monomer (a5) may be 30% by weight or less, 20% by weight or less, 15% by weight or less, 10% by weight or less, or 5% by weight or less, based on the non-fluorine copolymer (A).

The amount of repeating units derived from chloride monomer (a2) may be 1 parts by weight or more, 3 parts by weight or more, 5 parts by weight or more, 10 parts by weight or more, 25 parts by weight or more, 50 parts by weight or more, 75 parts by weight or more, or 100 parts by weight or more, per 100 parts by weight of repeating units derived from hydrophobic monomer (a1). The amount of repeating units derived from the chloride monomer (a2) may be 150 parts by weight or less, 125 parts by weight or less, 100 parts by weight or less, 75 parts by weight or less, 50 parts by weight or less, 30 parts by weight or less, 20 parts by weight or less, 10 parts by weight or less, 8 parts by weight or less, 7 parts by weight or less, or 6 parts by weight or less, per 100 parts by weight of repeating units derived from the hydrophobic monomer (a1).

The amount of repeating unit derived from cyclic hydrocarbon group-containing monomer (a3) may be 2.5 parts by weight or more, 5 parts by weight or more, 12.5 parts by weight or more, 25 parts by weight or more, 35 parts by weight or more, or 45 parts by weight or more, per 100 parts by weight of repeating units derived from hydrophobic monomer (a1). The amount of repeating unit derived from cyclic hydrocarbon group-containing monomer (a3) may be 75 parts by weight or less, 60 parts by weight or less, 50 parts by weight or less, 40 parts by weight or less, 30 parts by weight or less, 20 parts by weight or less, or 10 parts by weight or less, per 100 parts by weight of repeating units derived from hydrophobic monomer (a1).

The amount of repeating units derived from crosslinkable monomer (a4) may be 2.5 parts by weight or more, 5 parts by weight or more, 12.5 parts by weight or more, 25 parts by weight or more, 35 parts by weight or more, or 45 parts by weight or more, per 100 parts by weight of repeating units derived from hydrophobic monomer (a1). The amount of repeating units derived from crosslinkable monomer (a4) may be 75 parts by weight or less, 60 parts by weight or less, 50 parts by weight or less, 40 parts by weight or less, 30 parts by weight or less, 20 parts by weight or less, or 10 parts by weight or less, per 100 parts by weight of repeating units derived from hydrophobic monomer (a1).

The amount of repeating unit derived from other monomer (a5) may be 2.5 parts by weight or more, 5 parts by weight or more, 12.5 parts by weight or more, 25 parts by weight or more, 35 parts by weight or more, or 45 parts by weight or more, per 100 parts by weight of repeating units derived from hydrophobic monomer (a1). The amount of repeating units derived from other monomer (a5) may be 75 parts by weight or less, 60 parts by weight or less, 50 parts by weight or less, 40 parts by weight or less, 30 parts by weight or less, 20 parts by weight or less, or 10 parts by weight or less, per 100 parts by weight of repeating units derived from hydrophobic monomer (a1).

### [(B) Isocyanate Derivative]

The isocyanate derivative (B) is a compound obtained by a reaction of an active hydrogen compound with a raw material isocyanate, and has a moiety derived from the active hydrogen-containing compound and a moiety derived from the raw material isocyanate. It is to be noted that the isocyanate derivative (B) is normally free of an isocyanate group unlike an isocyanate-based curing agent.

The isocyanate derivative (B) has -NHCO- formed by a reaction of the active hydrogen compound with the raw material isocyanate (herein, -NHCO- may be a moiety of a urethane group or a urea group). -NHCO- is a group formed by a reaction of an active hydrogen-containing group (typically a hydroxy group) of the compound (a) with an active hydrogen-reactive group (typically an isocyanate group) of the compound (b). The isocyanate derivative (B) is typically a urethane (particularly polyurethane).

The isocyanate derivative (B) may have a hydrocarbon group having 6 or more and 40 or less carbon atoms. The hydrocarbon group having 6 or more and 40 or less carbon atoms may be a monovalent hydrocarbon group. The hydrocarbon group may be an aromatic hydrocarbon group or an aliphatic hydrocarbon group, and is preferably an aliphatic hydrocarbon group and particularly preferably a saturated aliphatic hydrocarbon group (alkyl group). The hydrocarbon group may be branched, cyclic or linear, more preferably chainlike and particularly preferably linear. The number of carbon atoms in the hydrocarbon group may be 6 or more, 8 or more, 10 or more, 12 or more, 14 or more, 16 or more, 18 or more, 20 or more, or 22 or more, and is preferably 10 or more, 12 or more, or 16 or more. The number of carbon atoms of the hydrocarbon group may be 40 or less, 35 or less, 30 or less, 25 or less, 20 or less, 15 or less, or 10 or less, and is preferably 30 or less, 25 or less, or 20 or less.

The isocyanate derivative (B) may have an alkyl group having 12 or more and 30 or less carbon atoms. The alkyl group having 12 or more and 30 or less carbon atoms may be branched or linear, more preferably chainlike, and particularly preferably linear. The alkyl group that the isocyanate derivative (B) has may be 12 or more, 14 or more, 16 or more, 18 or more, 20 or more, or 22 or more, and is preferably 12 or more or 16 or more. The alkyl group of the isocyanate derivative (B) may be 30 or less, 25 or less, 20 or less, 15 or less, or 10 or less, and is preferably 30 or less, 25 or less, or 20 or less.

The weight-average molecular weight of the isocyanate derivative (B) may be 3,000 or more, 5,000 or more, 10,000 or more, 30,000 or more, 100,000 or more, 300,000 or more, or 500,000 or more. The weight-average molecular weight of the isocyanate derivative (B) may be 1,000,000 or less, 750,000 or less, 500,000 or less, 300,000 or less, 100,000 or less, 75,000 or less, 50,000 or less, 30,000 or less, 10,000 or less, or 5,000 or less.

A water contact angle of the isocyanate derivative (B) may be 50° or more, 55° or more, 65° or more, 75° or more, 85° or more, 90° or more, 100° or more, 105° or more, 110° or more, or 115° or more. The water contact angle of the isocyanate derivative (B) may be 160° or less, 140° or less, 130° or less, 120° or less, 110° or less, 100° or less, or 90° or less. The isocyanate derivative (B) with a water contact angle of the lower limit or more can impart favorable water-repellency to a substrate. The water contact angle is a static contact angle of the isocyanate derivative (B) relative to a spin-coated film, and is obtained by dropping 2 µL of water onto the spin-coated film and measuring a contact angle one second after the dropping.

### [Active Hydrogen Compound]

The active hydrogen compound contains an active hydrogen group that reacts with an isocyanate group.

Examples of the active hydrogen groups include, for example, a hydroxy group, an amino group, and a carboxyl group, and typically a hydroxyl group.

### [(α1) Hydrocarbon Alcohol]

The active hydrogen compound may be a hydrocarbon alcohol (α1) composed of a hydrocarbon group and a hydroxy group.

The hydrocarbon group in the hydrocarbon alcohol (α1) may be the above-described hydrocarbon group having 6 or more and 40 or less carbon atoms, and incorporates the aforementioned explanation for use. The hydrocarbon group in the hydrocarbon alcohol (α1) may be preferably the above-described alkyl group having 12 or more and 30 or less carbon atoms, and incorporates the aforementioned explanation for use.

The hydrocarbon alcohol (α1) preferably has one hydroxy group per molecule.

Examples of the hydrocarbon alcohol (α1) include linear saturated hydrocarbon group-containing alcohols such as n-tridecanol, n-tetradecanol, n-pentadecanol, n-hexadecanol, n-heptadecanol, n-octadecanol (stearyl alcohol), n-nonadecanol, and eicosanol; branched saturated hydrocarbon group-containing alcohols such as isomyristyl alcohol, isocetyl alcohol, isostearyl alcohol, and isoicosyl alcohol; linear unsaturated hydrocarbon group-containing alcohols such as tetradecenyl alcohol, hexadecenyl alcohol, oleyl alcohol, icocenyl alcohol, dococenyl alcohol, tetracocenyl alcohol, hexacosenyl alcohol, and octacosenyl alcohol; and branched unsaturated hydrocarbon group-containing active hydrogen compounds such as phytol.

Herein, the linear saturated hydrocarbon group-containing alcohol and linear unsaturated hydrocarbon group-containing alcohol may be used in combination thereof, and when the linear saturated hydrocarbon group-containing alcohol and linear unsaturated hydrocarbon group-containing alcohol are used in combination thereof, a proportion of the linear saturated hydrocarbon group-containing alcohol compounded per 100 parts by weight of the total amount of linear saturated hydrocarbon group-containing alcohol and linear unsaturated hydrocarbon group-containing alcohol, is, for example, 40 parts by weight or more, preferably 55 parts by weight or more, and more preferably 70 parts by weight or more, and is, for example, 90 parts by weight or less and preferably 80 parts by weight or less. The proportion of the linear unsaturated hydrocarbon group-containing alcohol compounded per 100 parts by weight of the total amount of linear saturated hydrocarbon group-containing alcohol and linear unsaturated hydrocarbon group-containing alcohol, is, for example, 10 parts by weight or more and preferably 20 parts by weight or more, and is, for example, 60 parts by weight or less, preferably 45 parts by weight or less, and more preferably 30 parts by weight or less. The linear saturated hydrocarbon group-containing alcohol compounded with the proportion of the above-described lower limit or more improves crystallinity of its hydrocarbon group, as a result of which water-repellency of a water-repellency-processing target that is to be treated with this water-repellent composition can be improved.

### [(α2) Modified Sugar Alcohol/Hydroxy Acid Compound]

The active hydrogen compound may be a modified sugar alcohol/hydroxy acid compound (α2), which is a sugar alcohol/hydroxy acid (sugar alcohol and/or hydroxy acid) modified with a hydrocarbon group having 6 or more and 40 or less carbon atoms. The types of sugar alcohol/hydroxy acid are not limited and may be cyclic or acyclic. Examples of the sugar alcohols include monosaccharides, a reducing sugar, an amino sugar, aldonic acid, and aldonic acid lactone, and examples of the hydroxy acids include, for example, a hydroxy polycarboxylic acid. The sugar alcohol/hydroxy acid may be a substance present in the living body. Examples of the sugar alcohols/hydroxy acids include, but are not limited to, compounds derived from aldose and ketose, such as tetrose, pentose, hexose and heptose, and specific examples thereof include glucose, glyceraldehyde, erythrose, arabinose, ribose, arabinose, allose, altrose, mannose, xylose, lyxose, gulose, galactose, talose, fructose, ribulose, mannoheptulose, sedoheptulose, threose, erythritol, threitol, glucopyranose, mannopyranose, talopyranose, allopyranose, altropyranose, idopyranose, gulopyranose, glucitol, mannitol, erythritol, sorbitol, arabitol, xylitol, ribitol, galactitol, fucitol, iditol, inositol, pentaerythritol, dipentaerythritol, volemitol, gluconic acid, glyceric acid, xylonic acid, galactaric acid, ascorbic acid, citric acid, gluconic acid lactone, glyceric acid lactone, xylonic acid lactone, glucosamine, galactosamine, or mixtures thereof. The number of carbon atoms in the sugar alcohol/hydroxy acid may be 2 or more, 4 or more, or 6 or more and may be 30 or less, 20 or less, or 10 or less. An average OH value of the compound (α2) may be in a range of greater than 0 to approximately 230, preferably approximately 10 to approximately 175, and most preferably approximately 25 to approximately 140.

The number of hydrocarbon groups having 6 or more and 40 or less carbon atoms that the modified sugar alcohol/hydroxy acid compound (α2) has may be 1 or more, 2 or more, 3 or more, 4 or more, or 5 or more. The number of hydrocarbon groups having 6 or more and 40 or less carbon atoms in the modified sugar alcohol/hydroxy acid compound (α2) may be 12 or less, 9 or less, 6 or less, or 3 or less. The hydrocarbon group in the modified sugar alcohol/hydroxy acid compound (α2) may be the above-described hydrocarbon group having 6 or more and 40 or less carbon atoms and incorporates the aforementioned explanation for use. The modified sugar alcohol/hydroxy acid compound (α2) may have an alkyl group having 12 or more and 30 or less carbon atoms. The alkyl group having 12 or more and 30 or less carbon atoms incorporates the aforementioned explanation for use.

In the modified sugar alcohol/hydroxy acid compound (α2), at least one active hydrogen (for example, hydrogen in an OH group or carboxyl group) that the sugar alcohol and/or hydroxy acid has may be substituted with an active hydrogen substituent selected from -R^{α2}, -C(O)R^{α2}, - (CH₂CH₂O)ₙ(CH(CH₃)CH₂O)ₘR^{α2}, - (CH₂CH₂O)ₙ(CH(CH₃)CH₂O)ₘC(O)R^{α2}, or a mixture thereof. Herein, R^{α2} is a hydrogen atom or a hydrocarbon group having 6 or more and 40 or less carbon atoms, each n is independently 0 to 20, each m is independently 0 to 20, and m + n may be greater than 0. It is to be noted that the compound (α2) has at least one active hydrogen, and for example, in the modified sugar alcohol/hydroxy acid compound, at least one (one or more) of the active hydrogens of the sugar alcohol/hydroxy acid may be unmodified, and the active hydrogen (for example, an -OH group) may react with an active hydrogen reactive group (particularly an isocyanate group) of the compound (b) to form -NHCO-. Incidentally, the hydrocarbon group having 6 or more and 40 or less carbon atoms that the modified sugar alcohol/hydroxy acid compound (α2) has may preferably be the above-described alkyl group having 12 or more and 30 or less carbon atoms, and incorporates the aforementioned explanation for use.

### ((α21) Modified Sorbitan Compound)

The modified sugar alcohol/hydroxy acid compound (α2) may be a modified sorbitan compound (α21) in which sorbitan was modified with a hydrocarbon group having 6 or more and 40 or less carbon atoms and may particularly be an alkyl sorbitan, or may be a compound in which sorbitan has been substituted with -R^{α2}, -C(O)R^{α2}, - (CH₂CH₂O)ₙ(CH(CH₃)CH₂O)ₘR^{α2}, - (CH₂CH₂O)ₙ(CH(CH₃)CH₂O)ₘC(O)R^{α2} or a mixture thereof (herein R^{α2} is a hydrocarbon group having 6 or more and 40 or less carbon atoms). For example, the modified sugar alcohol/hydroxy acid compound (α2) may be a compound in which sorbitan has undergone a mono-, di-, or tri-substitution reaction with -C(O)R^{α2}. Herein, sorbitan may include a trace amount of sorbitol, isosorbide, or other intermediates or by-product. The hydrocarbon group in the modified sorbitan compound (α21) may be the above-described hydrocarbon group having 6 or more and 40 or less carbon atoms and incorporates the aforementioned explanation for use. The modified sorbitan compound (α21) may have an alkyl group having 12 or more and 30 or less carbon atoms. The alkyl group having 12 or more and 30 or less carbon atoms incorporates the aforementioned explanation for use. Commercially available sorbitan such as SPAN can be used as the above alkyl sorbitan.

In one aspect, at least one active hydrogen substituent may be -C(O)R^{α2}, and R^{α2} may be linear and branched alkyl groups having 6 to 40 carbon atoms, more preferably 7 to 21 carbon atoms, and most preferably 11 to 21 carbon atoms. Examples of preferred compounds include mono-, di-, and tri-substituted sorbitans derived from caprylic acid, capric acid, lauric acid, myristic acid, palmitic acid, stearic acid, arachidic acid, behenic acid, lignoceric acid, or mixtures thereof. Examples of particularly preferred compounds include mono-, di- and tri-substituted sorbitan stearates, or sorbitan behenin.

In one aspect, R^{α2} may contain at least one unsaturated bond. Examples of such compounds (at least one active hydrogen substituent is selected from -C(O)R^{α2}, and R^{α2} contains at least one unsaturated bond) include, but are not limited to, sorbitan trioleate (i.e., wherein R^{α2} is -C₇H₁₄CH=CHC₈H₁₇). Other examples thereof include, but are not limited to, mono-, di-, and tri-substituted sorbitans derived from palmitoleic acid, linoleic acid, arachidonic acid, or erucic acid.

In one aspect, the modified sorbitan compound (α21) has at least one active hydrogen substituent, wherein the active hydrogen substituent may be independently - (CH₂CH₂O)ₙ(CH(CH₃)CH₂O)ₘR^{α2} or - (CH₂CH₂O)ₙ(CH(CH₃)CH₂O)ₘC(O)R^{α2}, and each m is independently 0 to 20, each n is independently 0 to 20, and m + n is greater than 0. Such compounds are known as polysorbates and are commercially available under the trade name TWEEN. These sorbitans can undergo a mono-, di-, or tri-substitution reaction with R^{α2}. The commercially available polysorbates are known to contain a wide variety of mixtures ranging from polysorbates in which each R² is H (unsubstituted) to polysorbates in which each R^{α2} is a linear or branched alkyl group having 6 to 40 carbon atoms (fully substituted), and mixtures of these various types of substituted compounds. Examples of such modified sorbitan compounds (α21) include polysorbates such as polysorbate tristearate and polysorbate monostearate. An example of the modified sorbitan compound (α21) in which m + n is greater than 0 and R^{α2} contains at least one unsaturated bond includes, but is not limited to, polysorbate trioleate (herein R^{α2} is C₇H₁₄CH=CHC₈H₁₇), which is commercially available under the name Polysorbate 80. The modified sorbitan compound (α21) may include a mixture of compounds with various types of active hydrogen substituents, and may include a mixture of a compound in which R^{α2} contains at least one unsaturated bond and a compound in which R^{α2} is fully saturated.

### ((α22) Modified Citric Acid Compound)

The modified sugar alcohol/hydroxy acid compound (α2) may be a modified citric acid compound (α22) in which citric acid has been modified with a hydrocarbon group having 6 or more and 40 or less carbon atoms and may particularly be an alkyl citrate. For example, the modified citric acid compound (α22) may be present as a mono-, di-, or tri-substituted compound with an alkyl group. The hydrocarbon group in the modified citric acid compound (α22) may be the above-described hydrocarbon group having 6 or more and 40 or less carbon atoms and incorporates the aforementioned explanation for use. The modified citric acid compound (α22) may have an alkyl group having 12 or more and 30 or less carbon atoms. The alkyl group having 12 or more and 30 or less carbon atoms incorporates the aforementioned explanation for use. A mixture of citrates having various values of active hydrogen substituents may be used, and a mixture of a compound having a hydrocarbon group in which R^{α2} has at least one unsaturated bond and a compound in which R^{α2} is fully saturated hydrocarbons, may be included. The modified citric acid compound (α22) may have an active hydrogen substituent selected from - (CH₂CH₂O)ₙ(CH(CH₃)CH₂O)ₘR^{α2} or - (CH₂CH₂O)ₙ(CH(CH₃)CH₂O)ₘC(O)R^{α2} - (herein R^{α2} is a hydrocarbon group having 6 or more and 40 or less carbon atoms). Examples of the modified citric acid compound (α22) include, but are not limited to, trialkyl citrate.

### ((α23) Modified Pentaerythritol Compound)

The modified sugar alcohol/hydroxy acid compound (α21) may be a modified pentaerythritol compound (α23) in which pentaerythritol has been modified with a hydrocarbon group having 6 or more and 40 or less carbon atoms, or may be a mono-, di-, or tri-substituted compound having a hydrocarbon group having 6 or more and 40 or less carbon atoms (particularly an alkyl group), which is for example, a dipentaerythriol ester. The active hydrogen substituent may include -CH₂C[CH₂OR^{α2}]₃ (herein R^{α2} is a hydrocarbon group having 6 or more and 40 or less carbon atoms). The modified pentaerythritol compound (α23) may include a compound having a mixture of hydrocarbon groups with different chain lengths, or a mixture of a compound in which R^{α2} contains at least one unsaturated bond and a compound in which R^{α2} is fully saturated. The hydrocarbon group in the modified pentaerythritol compound (α23) may be the above-described hydrocarbon group having 6 or more and 40 or less carbon atoms and incorporates the aforementioned explanation for use. The modified pentaerythritol compound (α23) may contain an alkyl group having 12 or more and 30 or less carbon atoms. The alkyl group having 12 or more and 30 or less carbon atoms incorporates the aforementioned explanation for use.

### [(α3) Cationic Active Hydrogen Compound]

The active hydrogen compound may be a cationic active hydrogen compound (α3) having an active hydrogen group and a cationic group.

The cationic active hydrogen compound (α3) preferably has two or more hydroxy groups per molecule.

An example of the cationic group includes, for example, a tertiary amino group.

That is, the cationic active hydrogen compound (α3) preferably has two or more hydroxyl groups per molecule as the active hydrogen group as well as a tertiary amino group as the cationic group.

According to such a cationic active hydrogen compound, favorable dispersibility to a liquid medium (for example, water), can be imparted and a cationic group having affinity to textile products (described later) can be introduced into a resin, making it possible to improve washing durability.

More preferably, the cationic active hydrogen compound has two hydroxyl groups per molecule as the active hydrogen group as well as a tertiary amino group as the cationic group.

Examples of such cationic active hydrogen compounds include, for example, alkyl dialkanolamines such as N-methyldiethanolamine, N-ethyldiethanolamine, N-propyldiethanolamine, N-butyldiethanolamine, N-methyldipropanolamine, and propanolamine, and trialkanolamines such as N-triethanolamine and N-triisopropanolamine, and preferably N-methyldiethanolamine.

The cationic active hydrogen compound (or a moiety derived from the cationic active hydrogen compound in the non-fluorine copolymer) may form a salt with an acid compound.

Examples of the acid compounds include, for example, organic acids and inorganic acids. Examples of the organic acids include, for example, acetic acid, lactic acid, tartaric acid, and malic acid, preferably acetic acid and lactic acid, and more preferably acetic acid. Examples of the inorganic acids include, for example, hydrochloric acid, sulfuric acid, and phosphoric acid and preferably hydrochloric acid. An example of the acid compound preferably includes an organic acid. In a case in which the acid compound contains an organic acid, the acid volatilizes by heat treatment, as a result of which water-repellency of water-repellency-processing target that is to be treated with this water-repellent composition can be improved. Also, volatilization of the acid by heat treatment enables improving washing durability for a textile product, from the viewpoint of facilitating adsorption of cationic groups to the textile product.

### [(α4) Other Active Hydrogen-Containing Compound]

The active hydrogen compound (α) may contain other active hydrogen compound (α4).

### ((α41) Compound)

The active hydrogen compound (α4) may be a compound (α41) represented by formula:

Rα91_X^{α41}

wherein R^{α41} is
a C₁ to C₃₀ linear or branched alkyl which may contain at least one unsaturated group, a hydroxy-functional C₁ to C₃₀ linear or branched alkyl, a hydroxy-functional linear or branched C₁ to C₃₀ polyether, a hydroxy-functional linear or branched polyester, a hydroxy-functional linear or branched organosiloxane, a thiol-functional C₁ to C₃₀ linear or branched alkyl, an amine-functional C₁ to C₃₀ linear or branched alkyl, Y⁻R^{α411}R^{α412}R^{α413}N⁺-R^{α414}- (herein Y is a halide ion, for example, Cl⁻), HOS(=O)₂-R^{α414}- or R^{α411}R^{α412}C=N- (herein R^{α411}, R^{α412}, and R^{α413} are each independently -H or a C₁ to C₆ alkyl, and R^{α414} is a divalent alkyl group having 1 to 20 carbon atoms),
   X^{α41} is an isocyanate-reactive functional group such as -OH, -C(O)OH, -SH, -NH(R'), -O-(CH₂CH₂O)ₛ (CH(CH₃)CH₂O)ₜ-H or -C(O)-O-(CH₂CH₂O)ₛ (CH(CH₃)CH₂O)ₜ-H (herein R' is -H or a monovalent organic group, s is an integer of 0 to 50, t is an integer of 0 to 50, and s + t is greater than 0).

The compound (α41) may be a hydrophilic watersoluble material including at least one hydroxy-terminated polyether wherein X^{α41} is -O-(CH₂CH₂O)ₛ (CH(CH₃)CH₂O)ₜ-H or -C(O)-O-(CH₂CH₂O)s(CH(CH₃)CH₂O)ₜ-H. -(CH₂CH₂O)- represents an oxyethylene group (EO) and -(CH(CH₃)CH₂O)- represents an oxypropylene group (PO). These polyethers may contain an EO group singly, a PO group singly, or a mixture thereof. These polyethers each may be present as a designated PEG-PPG-PEG (polyethylene glycol-polypropylene glycol-polyethylene glycol) triblock copolymer.

In one aspect, X^{α41} is -OH, -C(O)OH, -SH, -NH(R'), and R^{α41} is selected from a C₁ to C₃₀ linear or branched alkyl, optionally containing at least one unsaturated group, a hydroxy-functional C₁ to C₃₀ linear or branched alkyl, a hydroxy-functional linear or branched C₁ to C₃₀ polyether, a hydroxy-functional linear or branched polyester, a hydroxy- or amine-functional linear or branched organosiloxane, a thiol-functional C₁ to C₃₀ linear or branched alkyl, an amine-functional C₁ to C₃₀ linear or branched alkyl.

X^{α41} may be -OH, and examples of such compounds (α41) include, but are not limited to, alkyl alcohols such as propanol and butanol, or an aliphatic alcohol including stearyl alcohol (R^{α41} is a C₁ to C₃₀ linear or branched alkyl, optionally containing at least one unsaturated group), alkyl diols such as ethanediol, propanediol, butanediol or hexanediol, or polyols (R^{α41} is a hydroxy-functional C₁ to C₃₀ linear or branched alkyl), alkylene glycol ethers such as triethylene glycol, tetraethylene glycol, poly(ethylene glycol) (PEG), poly(propylene glycol) (PPG), and poly(tetrahydrofuran), or a glycol ether having a mixture of PEG, PPG or THF units (R^{α41} is a hydroxy-functional linear or branched C₁ to C₃₀ polyether), a polyester polyol (R^{α41} is a hydroxy-functional linear or branched polyester), a silicone prepolymer polyol (R^{α41} is a hydroxy-functional linear or branched organosiloxane), N,N-dimethylaminoethanol (R^{α41} is an amine-functional C₁ to C₃₀ linear or branched alkyl), choline chloride or betaine HCl (R^{α41} is Y-R^{α411}R^{α412}R^{α413}N⁺-R^{α414}-), and butanone oxime (R^{α41} is R^{α411}R^{α412}C=N-). The polyether polyol may contain an EO group singly, a PO group singly, a THF group singly, or a mixture thereof. These polyethers may be present as block copolymers, such as those designated by PEG-PPG-PEG (polyethylene glycol-polypropylene glycol-polyethylene glycol). The polyether glycol preferably has an average molecular weight of approximately 200 or more and most preferably 350 to 2,000.

X^{α41} may be -C(O)OH, and examples of such compounds (α41) include, but are not limited to, fatty acids such as caprylic acid, capric acid, lauric acid, myristic acid, palmitic acid, stearic acid, arachidic acid, behenic acid, lignoceric acid, palmitoleic acid, linoleic acid, arachidonic acid, oleic acid, or erucic acid (R^{α41} is a C₁ to C₃₀ linear or branched alkyl, optionally containing at least one unsaturated group), hydroxy-containing acids such as hydroxycaprylic acid, hydroxycapric acid, hydroxylauric acid, hydroxymyristic acid, hydroxypalmitic acid, hydroxystearic acid, hydroxyarachidic acid, hydroxybehenic acid, hydroxylignoceric acid, hydroxypalmitoleic acid, hydroxylinoleic acid, hydroxyarachidonic acid, hydroxyoleic acid, or hydroxyerucic acid (R^{α41} is a hydroxy-functional C₁ to C₃₀ linear or branched alkyl), and a mercaptoalkanoic acid such as mercaptopropionic acid (R^{α41} is a thiol-functional C₁ to C₃₀ linear or branched alkyl) .

X^{α41} may be -SH, and examples of such compounds (α41) include, but are not limited to, an alkylthiol such as lauryl mercaptan or dodecyl mercaptan (R^{α41} is a C₁ to C₃₀ linear or branched alkyl, optionally containing at least one unsaturated group).

X^{α41} may be -NH(R'), and examples of such compounds (α41) include, but are not limited to, an alkylamine such as diisopropylamine, propylamine, hexylamine, or laurylamine (R^{α41} is a C₁ to C₃₀ linear or branched alkyl, optionally containing at least one unsaturated group), an alkanolamine such as ethanolamine or propanolamine (R^{α41} is a hydroxy-functional C₁ to C₃₀ linear or branched alkyl), a silicone prepolymer polyamine (R^{α41} is an amine-functional linear or branched organosiloxane), an alkyl diamine (R^{α41} is an amine-functional C₁ to C₃₀ linear or branched alkyl), and an aminoalkanesulfonic acid such as 2-aminoethanesulfonic acid (R^{α41} is HO-S(O)2R^{α414}-).

### ((α42) Compound)

The compound (α42) is a compound of formula:

R^{α421}-(OCH₂CH(OR^{α422})CH₂)_{z}-OR^{α423}

wherein R^{α421}, R^{α422}, and R^{α423}, wherein at least one of R^{α421}, R^{α422}, or R^{α423} is -H, are each independently -H, -R^{α424}, or -C(O)R^{α424}, and R^{α424} is independently a linear or branched alkyl group having 5 to 29 carbon atoms, which may contain at least one unsaturated bond, and z is 1 to 15.

The compound (α42) may be a compound generally called polyglycerol. Specific examples of other compounds include, but are not limited to, triglycerol monostearate, triglycerol distearate, hexaglycerol monostearate, hexaglycerol distearate, decaglyceryl mono(caprylate/caprate), decaglyceryl di(caprylate/caprate), decaglycerol, polyglycerol-3, and C18 diglyceride.

### ((α43) Chain Extender)

The compound (α4) may be a chain extender (α43). The chain extender (α43) is a compound having two or more (for example, two) functional groups containing active hydrogen in the molecule. As the chain extender, a known chain extender can be used, and examples thereof include aliphatic or aromatic diols such as ethylene glycol, diethylene glycol, triethylene glycol, propylene glycol, dipropylene glycol, tripropylene glycol, 1,4-butanediol, 1,6-hexanediol, and cyclohexanedimethanol, or polyols; aliphatic or aromatic diamines such as ethylenediamine, piperazine, aminoethylpiperazine, phenylenediamine, and diethyltoluenediamine, or polyamines; phenol hydroxyl group-containing compounds such as resorcinol, catechol, hydroquinone, bisphenol, bisphenol A, bisphenol AP (1,1-bis(4-hydroxylphenyl)-1-phenylethane), bisphenol F, bisphenol K, bisphenol M, tetramethylbiphenol, and o,o'-diallyl-bisphenol A, etc.; and alcohol amines such as aminoethylethanolamine, aminopropylethanolamine, aminohexylethanolamine, aminoethylpropanolamine, aminopropylpropanolamine, and aminohexylpropanolamine.

In one aspect, the active hydrogen compound may be at least one selected from the group consisting of a hydrocarbon alcohol, a modified sugar alcohol compound, and a modified hydroxy acid compound.

.

### [Raw Material Isocyanate]

An isocyanate derivative (B) has a moiety derived from the raw material isocyanate.

The raw material isocyanate may be an aromatic polyisocyanate, an acyclic aliphatic polyisocyanate, a cyclic alicyclic polyisocyanate, or a bridged cyclic alicyclic polyisocyanate.

The aromatic polyisocyanate is a compound having an aromatic ring and an isocyanate group. The aromatic polyisocyanate may have one or more, two or more, or three or more aromatic rings, and may have five or less, four or less, or three or less aromatic rings.

The acyclic aliphatic polyisocyanate is an aliphatic polyisocyanate free of a ring structure. The acyclic aliphatic polyisocyanate may have an aliphatic hydrocarbon group having 2 or more and 20 or less carbon atoms. The aliphatic hydrocarbon group having 2 or more and 20 or less carbon atoms may be a divalent aliphatic hydrocarbon group. The number of carbon atoms in the aliphatic hydrocarbon group may be 2 or more, 4 or more, 6 or more, 8 or more, 10 or more, 12 or more, or 14 or more, and is preferably 4 or more, 6 or more, or 8 or more. The number of carbon atoms in the aliphatic hydrocarbon group may be 20 or less, 18 or less, 16 or less, 14 or less, 12 or less, or 10 or less, and is preferably 14 or less, 12 or less, or 10 or less. In one aspect, the acyclic aliphatic polyisocyanate may be a polyisocyanate compound having an isocyanate group at an end of an alkylene group.

The cyclic alicyclic polyisocyanate is an aliphatic polyisocyanate having a ring structure. The cyclic alicyclic polyisocyanate has a carbon ring, not an aromatic ring. The cyclic alicyclic polyisocyanate may have an aliphatic hydrocarbon group having 2 or more and 20 or less carbon atoms. The aliphatic hydrocarbon group having 2 or more and 20 or less carbon atoms incorporates the explanation of the above-described acyclic aliphatic polyisocyanate for use.

The bridged cyclic alicyclic polyisocyanate is a polycyclic compound having a crosslinked structure with a methylene group or the like in a ring structure. The bridged cyclic alicyclic polyisocyanate may have an aliphatic hydrocarbon group having 2 or more and 20 or less carbon atoms. The aliphatic hydrocarbon group having 2 or more and 20 or less carbon atoms incorporates the explanation for the aforementioned acyclic aliphatic polyisocyanate for use.

The raw material isocyanate may be a derivative of the raw material isocyanate. Herein, examples of the derivatives include, for example, an isocyanurate derivative, an allophanate derivative, a polyol derivative, a biuret derivative, a urea derivative, an oxadiazinetrione derivative, a carbodiimide derivative, a uretdione derivative, and a uretonimine derivative.

The raw material isocyanate may be a polyisocyanate derivative selected from the group consisting of an aromatic polyisocyanate, an acyclic aliphatic polyisocyanate, a cyclic alicyclic polyisocyanate, and a bridged cyclic alicyclic polyisocyanate.

In one aspect, the raw material isocyanate may be an isocyanurate derivative or a biuret derivative.

In one aspect, the raw material isocyanate may be an acyclic aliphatic polyisocyanate.

Examples of the raw material isocyanates include an aromatic polyisocyanate selected from tolylene diisocyanate (2,4- or 2,6-tolylene diisocyanate or a mixture thereof) (TDI), phenylene diisocyanate (m-, p-phenylene diisocyanate or a mixture thereof), 4,4'-diphenyl diisocyanate, diphenylmethane diisocyanate (4,4'-, 2,4', or 2,2'-diphenylmethane diisocyanate or a mixture thereof) (MDI), 4,4'-toluidine isocyanate (TODI), 4,4'-diphenyl ether diisocyanate, xylylene diisocyanate (1,3- or 1,4-xylylene diisocyanate or a mixture thereof) (XDI), tetramethyl xylylene diisocyanate (1,3- or 1,4-tetramethylxylylene diisocyanate or a mixture thereof) (TMXDI), ω,ω'-diisocyanato-1,4-diethylbenzene, naphthalene diisocyanate (1,5-, 1,4-, or 1,8-naphthalene diisocyanate or a mixture thereof) (NDI), triphenylmethane triisocyanate, tris(isocyanatophenyl)thiophosphate, polymethylene polyphenylene polyisocyanate, nitrodiphenyl-4,4'-diisocyanate, 3,3'-dimethyldiphenylmethane-4,4'-diisocyanate, 4,4'-diphenylpropane diisocyanate, and 3,3'-dimethoxydiphenyl-4,4-diisocyanate;
an acyclic aliphatic polyisocyanate selected from trimethylene diisocyanate, 1,2-propylene diisocyanate, butylene diisocyanate (tetramethylene diisocyanate, 1,2-butylene diisocyanate, 2,3-butylene diisocyanate, 1,3-butylene diisocyanate), hexamethylene diisocyanate, pentamethylene diisocyanate, 2,2,4-trimethylhexamethylene diisocyanate, 2,4,4-trimethylhexamethylene diisocyanate, methyl 2,6-diisocyanatocaproate, lysine diisocyanate, lysine ester triisocyanate, 1,6,11-undecane triisocyanate, 1,3,6-hexamethylene triisocyanate, trimethylhexamethylene diisocyanate, or decamethylene diisocyanate;
a cyclic alicyclic polyisocyanate selected from 1,3-cyclopentane diisocyanate, 1,3-cyclopentene diisocyanate, cyclohexane diisocyanate (1,4-cyclohexane diisocyanate or 1,3-cyclohexane diisocyanate), 3-isocyanatomethyl-3,5,5-trimethylcyclohexyl isocyanate (isophorone diisocyanate, IPDI), methylene bis(cyclohexyl isocyanate (4,4'-, 2,4'-or 2,2'-methylene bis(cyclohexyl isocyanate) or a mixture thereof) (hydrogenated MDI), methylcyclohexane diisocyanate (methyl-2,4-cyclohexane diisocyanate, methyl-2,6-cyclohexane diisocyanate, bis(isocyanatomethyl)cyclohexane (1,3- or 1,4-bis(isocyanatomethyl)cyclohexane or a mixture thereof) (hydrogenated XDI), dimer acid diisocyanate, transcyclohexane 1,4-diisocyanate, hydrogenated tolylene diisocyanate (hydrogenated TDI), or hydrogenated tetramethylxylylene diisocyanate (hydrogenated TMXDI); a bridged cyclic alicyclic polyisocyanate selected from norbornene diisocyanate, norbornane diisocyanate methyl, bicycloheptane triisocyanate, diisocyanatomethyl bicycloheptane, or di(diisocyanatomethyl)tricyclodecane;
a compound selected from 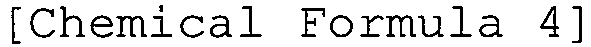 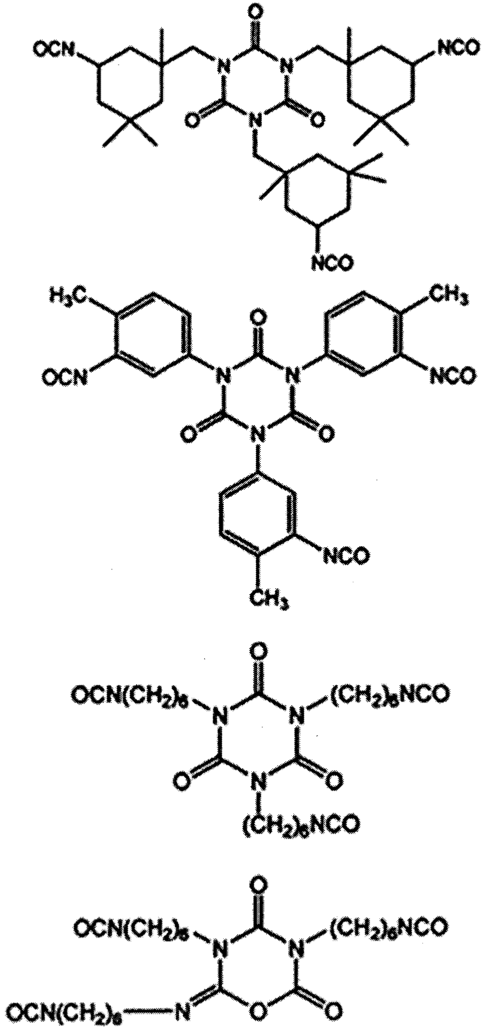 and 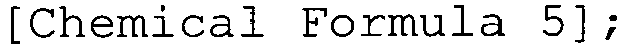 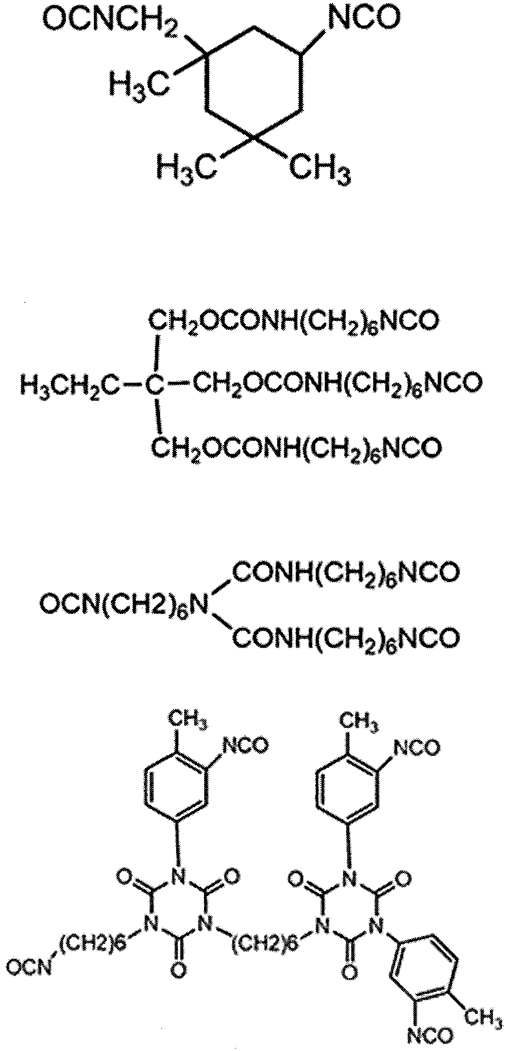
and biuret modified products of the above-described isocyanates, polymers of polyisocyanates (for example, dimers, trimers (for example, an isocyanurate derivative, an iminooxadiazinedione derivative), pentamers, heptamers, etc.), allophanate derivatives (for example, those produced by a reaction of, for example, the above-described polyisocyanates with monohydric alcohols or dihydric alcohols), polyol derivatives (for example, those produced by a reaction of, for example, the above-described polyisocyanates with trihydric alcohols (for example, trimethylolpropane) (for example, alcohol adducts and preferably trimethylolpropane adducts)), biuret derivatives (for example, those produced by a reaction of, for example, the above-described polyisocyanates with water or amines), urea derivatives (for example, those produced by a reaction of the above-described polyisocyanates with diamines), oxadiazinetrione derivatives (for example, oxadiazinetrione produced by a reaction of the above-described polyisocyanates with carbon dioxide), carbodiimide derivatives (for example, those produced by a decarboxylation condensation reaction of the above-described polyisocyanates), uretdione derivatives, uretonimine derivatives, etc., of the above-described isocyanates.

The average number of isocyanate groups of the raw material isocyanate is 2 or more, preferably 2.5, and more preferably 2.9, and, for example, 3.8 or less. The raw material isocyanate may be a polyisocyanate having a plurality of isocyanate groups.

### [Synthesis Method of Isocyanate Derivative (B)]

Then, in order to obtain the isocyanate derivative (B), an active hydrogen compound is allowed to react with the raw material isocyanate. The reaction may be carried out in one step to obtain a reaction product, or may be carried out stepwise in a plurality of steps. For example, in a case in which the product contains an unreacted active hydrogen group or an active hydrogen reactive group, the synthesis may be carried out stepwise. The stepwise reaction is particularly useful when using a substituted sugar alcohol having a high OH number. The reaction conditions such as a reaction concentration and reaction temperature are not limited, and can be determined by a person skilled in the art. Specifically, the active hydrogen compound and the raw material isocyanate may be compounded so that an equivalent ratio of an active hydrogen reactive group (isocyanate group) to an active hydrogen group (active hydrogen reactive group/active hydrogen group) is, for example, 1.2 or more and preferably 1.5 or more, and for example, 2.0 or less.

### [Composition of Isocyanate Derivative]

The amount of moieties derived from the compound (α) may be 10% by weight or more, 20% by weight or more, 30% by weight or more, 40% by weight or more, 50% by weight or more, 60% by weight or more, or 70% by weight or more, based on the isocyanate derivative (B).

The amount of moieties derived from the monomer (α) may be 75% by weight or less, 65% by weight or less, 55% by weight or less, 45% by weight or less, 35% by weight or less, 25% by weight or less, or 15% by weight or less, based on the isocyanate derivative (B).

The amount of moieties derived from the hydrocarbon alcohol (α1) may be 10% by weight or more, 20% by weight or more, 30% by weight or more, 40% by weight or more, 50% by weight or more, 60% by weight or more, or 70% by weight or more, based on moieties derived from the active hydrogen compound.

The amount of moieties derived from the hydrocarbon alcohol (α1) may be 75% by weight or less, 65% by weight or less, 55% by weight or less, 45% by weight or less, 35% by weight or less, 25% by weight or less, or 15% by weight or less, based on moieties derived from the active hydrogen compound.

The amount of moieties derived from the modified sugar alcohol/hydroxy acid compound (α2) may be 10% by weight or more, 20% by weight or more, 30% by weight or more, 40% by weight or more, 50% by weight or more, 60% by weight or more, or 70% by weight or more, based on moieties derived from the active hydrogen compound.

The amount of moieties derived from the modified sugar alcohol/hydroxy acid compound may be 75% by weight or less, 65% by weight or less, 55% by weight or less, 45% by weight or less, 35% by weight or less, 25% by weight or less, or 15% by weight or less, based on moieties derived from the active hydrogen compound.

The amount of moieties derived from the cationic active hydrogen compound (α3) may be 10% by weight or more, 20% by weight or more, 30% by weight or more, 40% by weight or more, 50% by weight or more, 60% by weight or more, or 70% by weight or more, based on moieties derived from the active hydrogen compound.

The amount of moieties derived from the cationic active hydrogen compound (α3) may be 75% by weight or less, 65% by weight or less, 55% by weight or less, 45% by weight or less, 35% by weight or less, 25% by weight or less, or 15% by weight or less, based on moieties derived from the active hydrogen compound.

The amount of moieties derived from the other active hydrogen-containing compound (α4) may be 10% by weight or more, 20% by weight or more, 30% by weight or more, 40% by weight or more, 50% by weight or more, 60% by weight or more, or 70% by weight or more, based on moieties derived from the other active hydrogen-containing compound (α4).

The amount of moieties derived from the other active hydrogen-containing compound (α4) may be 75% by weight or less, 65% by weight or less, 55% by weight or less, 45% by weight or less, 35% by weight or less, 25% by weight or less, or 15% by weight or less, based on moieties derived from the active hydrogen compound.

The amount of moieties derived from the raw material isocyanate may be 10% by weight or more, 20% by weight or more, 30% by weight or more, 40% by weight or more, 50% by weight or more, 60% by weight or more, or 70% by weight or more, based on the isocyanate derivative (B).

The amount of moieties derived from the raw material isocyanate may be 75% by weight or less, 65% by weight or less, 55% by weight or less, 45% by weight or less, 35% by weight or less, 25% by weight or less, or 15% by weight or less, based on the isocyanate derivative (B).

### [Amount of Isocyanate Derivative (B)]

The amount of isocyanate derivative (B) may be 0.1 parts by weight or more, 1 part by weight or more, 3 parts by weight or more, 5 parts by weight or more, 10 parts by weight or more, 15 parts by weight or more, or 20 parts by weight or more, per 100 parts by weight of the non-fluorine copolymer (A). The amount of isocyanate derivative (B) may be 50 parts by weight or less, 40 parts by weight or less, 30 parts by weight or less, 20 parts by weight or less, 10 parts by weight or less, or 5 parts by weight or less, per 100 parts by weight of the non-fluorine copolymer (A).

### [Silicone]

The water-repellent composition of the present disclosure preferably contains silicone in addition to the hydrophobic monomer (a1). Containing silicone allows the composition to have both favorable water-repellency and slip resistance.

The silicone may be the polymer represented by formula:

(R⁵³)₃Si-O-[-Si(R⁵¹)₂-O-]ₐ-[-Si (R⁵¹)₂-O-]_{b}-Si(R⁵³)₃ (S1)

wherein R⁵¹ each independently represents a hydrogen atom, an alkyl group having 1 to 40 carbon atoms, an aryl group having 6 to 40 carbon atoms, or an alkoxy group having 1 to 40 carbon atoms,
R⁵³ each independently represents a hydrogen atom, an alkyl group having 1 to 40 carbon atoms, an aryl group having 6 to 40 carbon atoms, an alkoxy group having 1 to 40 carbon atoms, or a saturated hydrocarbon group having 1 to 40 carbon atoms,
a represents an integer of 0 or more, b represents an integer of 1 or more, and (a + b) is 5 to 200.

In R⁵¹ and R⁵³, the alkyl group having 1 to 40 carbon atoms and the aryl group having 6 to 40 carbon atoms may be unsubstituted or substituted.

Specific examples of R⁵¹ and R⁵³ include a methyl group, ethyl group, propyl group, butyl group, pentyl group, hexyl group, heptyl group, octyl group, nonyl group, decyl group, dodecyl group, tetradecyl group, hexadecyl group, octadecyl group; cyclopentyl group, cyclohexyl group, cycloheptyl group; phenyl group, tolyl group, naphthyl group, or groups in which hydrogen atoms bonded to these groups are partially or totally substituted with halogen atoms, amino groups, cyano groups, or the like. R⁵¹ and R⁵³ are each preferably a methyl group or ethyl group.

In R⁵¹ and R⁵³, the alkoxy group having 1 to 40 carbon atoms may be linear or branched. Examples of the alkoxy group having 1 to 40 carbon atoms are a methoxy group, ethoxy group, propoxy group, and butoxy group.

The silicone may have at least one long chain hydrocarbon group. For example, at least one of R⁵¹, at least one of R⁵³, or at least one of each of R⁵¹ and R⁵³, in Formula (S1) may be a long chain hydrocarbon group, and at least one (for example, one) of R⁵¹ may be a long chain hydrocarbon group. Herein, the long chain hydrocarbon group may be a saturated hydrocarbon group having 6 or more, 10 or more, 15 or more, or 20 or more carbon atoms, preferably 10 or more or 23 or more carbon atoms. Herein, the hydrocarbon group may be linear or branched, and is preferably an alkyl group. Specific examples of the hydrocarbon group include a hexyl group (6 carbon atoms), octyl group (8 carbon atoms), lauryl group (12 carbon atoms), myristyl group (14 carbon atoms), stearyl group (18 carbon atoms), behenyl group (22 carbon atoms), tricosyl group (23 carbon atoms), lignoceryl group (tetracosyl group, 24 carbon atoms), serotyl group (hexacosyl group, 26 carbon atoms), montyl group (octacosyl group, 28 carbon atoms), melicyl group (triacontane group, 30 carbon atoms), and dotriacontane group (32 carbon atoms).

In terms of ease of industrial manufacture and availability, R⁵¹ and R⁵³ other than the R⁵¹ and R⁵³ that are long chain hydrocarbon groups, are preferably hydrogen atoms or methyl groups and more preferably methyl groups.

a is an integer 0 or more. In terms of ease of industrial manufacture and availability, a may be 40 or less, 30 or less, or 20 or less, and is preferably 30 or less.

The total of a and b is 5 to 200. In terms of ease of industrial manufacture, availability, and handleability, the total of a and b is preferably 10 to 100 and more preferably 40 to 60. a may be 0 to 150, for example, 1 to 100. The lower limit of b may be 1 or 2 or 3, and the upper limit of b may be 150, 10 or 5.

When a or b is 2 or more, each of R⁵¹ and R⁵² that are present in plurality may be the same or different.

50 mol% or more of the total amount of R⁵¹ and R⁵³ groups (for example, the R⁵¹, R⁵² group, and R⁵³ group when represented in the following Formula (S2)) is preferably a methyl group.

The occurrence order of the repeating unit bracketed by a or b is not limited to the occurrence order of the repeating unit represented in the chemical formula, and is arbitrary. Namely, the silicone may be a random polymer or a blocked polymer.

For example, the silicone may be the polymer represented by formula:

(R⁵³)₃Si-O-[-Si(R⁵¹)₂-O-]ₐ-[-Si (R⁵¹)(R⁵²)-O-]_{b}-Si(R⁵³)₃ (S2)

wherein R⁵¹ each independently represents a hydrogen atom, an alkyl group having 1 to 40 carbon atoms, an aryl group having 6 to 40 carbon atoms, an alkoxy group having 1 to 40 carbon atoms, or a long chain hydrocarbon group,
R⁵² each independently represents a long chain hydrocarbon group,
R⁵³ each independently represents a hydrogen atom, an alkyl group having 1 to 40 carbon atoms, an aryl group having 6 to 40 carbon atoms, an alkoxy group having 1 to 40 carbon atoms, or a long chain hydrocarbon group,
a represents an integer of 0 or more, b represents an integer of 1 or more, and (a + b) is 5 to 200.
In Formula (S2), R⁵¹ and R⁵³ may have an alkyl group having 3 to 40 carbon atoms or an unsaturated hydrocarbon group having 6 to 40 carbon atoms (for example, a hydrocarbon group having an aromatic ring), but are preferably free of these groups.

An example of the silicone is as follows: 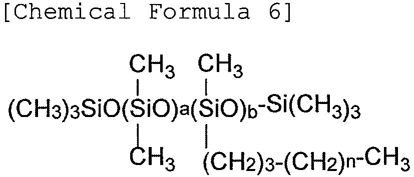
wherein a represents an integer of 0 to 150,
b represents an integer of 1 to 150,
(a + b) is 5 to 200, and
n is an integer of 1 to 36 (n is preferably a long chain hydrocarbon group).

The silicone can be synthesized by conventionally known methods. The silicone can be obtained, for example, by subjecting silicone having a SiH group to a hydrosilylation reaction with an α-olefin.

Examples of the silicone having a SiH group include, for example, methyl hydrogen silicone with a degree of polymerization of 10 to 200, or a copolymer of dimethyl siloxane and methyl hydrogen siloxane. Among them, the methyl hydrogen silicone is preferred in terms of ease of industrial manufacture and availability. The hydrogen silicone (for example, methyl hydrogen silicone) is that in which a side chain of a polydiorganosiloxane is partially substituted with hydrogen and the hydrogen atom is directly connected to the silicon atom. In using the hydrogen silicone, a catalyst may be used to improve its reactivity. For example, zinc, tin, manganese, cobalt, iron, and amine-based catalyst can be used. As these catalysts, an organic acid metal salt is preferred, and as the organic acid, a fatty acid is preferred. From the viewpoint of handleability, zinc stearate and the like can be used. Use of 10 to 40% of the catalyst relative to methyl hydrogen silicone, facilitates demonstrating its effect, which is preferred. Two or more types of amino-modified or epoxy-modified silicone, carboxy-modified silicone, and methyl hydrogen silicone may be mixed. Preferably, all of the silicones have reactive groups and are those having film formability. The film formability means that after the silicone in an emulsion state is adhered to a fiber surface, the silicone forms a solid film and does not become an oil or gel.

The α-olefin is a compound from which a long chain hydrocarbon group is derived in silicone. Specific examples of the α-olefin are 1-tricosene, 1-tetracosene, 1-hexacosene, 1-octacosene, 1-triacontene, and 1-dotriacontene.

The hydrosilylation reaction may be carried out by reacting the silicone having a SiH group with the α-olefin stepwisely or all at once in the presence of a catalyst, if necessary.

The amounts of the silicone having a SiH group and α-olefin used in the hydrosilylation reaction can be appropriately selected depending on a SiH group equivalent, the number average molecular weight, or the like, of the silicone having a SiH group.

Examples of the catalyst used in the hydrosilylation reaction include compounds such as platinum and palladium, and among them, the platinum compound being preferred. Examples of the platinum compound include platinum (IV) chloride.

The reaction conditions for the hydrosilylation reaction are not limited and can be appropriately adjusted. A reaction temperature is, for example, 10 to 200°C and preferably 50 to 150°C. A reaction time can be, for example, 3 to 12 hours when the reaction temperature is 50 to 150°C.

The hydrosilylation reaction is preferably carried out under an inert gas atmosphere. Examples of the inert gas include, for example, nitrogen, argon, and the like. The reaction proceeds in the absence of solvent, however, a solvent may also be used. Examples of the solvent include, for example, dioxane, methyl isobutyl ketone, toluene, xylene, butyl acetate, and the like.

### (Reactive Silicone)

The silicone may include reactive silicone. Examples of the reactive silicone include polysiloxanes having a reactive group on a side chain, at one terminal, at each of both terminals, or on a side chain and each of both terminals, and may be a polysiloxane having a reactive group on a side chain and/or at each of both terminals in view of excellent sliding resistance as well as water-repellency at the same time. The reactive silicone is not limited as long as it has a reactive group in its molecule, and examples thereof include, for example, amino-modified silicone, epoxy-modified silicone, carboxy-modified silicone, hydrogen-modified silicone, and the like. The reactive silicone may be silicone in which one or more substituents in the above Formula (S1) or Formula (S2) are substituted with reactive groups.

Examples of the amino-modified silicone include those having a structure in which an amino group is bonded to an organic group directly connected to a silicon atom. The organic group may be either an alkylene group or a divalent aromatic group. The alkylene group is preferably those having 2 or more carbon atoms. The divalent aromatic group is preferably those having 6 or more carbon atoms. The amino group may be any of a primary amino group, secondary amino group, or tertiary amino group. Examples of the organic group to which an amino group is bonded include: a 2-aminoethyl group, N-methyl-2-aminoethyl group, N,N-dimethyl-2-aminoethyl group, N-ethyl-2-aminoethyl group, N,N-diethyl-2-aminoethyl group, N,N-methylethyl-2-aminoethyl group, 3-aminopropyl group, N-methyl-3-aminopropyl group, N,N-dimethyl-3-aminopropyl group, N-ethyl-3-anopropyl group, N,N-diethyl-3-aminopropyl group, and N,N-methylethyl-3-aminopropyl group. These functional groups may be on a side chain of a polysiloxane or at the terminal thereof.

Examples of the epoxy-modified silicone include those having a structure in which an epoxy group is bonded to an organic group directly connected to a silicon atom. The organic group may be either an alkylene group or a divalent aromatic group. The epoxy group in this case usually bonds to the organic group to form a glycidyl ether. Examples of such a functional group include a 3-glycidoxypropyl group and 2-glycidoxyethyl group. These functional groups may be on a side chain of a polysiloxane or at the terminal thereof.

Examples of the carboxy-modified silicones include those having a structure in which a carboxy group is bonded to an organic group directly connected to a silicon atom. The organic group may be either an alkylene group or a divalent aromatic group. The alkylene group is preferably those having 2 or more carbon atoms. The divalent aromatic group is preferably those having 6 or more carbon atoms. Examples of such a functional group include a 3-carboxypropyl group and 2-carboxyethyl group. These functional groups may be on a side chain of a polysiloxane or at the terminal thereof.

### (Silicone Resin)

The silicone may contain a silicone resin. The silicone resin is a silicone resin composed of at least one selected from a R₃SiO_{1/2} unit (M unit), a RSiO_{3/2} unit (T unit) and a SiO_{4/2} unit (Q unit), wherein R is a linear or branched monovalent alkyl group having 1 to 18 carbon atoms, and silicone resins composed of M units singly and of Q units singly are excluded). The silicone resin (B) is preferably free of a R₂SiO_{2/2} unit (D unit), from the viewpoint of exhibiting effects of the present application.

The silicone resin is preferably in a sol state. Examples of R include, for example, a methyl group, an ethyl group, a propyl group, an isopropyl group, a butyl group, an isobutyl group, a hexyl group, an octyl group, a 2-ethylhexyl group, a decyl group, a cetyl group, and a stearyl group, however, from the viewpoint of stability when the silicone resin (B) is in a sol state, availability of raw materials, and costs, R is preferably a methyl group, and 90% or more of all R is particularly preferably a methyl group. It is to be noted that R may combine different types of groups for use.

When the silicone resin includes a R₂SiO_{2/2} unit (D unit), the water-repellent composition may impair a low sliding property. The silicone resin composed of Q units singly may impair water-repellent performance as the water-repellent composition.

As structures of the silicone resin, silicone resins composed of (i) M units and Q units, (ii) M units, T units and Q units, (iii) M units and T units, (iv) T units and Q units, and (v) T units singly, are exemplified, and the silicon resin may preferably be a silicon resin composed of (i) M units and Q units and a silicone resin composed of (v) T units singly. A molar ratio of M units to Q units (M/Q) of the silicone resin composed of (i) M units and Q units is preferably M/Q = 0.6 to 1.3 and more preferably M/Q = 0.8 to 1.1. It is to be noted that these silicone resins may be used in combination of two or more thereof.

Also, the silicone resin (B) can contain a constituent unit containing a hydroxyl group bonded to a silicon atom. Specific examples thereof include a (HO)RSiO_{2/2} unit, a (HO)₂RSiO_{1/2} unit, a (HO)SiO_{3/2} unit, a (HO)₂SiO_{2/2} unit, a (HO)₃SiO_{1/2} unit, and the constituent unit may be an alkoxy group in which a moiety of the hydroxyl group is represented by a RO group.

A sol containing the silicone resin can be obtained, as described in JP3852921B, by a production method for dispersing an organodisiloxane, a tetraalkoxysilane, and their partially hydrolyzed condensates homogeneously and polymerizing them in water containing a surfactant, or by a production method for hydrolyzing the following silane compounds in water.

The production method for hydrolyzing a silane compound in water will be described in detail. As a raw material to be used for production, any silane compound can be used as long as it has a type of hydrolyzable group of chloro or alkoxy, contains one, three or four hydrolyzable groups, and has an alkyl group that satisfies the above-described conditions. Specific examples of the silane compounds that can be used include, for example, tetrachlorosilane, tetramethoxysilane, tetraethoxysilane, tetrabutoxysilane, methyltrichlorosilane, methyltrimethoxysilane, methyltriethoxysilane, methyltriisopropoxysilane, methyltributoxysilane, ethyltrichlorosilane, ethyltrimethoxysilane, ethyltriethoxysilane, propyltrichlorosilane, propyltrimethoxysilane, propyltriethoxysilane, isopropyltrichlorosilane, isopropyltrimethoxysilane, isopropyltriethoxysilane, butyltrichlorosilane, butyltrimethoxysilane, butyltriethoxysilane, isobutyltrichlorosilane, isobutyltrimethoxysilane, isobutyltriethoxysilane, hexyltrichlorosilane, hexyltrimethoxysilane, hexyltriethoxysilane, 2-ethylhexyltrichlorosilane, 2-ethylhexyltrimethoxysilane, 2-ethylhexyltriethoxysilane, decyltrichlorosilane, decyltrimethoxysilane, decyltriethoxysilane, cetyltrichlorosilane, cetyltrimethoxysilane, cetyltriethoxysilane, stearyl trichlorosilane, stearyl trimethoxysilane, stearyl triethoxysilane, trimethyl chlorosilane, trimethyl methoxysilane, trimethyl ethoxysilane, trimethyl isopropoxysilane, dimethyl ethyl chlorosilane, dimethyl ethyl methoxysilane, dimethyl ethyl ethoxysilane, dimethyl propyl chlorosilane, dimethyl propyl methoxysilane, dimethyl propyl ethoxysilane, dimethyl isopropyl chlorosilane, dimethyl isopropyl methoxysilane, dimethyl isopropyl ethoxysilane, dimethyl hexyl chlorosilane, dimethyl hexyl methoxysilane, dimethyl hexyl ethoxysilane, dimethyl decyl chlorosilane, dimethyl decyl methoxysilane, dimethyl decyl ethoxysilane, dimethyl cetyl chlorosilane, dimethyl cetyl methoxysilane, dimethyl cetyl ethoxysilane, dimethyl stearyl chlorosilane, dimethyl stearyl methoxysilane, dimethyl stearyl ethoxysilane, and partially hydrolyzed compounds thereof, but are not limited thereto. From the viewpoints of operability, facilitation of distilling off by-products, and availability of raw materials, methoxysilane or ethoxysilane is preferably used. One type of these silane compounds or a mixture of two or more of thereof may be used.

As the method for hydrolyzing a silane compound in water, a commonly known method can be employed. That is, a method is employed that includes hydrolyzing a silane compound while adding it dropwise into water, or mixing water and a silane compound all at once and then carrying out a hydrolysis reaction.

Upon carrying out the hydrolysis reaction, a hydrolysis catalyst may be used. A conventionally known catalyst may be used as the hydrolysis catalyst, and acidic or alkaline catalyst is preferably used. In the case of an acidic catalyst, hydrogen halide, carboxylic acid, sulfonic acid, an acidic or weakly acidic inorganic salt, and solid acid such as an ion exchange resin, are preferred. In the case of an alkaline catalyst, alkali metal salts such as sodium hydroxide, potassium hydroxide, sodium carbonate, potassium carbonate, and sodium hydrogen carbonate, alkali metal silanolates such as sodium silanolate and potassium silanolate, amines such as triethylamine, diethylamine, and aniline, ammonia water, etc., can be used. The amount of catalyst added is preferably adjusted so that a pH of its aqueous solution is 2 to 7 or 7 to 12. Also, after completion of the reaction, a neutralizing agent for neutralizing the acidic or alkaline catalyst may be added, if necessary.

A surfactant may be added to the aqueous solution in order to disperse the silane compound and the hydrolysis reaction product in water. The surfactant is not limited, and for example, anionic surfactants such as an alkyl sulfate, an alkylbenzene sulfonate, and an alkyl phosphate; nonionic surfactants such as a polyoxyethylene alkyl ether, a polyoxyethylene oxypropylene alkyl ether, a polyoxyethylene alkyl phenyl ether, and a polyoxyethylene fatty acid ester; cationic surfactants such as a quaternary ammonium salt and an alkylamine acetate; and amphoteric surfactants such as an alkyl betaine and an alkyl imidazoline, etc., can be used, and these can be used singly or in combination of two or more thereof. A surfactant that exhibits acidity or alkalinity can also be used as a hydrolysis catalyst. The amount of surfactant when added is not limited, but is preferably 1 to 50 parts by weight per 100 parts by weight of the silane compound. The amount less than 1 part by weight may result in rendering an insufficient effect of adding the surfactant, and the amount more than 50 parts by weight may result in impairment of water-repellency of a water-repellent agent.

To a mixture of water and the silane compound may be added a hydrolysis catalyst and surfactant, if necessary to carry out a hydrolysis reaction at 0 to 90°C for 10 minutes to 24 hours. Thereafter, a neutralization reaction is carried out, if necessary to be able to obtain a silicone resin. Also, alcohols, neutralized salts, etc., which have been produced as by-products in the hydrolysis reaction can be removed by vacuum distillation, filtration or the like. Various additives can be added to this silicone resin. For example, an antiseptic agent, a thickener, or the like can be added depending on a purpose.

### (Amount of Silicone)

The amount of silicone may be 0.1 parts by weight or more, 1 part by weight or more, 3 parts by weight or more, 5 parts by weight or more, 10 parts by weight or more, 15 parts by weight or more, or 20 parts by weight or more, per 100 parts by weight of the non-fluorine copolymer (A). The amount of silicone is 50 parts by weight or less, 40 parts by weight or less, 30 parts by weight or less, 20 parts by weight or less, 10 parts by weight or less, or 5 parts by weight or less, per 100 parts by weight of the non-fluorine copolymer (A).

### [Wax]

The water-repellent composition in the present disclosure preferably contains wax in addition to the hydrophobic monomer (a1). Containing the wax can favorably combine the water-repellency and slip resistance. The water-repellent composition in the present disclosure may contain both silicone and wax, or may contain either silicone or wax singly.

Examples of the wax include paraffin wax, microcrystalline wax, Fischer-Tropsch wax, polyolefin wax (polyethylene wax, polypropylene wax, etc.), oxidized polyolefin wax, animal and vegetable wax, mineral wax, and the like. The paraffin wax is preferred. Specific examples of compounds constituting the wax include normal alkanes (for example, tricosane, tetracosane, pentacosane, hexacosane, heptacosane, octacosane, nonacosane, triacontane, hentriacontane, dotriacontane, tritriacontane, tetratriacontane, pentatriacontane, and hexatriacontane), normal alkenes (for example, 1-eicosene, 1-docosene, 1-tricosene, 1-tetracosene, 1-pentacosene, 1-hexacosene, 1-heptacosene, 1-octacosene, nonacosane, triacontane, hentriacontane, dotriacontane, tritriacontane, tetratriacontane, pentatriacontane, and hexatriacontane). The number of carbon atoms in the compounds constituting the wax is preferably 20 to 60, for example 25 to 45. The molecular weight of the wax may be 200 to 2,000, for example, 250 to 1,500, or 300 to 1,000. These may be used singly or in combinations of two or more thereof.

The melting point of the wax may be 50°C or higher, 55°C or higher, 60°C or higher, 65°C or higher, or 70°C or higher, and is preferably 55°C or higher and more preferably 60°C or higher. The melting point of the wax is measured in accordance with JIS K 2235-1991.

### (Amount of Wax)

The amount of wax may be 0.1 parts by weight or more, 1 part by weight or more, 3 parts by weight or more, 5 parts by weight or more, 10 parts by weight or more, 15 parts by weight or more, or 20 parts by weight or more, per 100 parts by weight of the non-fluorine copolymer (A). The amount of wax may be 50 parts by weight or less, 40 parts by weight or less, 30 parts by weight or less, 20 parts by weight or less, 10 parts by weight or less, or 5 parts by weight or less, per 100 parts by weight of the non-fluorine copolymer (A).

### [Inorganic Particles]

The water-repellent composition of the present disclosure may contain inorganic particles. Containing the inorganic particles favorably enables imparting water-repellency and slip resistance. The inorganic particle may be an aluminum compound (for example, alumina), a silicon compound (for example, silica), a titanium compound, etc. These may be used singly or in combination of two or more thereof. The inorganic particles may be subjected to hydrophilic surface treatment or hydrophobic surface treatment.

An average primary particle size of the inorganic particles may be 5 nm or more, 10 nm or more, 15 nm or more, 20 nm or more, 25 nm or more, or 30 nm or more. The average primary particle size of the inorganic particles may be 600 nm or less, 400 nm or less, 200 nm or less, 100 nm or less, 40 nm or less, 37.5 nm or less, 35 nm or less, 32.5 nm or less, 30 nm or less, 27.5 nm or less, 25 nm or less, or 22.5 nm or less, and is preferably 40 nm or less. Within the above range of the average primary particle size, water-repellency and slip resistance can be favorably combined. The average primary particle size can be measured with a microscope (scanning electron microscope or transmission electron microscope). Specifically, an arbitrary location on fabric is observed with a microscope from above at an arbitrary magnification. Next, when the particle shape is spherical, the particle diameter is considered to be a particle size, and when the particle shape is non-spherical, an average value of the longest length and the shortest length is considered to be a particle size. Particle sizes of all the particles present within the field of view are measured, and again measured by moving the field of view repeatedly to measure particle sizes at 10 or more points, and the average value thereof is taken as an average primary particle size.

### (Amount of Inorganic Particles)

The amount of inorganic particles may be 0.1 parts by weight or more, 1 part by weight or more, 3 parts by weight or more, 5 parts by weight or more, 10 parts by weight or more, 15 parts by weight or more, or 20 parts by weight or more, per 100 parts by weight of the non-fluorine copolymer (A). The amount of inorganic particles may be 50 parts by weight or less, 40 parts by weight or less, 30 parts by weight or less, 20 parts by weight or less, 10 parts by weight or less, or 5 parts by weight or less, per 100 parts by weight of non-fluorine copolymer (A).

### [Liquid Medium]

The water-repellent composition may include a liquid medium. The liquid medium is water, an organic solvent, or a mixture of water and organic solvent. It is preferably a mixture of water and organic solvent. Containing the organic solvent can favorably combine the water-repellency and slip resistance.

Examples of the organic solvent include esters (for example, esters having 2 to 40 carbon atoms, specifically ethyl acetate and butyl acetate), ketones (for example, ketones having 2 to 40 carbon atoms, specifically methyl ethyl ketone and diisobutyl ketones), alcohols (for example, alcohols having 1 to 40 carbon atoms, specifically isopropyl alcohol), aromatic solvents (for example, toluene and xylene), petroleum-based solvents (for example, alkanes having 5 to 10 carbon atoms, specifically, naphtha and kerosene). The organic solvent is preferably a water-soluble organic solvent. The water-soluble organic solvent may contain a compound having at least one hydroxy group (for example, an alcohol, a polyhydric alcohol such as a glycol-based solvent, an ether (for example, monoether) of polyhydric alcohol, and the like). These may be used singly or in combinations of two or more thereof.

### (Amount of Liquid Medium)

The amount of liquid medium may be 40% by weight or more, 50% by weight or more, 60% by weight or more, 70% by weight or more, 80% by weight or more, 90% by weight or more, 95% by weight or more, or 97% by weight or more based on the water-repellent composition. The amount of the liquid medium is 99.9% by weight or less, 99% by weight or less, 95% by weight or less, 90% by weight or less, 80% by weight or less, 70% by weight or less, 60% by weight or less, or 50% by weight or less based on the water-repellent composition.

The amount of the organic solvent may be 0.5% by weight or more, 1% by weight or more, 2% by weight or more, 3% by weight or more, 5% by weight or more, 7.5% by weight or more, 10% by weight or more, 12.5% by weight or more, 15% by weight or more, or 20% by weight or more based on the water-repellent composition. The amount of the organic solvent may be 75% by weight or less, 50% by weight or less, 40% by weight or less, 30% by weight or less, 25% by weight or less, 20% by weight or less, 15% by weight or less, 10% by weight or less, or 5% by weight or less based on the water-repellent composition.

The amount of the organic solvent may be 1% by weight or more, 3% by weight or more, 5% by weight or more, 10% by weight or more, 20% by weight or more, 30% by weight or more, or 40% by weight or more based on the liquid medium. The amount of organic solvent may be 55% by weight or less, 45% by weight or less, 35% by weight or less, 25% by weight or less, 15% by weight or less, 12.5% by weight or less, 7.5% by weight or less, or 5.0% by weight or less based on the liquid medium.

The amount of the organic solvent is 1 part by weight or more, 3 parts by weight or more, 5 parts by weight or more, 10 parts by weight or more, 20 parts by weight or more, 30 parts by weight or more, 40 parts by weight or more, or 50 parts by weight or more, per 100 parts by weight of the non-fluorine copolymer (A). The amount of the organic solvent is 200 parts by weight or less, 175 parts by weight or less, 150 parts by weight or less, 125 parts by weight or less, 100 parts by weight or less, 80 parts by weight or less, 60 parts by weight or less, 40 parts by weight or less, 20 parts by weight or less, or 10 parts by weight or less, per 100 parts by weight of the non-fluorine copolymer (A).

The amount of organic solvent may be 0.5 parts by weight or more, 1 part by weight or more, 1.5 parts by weight or more, 3 parts by weight or more, 5 parts by weight or more, 10 parts by weight or more, 15 parts by weight or more, 20 parts by weight or more, 30 parts by weight or more, or 40 parts by weight or more, per 100 parts by weight of water. The amount of organic solvent may be 100 parts by weight or less, 75 parts by weight or less, 50 parts by weight or less, 25 parts by weight or less, 10 parts by weight or less, or 5 parts by weight or less, per 100 parts by weight of water.

### [Dispersant]

The water-repellent composition may contain a dispersant to improve dispersibility of the non-fluorine copolymer (A). The dispersant may be a polymeric dispersant, preferably a hydrophilic polymeric dispersant. As the dispersant, a polyvinylpyrrolidone and polyvinyl alcohol, a polyglycerin, a polyacrylic acid salt, and the like, can be used. These may be used singly or in combinations of two or more thereof.

### (Amount of Dispersant)

The amount of the dispersant may be 0.1 parts by weight or more, 1 part by weight or more, 3 parts by weight or more, 5 parts by weight or more, 10 parts by weight or more, 15 parts by weight or more, or 20 parts by weight or more, per 100 parts by weight of the non-fluorine copolymer (A). The amount of the dispersant may be 50 parts by weight or less, 40 parts by weight or less, 30 parts by weight or less, 20 parts by weight or less, 10 parts by weight or less, or 5 parts by weight or less, per 100 parts by weight of the non-fluorine copolymer (A).

### [Surfactant]

The water-repellent composition preferably contains a surfactant. In the water-repellent composition, the surfactant may include a nonionic surfactant. Containing the surfactant can favorably combine the water-repellency and slip resistance. Further, the surfactant may include one or more surfactants selected from a cationic surfactant, an anionic surfactant, and an amphoteric surfactant. A combination of the nonionic surfactant and the cationic surfactant is preferably used.

### (Nonionic Surfactant)

Examples of the nonionic surfactant include an ether, ester, ester ether, alkanolamide, polyhydric alcohol, and amine oxide.

An example of the ether is a compound having an oxyalkylene group (preferably a polyoxyethylene group).

Examples of the ester are an ester of an alcohol and a fatty acid. Examples of the alcohol are a monovalent to hexavalent (particularly divalent to pentavalent) alcohol having 1 to 50 carbon atoms (particularly 10 to 30 carbon atoms) (for example, an aliphatic alcohol). An example of the fatty acid is a saturated or unsaturated fatty acid having 2 to 50 carbon atoms, particularly 5 to 30 carbon atoms.

An example of the ester ether is a compound obtained by adding an alkylene oxide (particularly ethylene oxide) to an ester of an alcohol and a fatty acid. Examples of the alcohol are a monovalent to hexavalent (particularly divalent to pentavalent) alcohol having 1 to 50 carbon atoms (particularly 3 to 30 carbon atoms) (for example, an aliphatic alcohol). An example of the fatty acid is a saturated or unsaturated fatty acid having 2 to 50 carbon atoms, particularly 5 to 30 carbon atoms.

An example of the alkanolamide is a compound formed of a fatty acid and an alkanolamine. The alkanolamide may be a monoalkanolamide or a dialkanolamide. An example of the fatty acid is a saturated or unsaturated fatty acid having 2 to 50 carbon atoms, particularly 5 to 30 carbon atoms. The alkanolamine may be an alkanol having 1 to 3 amino groups and 1 to 5 hydroxyl groups, having 2 to 50 carbon atoms, particularly 5 to 30 carbon atoms.

The polyhydric alcohol may be a divalent to pentavalent alcohol having 10 to 30 carbon atoms.

The amine oxide may be an oxide (for example, having 5 to 50 carbon atoms) of an amine (secondary amine or preferably tertiary amine).

The nonionic surfactant is preferably a nonionic surfactant having an oxyalkylene group (preferably a polyoxyethylene group). The number of carbon atoms of the alkylene group in the oxyalkylene group is preferably 2 to 10. The number of oxyalkylene groups in a molecule of the nonionic surfactant is generally preferably 2 to 100.

The nonionic surfactant is selected from the group consisting of an ether, ester, ester ether, alkanolamide, polyhydric alcohol, and amine oxide, and is preferably a nonionic surfactant having an oxyalkylene group.

The nonionic surfactant may be an alkylene oxide adduct of a linear and/or branched aliphatic (saturated and/or unsaturated) group, a polyalkylene glycol ester of a linear and/or branched fatty acid (saturated and/or unsaturated), a polyoxyethylene (POE)/polyoxypropylene (POP) copolymer (random or block copolymer), an alkylene oxide adduct of acetylene glycol, etc. Among them, the nonionic surfactant is preferably a surfactant such that the structures of the alkylene oxide addition moiety and polyalkylene glycol moiety are polyoxyethylene (POE) or polyoxypropylene (POP) or POE/POP copolymer (which may be a random or block copolymer).

The nonionic surfactant also preferably has a structure free of an aromatic group due to environmental issues (biodegradability, environmental hormones, and the like).

The nonionic surfactant may be the compound represented by formula:

R¹O-(CH₂CH₂O)ₚ-(R²O)_{q}-R³

wherein R¹ is an alkyl group having 1 to 22 carbon atoms, an alkenyl group having 2 to 22 carbon atoms, or an acyl group,
R² is each independently the same or different and is an alkylene group having 3 or more carbon atoms (for example, 3 to 10),
R³ is a hydrogen atom, an alkyl group having 1 to 22 carbon atoms, or an alkenyl group having 2 to 22 carbon atoms,
p is a numeral of 2 or more, and
q is 0 or a numeral of 1 or more.

R¹ preferably has 8 to 20 carbon atoms, particularly 10 to 18 carbon atoms. Preferred specific examples of R¹ include a lauryl group, tridecyl group, and oleyl group.

Examples of R² are a propylene group and butylene group.

In the nonionic surfactant, p may be a numeral of 3 or more (for example, 5 to 200). q may be a numeral of 2 or more (for example, 5 to 200). That is, -(R²O)_{q}- may form a polyoxyalkylene chain.

The nonionic surfactant may be a polyoxyethylene alkylene alkyl ether including a hydrophilic polyoxyethylene chain and a hydrophobic oxyalkylene chain (particularly a polyoxyalkylene chain) in the center. Examples of the hydrophobic oxyalkylene chain include an oxypropylene chain, an oxybutylene chain, a styrene chain, and the like, and among them, the oxypropylene chain is preferred.

Specific examples of the nonionic surfactant include condensation products of ethylene oxide with hexylphenol, isooctylphenol, hexadecanol, oleic acid, an alkane (C₁₂-C₁₆) thiol, a sorbitan monofatty acid (C₇-C₁₉) or alkyl (C₁₂-C₁₈) amine, and the like.

A proportion of a polyoxyethylene block can be 5 to 80% by weight, for example, 30 to 75% by weight, and particularly 40 to 70% by weight based on the molecular weight of the nonionic surfactant (copolymer).

An average molecular weight of the nonionic surfactant is generally 300 to 5,000, for example, 500 to 3,000.

The nonionic surfactant may be a mixture of a compound with an HLB (hydrophilicity - hydrophobicity balance) of less than 15 (particularly 5 or less) and a compound with an HLB of 15 or more. An example of the compound with an HLB of less than 15 is a sorbitan fatty acid ester. An example of the compound with an HLB of 15 or more is a polyoxyethylene alkyl ether. A weight ratio of the compound with an HLB of less than 15 to the compound with an HLB of 15 or more may be 90:10 to 20:80, for example, 85:15 to 55:45.

The nonionic surfactant may be used singly or in admixture of two or more thereof.

### (Cationic Surfactant)

The cationic surfactant is preferably a compound free of an amide group.

The cationic surfactant may be an amine salt, quaternary ammonium salt, or oxyethylene-added ammonium salt. Specific examples of the cationic surfactant include, but are not limited to, an alkyl amine salt, amine salt type surfactants such as an amino alcohol fatty acid derivative, polyamine fatty acid derivative, and imidazoline, and quaternary ammonium salt type surfactants such as an alkyl trimethylammonium salt, dialkyl dimethylammonium salt, alkyl dimethyl benzyl ammonium salt, pyridinium salt, alkyl isoquinolinium salt, and benzethonium chloride.

Preferred examples of the cationic surfactant are the compounds of:

R²¹-N⁺(-R²²)(-R²³)(-R²⁴) X-

wherein R²¹, R²², R²³ and R²⁴ are hydrocarbon groups having 1 to 40 carbon atoms, and
X is an anionic group.

Specific examples of R²¹, R²², R²³ and -R²⁴ are alkyl groups (for example, a methyl group, butyl group, stearyl group, and palmityl group). Specific examples of X are halogen (for example, chlorine), acids (for example, hydrochloric acid and acetic acid).

The cationic surfactant is particularly preferably a monoalkyltrimethylammonium salt (the number of carbon atoms of the alkyl is 4 to 40).

The cationic surfactant is preferably an ammonium salt. The cationic surfactant may be the ammonium salt represented by formula:

R¹ₚ-N⁺R²_{q}X-

wherein R¹ is a C12 or more (for example, C₁₂ to C₅₀) linear and/or branched aliphatic (saturated and/or unsaturated) group,
R² is H or a C1 to C4 alkyl group, benzyl group,
polyoxyethylene group (the number of oxyethylene groups is for example, 1 (particularly 2, especially 3) to 50) (CH₃ and C₂H₅ are particularly preferred),
X is a halogen atom (for example), a C₁ to C₄ fatty acid base,
p is 1 or 2, q is 2 or 3, and p + q = 4. The number of carbon atoms of R¹ may be 12 to 50, for example, 12 to 30.

Specific examples of the cationic surfactant include dodecyltrimethylammonium acetate,
trimethyltetradecylammonium chloride,
hexadecyltrimethylammonium bromide,
trimethyloctadecylammonium chloride,
(dodecylmethylbenzyl)trimethylammonium chloride,
benzyldodecyldimethylammonium chloride,
methyldodecyldi(hydropolyoxyethylene)ammonium chloride,
benzyldodecyldi(hydropolyoxyethylene)ammonium chloride,
and N-[2-(diethylamino)ethyl]oleamide hydrochloride.

Examples of the anionic surfactant include an alkyl ether sulfate, alkyl sulfate, alkenyl ether sulfate, alkenyl sulfate, olefin sulfonate, alkanesulfonate, saturated or unsaturated fatty acid salt, alkyl or alkenyl ether carbonate, α-sulfone fatty acid salt, N-acylamino acid type surfactant, phosphate mono- or diester-type surfactant, and sulfosuccinic acid ester.

Examples of the amphoteric surfactant includes alanines, imidazolinium betaines, amido betaines, and betaine acetate. Specific examples include lauryl betaine, stearyl betaine, lauryl carboxymethyl hydroxyethyl imidazolinium betaine, lauryl dimethylaminoacetate betaine, and fatty acid amidopropyl dimethylamino acetate betaine.

The surfactant may be one type or a combination of two or more of each of the nonionic surfactant, cationic surfactant, and amphoteric surfactants.

### (Amount of Surfactant)

The amount of the surfactant may be 0.1 parts by weight or more, 1 part by weight or more, 3 parts by weight or more, 5 parts by weight or more, 10 parts by weight or more, 15 parts by weight or more, or 20 parts by weight or more, per 100 parts by weight of the non-fluorine copolymer (A). The amount of the surfactant may be 50 parts by weight or less, 40 parts by weight or less, 30 parts by weight or less, 20 parts by weight or less, 10 parts by weight or less, or 5 parts by weight or less, per 100 parts by weight of the non-fluorine copolymer (A).

The amount of the cationic surfactant may be 5% by weight or more, preferably 10% by weight or more, and more preferably 20% by weight or more based on the total amount of the surfactants. The weight ratio of the nonionic surfactant and the cationic surfactant is preferably 95:5 to 20:80 and more preferably 85:15 to 40:60.

The amount of the cationic surfactant may be 0.05 to 10 parts by weight, for example, 0.1 to 8 parts by weight, per 100 parts by weight of the water-repellent resin. The total amount of surfactants may be 0.1 to 20 parts by weight, for example, 0.2 to 10 parts by weight, per 100 parts by weight of the water-repellent resin.

### [Curing Agent]

The water-repellent composition may contain a curing agent (active hydrogen-reactive compound or active hydrogen-containing compound). The curing agent may be added to the water-repellent composition after a non-fluorine copolymer (A) was obtained by polymerization.

The curing agent (crosslinking agent) in the water-repellent composition can favorably cure the non-fluorine copolymer (A). The curing agent may be an active hydrogen-reactive compound or an active hydrogen-containing compound that reacts with active hydrogen or an active hydrogen-reactive group of the non-fluorine copolymer (A). Examples of the active hydrogen-reactive compound include a polyisocyanate compound, an epoxy compound, a chloromethyl group-containing compound, a carboxyl group-containing compound, and a hydrazide compound. Examples of the active hydrogen-containing compound include a hydroxyl group-containing compound, an amino group-containing compound and a carboxyl group-containing compound, a ketone group-containing compound, a hydrazide compound, and a melamine compound.

The curing agent may be a polyisocyanate compound. The polyisocyanate compound is a compound having two or more isocyanate groups in one molecule. The polyisocyanate compound serves as a crosslinking agent. Examples of the polyisocyanate compound include an aliphatic polyisocyanate, alicyclic polyisocyanate, aromatic-aliphatic polyisocyanate, aromatic polyisocyanate, and derivatives of these polyisocyanates.

Examples of the aliphatic polyisocyanate include aliphatic diisocyanates such as trimethylene diisocyanate, tetramethylene diisocyanate, hexamethylene diisocyanate, pentamethylene diisocyanate, 1,2-propylene diisocyanate, 1,2-butylene diisocyanate, 2,3-butylene diisocyanate 1,3-butylene diisocyanate, 2,4,4- or 2,2,4-trimethylhexamethylene diisocyanate, and 2,6-diisocyanatomethylcaproate, and aliphatic triisocyanates such as lysine ester triisocyanate, 1,4,8-triisocyanatooctane, 1,6,11-triisocyanatoundecane, 1,8-diisocyanato-4-(isocyanatomethyl)octane, 1,3,6-triisocyanatohexane, and 2,5,7-trimethyl-1,8-diisocyanato-5-(isocyanatomethyl)octane. These may be used singly or in combination of two or more thereof.

Examples of the alicyclic polyisocyanate include an alicyclic diisocyanate and alicyclic triisocyanate. Specific examples of the alicyclic polyisocyanate include 1,3-cyclopentene diisocyanate, 3-isocyanatomethyl-3,5,5-trimethylcyclohexyl isocyanate (isophorone diisocyanate), and 1,3,5-triisocyanatocyclohexane. These may be used singly or in combination of two or more thereof.

Examples of the aromatic-aliphatic polyisocyanate include an aromatic-aliphatic diisocyanate and aromatic-aliphatic triisocyanate. Specific examples of the aromatic-aliphatic polyisocyanate include 1,3- or 1,4-xylylene diisocyanate or a mixture thereof, 1,3- or 1,4-bis(1-isocyanato-1-methylethyl)benzene (tetramethyl xylylene diisocyanate) or a mixture thereof, and 1,3,5-triisocyanatomethylbenzene. These may be used singly or in combination of two or more thereof.

Examples of the aromatic polyisocyanates include an aromatic diisocyanate, aromatic triisocyanate, and aromatic tetraisocyanate. Specific examples of aromatic polyisocyanates include m-phenylenediisocyanate, p-phenylenediisocyanate, 4,4'-diphenyl diisocyanate, 1,5-naphthalene diisocyanate, 2,4'- or 4,4'-diphenylmethane diisocyanate or a mixture thereof, 2,4- or 2,6-tolylenediisocyanate or a mixture thereof, triphenylmethane-4,4',4"-triisocyanate, and 4,4'-diphenylmethane-2,2',5,5'-tetraisocyanate. These may be used singly or in combination of two or more thereof.

Examples of the derivative of the polyisocyanate include various derivatives such as a dimer, trimer, biuret, allophanate, carbodiimide, urethodione, urethoimine, isocyanurate, and iminooxadiazinedione of the aforementioned polyisocyanate compounds. These may be used singly or in combination of two or more thereof.

These polyisocyanates can be used singly or in combination of two or more thereof.

As the polyisocyanate compound, a blocked polyisocyanate compound (blocked isocyanate), which is a compound obtained by blocking isocyanate groups of the polyisocyanate compound with a blocking agent, is preferably used. The blocked polyisocyanate compound is preferably used because it is relatively stable even in an aqueous solution and can be used in the same aqueous solution as the water-repellent composition.

The blocking agent is an agent that blocks free isocyanate groups. The blocked polyisocyanate compound, for example, can be heated 100°C or higher, for example, 130°C or higher to regenerate isocyanate groups, facilitating a reaction with hydroxyl groups. Examples of the blocking agent include a phenol-based compound, lactam-based compound, aliphatic alcohol-based compound, and oxime-based compound. The polyisocyanate compounds can be used singly or in combination of two or more thereof.

The epoxy compound is a compound having an epoxy group. Examples of the epoxy compound include an epoxy compound having a polyoxyalkylene group, for example, a polyglycerol polyglycidyl ether and polypropylene glycol diglycidyl ether; and sorbitol polyglycidyl ether.

The chloromethyl group-containing compound is a compound having a chloromethyl group. Examples of the chloromethyl group-containing compound include chloromethyl polystyrene.

The carboxyl group-containing compound is a compound having a carboxyl group. Examples of the carboxyl group-containing compound include (poly)acrylic acid, and (poly)methacrylic acid.

Specific examples of the ketone group-containing compound include (poly)diacetone acrylamide, and diacetone alcohol.

Specific examples of the hydrazide compound include hydrazine, carbohydrazide, and adipic acid hydrazide.

Specific examples of the melamine compound include a melamine resin, and methyl etherified melamine resin.

### (Amount of Curing Agent)

The amount of the curing agent may be 0.1 parts by weight or more, 1 part by weight or more, 3 parts by weight or more, 5 parts by weight or more, 10 parts by weight or more, 15 parts by weight or more, or 20 parts by weight or more, per 100 parts by weight of the non-fluorine copolymer (A). The amount of the curing agent may be 50 parts by weight or less, 40 parts by weight or less, 30 parts by weight or less, 20 parts by weight or less, 10 parts by weight or less, or 5 parts by weight or less, per 100 parts by weight of the non-fluorine copolymer (A).

The silicone, wax, inorganic particles, liquid medium, dispersant, surfactant, or curing agent listed above may be added after production of the non-fluorine copolymer (A), or a monomer of the non-fluorine copolymer (A) may be polymerized to produce the non-fluorine copolymer (A) in the presence of the silicone, wax, inorganic particles, liquid medium, dispersant, surfactant, or curing agent listed above.

### [Other Component]

The water-repellent composition may contain other component other than the aforementioned components. After the non-fluorine copolymer (A) was produced, the other component may be added. Examples of other components include water- and/or oil- repellent agents, anti-slip agents, antistatic agents, antiseptic agents, ultraviolet absorbers, antibacterial agents, deodorants, and perfumes. These may be used singly or in combination of two or more thereof. In addition to the above components, examples of other components include texture modifiers, softening agents, antibacterial agents, flame retardants, coating material fixing agents, wrinkle-resistant agents, drying rate adjusters, crosslinking agents, film formation agents, compatibilizing agents, antifreezing agents, viscosity modifiers, ultraviolet absorbers, antioxidants, pH adjusters, insect repellents, antifoaming agents, anti-shrinkage agents, laundry wrinkle-resistant agents, shape retention agents, drape retention agents, ironing improving agents, whitening agents, bleaching agents, fabric softening clays, anti-dye transfer agents such as polyvinylpyrrolidone, polymer dispersants, soil release agents, scum dispersants, fluorescent brightening agents such as 4,4-bis(2-sulfostyryl)biphenyl disodium (Tinopearl CBS-X manufactured by Ciba Specialty Chemicals Corporation), dye fixing agents, anti-color fading agents such as 1,4-bis(3-aminopropyl)piperazine, stain removing agents, enzymes such as cellulase, amylase, protease, lipase, and keratinase as fiber surface modifiers, foam inhibitors, silk protein powder that can impart silky texture and functions such as moisture absorption and desorption properties, surface modifiers thereof, emulsified dispersions, and specifically K-50, K-30, K-10, A-705, S-702, L-710, FP series (Idemitsu Petrochemical Co., Ltd.), hydrolyzed silk liquid (Jomo), Silk Gen G Solble S (ICHIMARU FHARCOS Co., Ltd.), a nonionic polymer compound composed of alkylene terephthalate and/or alkylene isophthalate units and polyoxyalkylene units, for example, antifouling agent such as FR627 manufactured by GOO CHEMICAL CO., LTD. and SRC-1 manufactured by Clariant Japan K. K, can be compounded. These may be used singly or in combination of two or more thereof.

### (Antistatic agent)

Examples of the antistatic agent include cationic antistatic agents with cationic functional groups such as quaternary ammonium salts, pyridinium salts, primary-, secondary-, and tertiary-amino groups; anionic antistatic agents with anionic functional groups such as sulfonic acid salts or sulfuric acid ester salts, phosphonic acid salts, phosphoric acid ester salts; amphoteric antistatic agents such as alkyl betaine and derivatives thereof, imidazoline and derivatives thereof, alanine and derivatives thereof, and nonionic antistatic agents such as amino alcohols and derivatives thereof, glycerin and derivatives thereof, and polyethylene glycol and derivatives thereof. The antistatic agent may be an ion-electric conductive polymer obtained by polymerizing or copolymerizing a monomer having these cationic, anionic or amphoteric ion-electric conductive groups. These may be used singly or in combination of two or more thereof.

### (Antibacterial and Antifungal Agent)

An antibacterial and antifungal agent is at least one type of antibacterial and antifungal agent that inhibits growth of microorganisms such as bacteria, preferably both fungi and bacteria. The antibacterial and antifungal agent is not limited, and the following commonly used antibacterial and antifungal agents listed in the Journal of the Japanese Society for Antibacterial and Antifungal Agents, Vol. 26, 1998, can be used.

Examples of the antibacterial and antifungal agents include, for example,
an amine-type agent such as bis(3-aminopropyl) dodecylamine (trialkyltriamine),
alcohol-based agents such as ethyl alcohol (ethanol),
iso-propyl alcohol (isopropanol), propyl alcohol
(propanol), tris (hydroxymethyl) nitromethane (trisnitro),
1,1,1-trichloro-2-methyl-2-propanol (chlorobutanol), and
2-bromo-2-nitropropane-1,3-diol (Bronopol, Bronosol, Bronocot),
aldehyde-based agents such as 1,5-pentanediol (glutaraldehyde), formaldehyde, and α-bromocinnamic aldehyde (α-bromocinnamaldehyde),
isothiazoline-based agents such as 2-n-octyl-4-isothiazolin-3-one (Skein M-8), 5-chloro-2-methyl-4-isothiazolin-3-one/2-methyl-4-isothiazolin-3-one ( Caisson CG, NS-500W), 1,2-benzisothiazolone-3 (BIT), and N-n-butyl-1,2-benzisothiazolone-3 (n-butyl BIT),
an isothiocyanate-based agent such as allyl isothiocyanate,
imidazole-based agents such as 2-(4-thiazolyl)-benzimidazole (thiabendazole, TBZ), methyl-2-benzimidazole carbamate (methyl 2-benzimidazolylcarbamate, Preventol BCM),
an ester-based agents such as glycerol laurate (lauricidin, glycerol monolaurate, and monoglyceride),
an oxazolidine-based agent such as 4,4-dimethyl-1,3-oxazolidine (BIOPAN CS-1135, Oxazine A),
carbanilide-based agents such as 3,4,4'-trichlorocarbanilide (triclocarban, trichlorocarbanilide)
and 4,4'-dichloro-3-(3-fluoromethyl)-carbanilide (Halocarban, Cloflucarban),
a carbamate-based agent such as 3-iodo-2-propynylbutyl carbamate (GLYCICAL),
carboxylic acid-based agents such as benzoic acid (benzenecarboxylic acid), flexa-2,4-dienoic acid (sorbic acid, 2-propanyl acrylic acid), octanoic acid (caprylic acid), propionic acid, undecylenic acid (10-undecylenic acid, 10-undecenoic acid), potassium hexa-2,4-dienoic acid (potassium sorbate, potassium 2-propenyl-acrylate), potassium propionate, calcium propionate, sodium benzoate, sodium propionate, magnesate(2-), bis(2-carboxybenzene carboperoxato)dihydrogene (monomagnesium phthalate), and zinc undecylenate;
quinoline-based agents such as 8-hydroxyquinoline and bis(quinolin-8-olate) copper (copper quinoline, oxine copper, and copper 8-quinolinolate),
a sulfide-based agent such as bis(dimethylthiocarbamoyl)disulfide (TMTD, thiuram), a diphenyl ether-based agent such as 2,4,4'-trichloro-2'-hydroxydiphenyl (triclosan, Irgasan DP300), sulfamide-based agents such as N,N-dimethyl-N'-(fluorodichloromethylthio)-N"-phenylsulfamide (Diclofluanid, Preventol A4-S) and N-dichlorofluoromethylthio-N',N'-dimethyl-N-p-torylsulfamide (triflamide, Preventol A5),
protein-based agents such as protamine (milt protein, milt decomposition product, nuclear protein) and Hen egg lysozyme (egg white lysozyme),
a thiazole-based agent such as 2-(4-thiocyanomethylthio)benzothiazole (benzothiazole),
a thiocarbamate-based agent such as sodium N-methyldithiocarbamate (Carbam Sodium),
triazine-based agents such as hexahydro-1,3,5-tris(hydroxyethyl)-S-triadine (BioPAN GK, triazine), CAVINON (100, 200), α-[2-(4-chlorophenyl)ethyl]-α-(1,1-dimethylethyl)-1H-1,2,4-triazole-1-ethanol (Tebuconazole), tropolone-based agent such as 4-isopropyl-2-hydroxy-cyclohepta-2,4,6-triene-1-one (hinokitiol, β-thujaplicin), nitrile-based agents such as 2,4,5,6-tetrachloroisophthalonitrile and 1,2-dibromo-2,4-dicyanobutane (Tectamar 38),
biguanide-based agents such as 1,1'-(hexamethylene bis[5-(4-chlorophenyl)biguanide]digluconate (chlorhexidine gluconate) and bis(p-chlorophenyldiguanide)hexane dihydrochloride (chlorhexidine hydrochloride), hydantoin-based agents such as 1-bromo-3-chloro-5,5'-dimethyl hydantoin (Dantobrom), 1,3-bis-(hydroxymethyl)-5,5'-dimethyl hydantoin (Glydant, Dantogard), pyridine-based agents such as sodium pyridine thiol-1-oxide (sodium pyrithione), zinc bis(2-pyridylthio-1-oxide) (Zinc Pyrithione, Zinc Omadine, ZPT), 2,3,5,6-tetrachloro-4-(methylsulphonyl)pyridine (Densil), copper bis(2-pyridylthio-1-oxide) (Copper Pyrithione, Copper Omadine, CuPT),
phenolic agents such as 2-isopropyl-5-methylphenol (thymol), 3-methyl-4-iso-propylphenol (isopropyl methylphenol, Biosol), o-phenylphenol (OPP, orthophenylphenol), phenol (carbolic acid), butyl-p-hydroxybenzoate (butylparaben), ethyl-p-hydroxybenzoate (ethylparaben), methyl-p-hydroxybenzoate (methylparaben), propyl-p-hydroxybenzoate (propylparaben), m-methylphenol (metacresol), o-methylphenol (orthocresol), p-methylphenol (paracresol), o-phenylsodiumphenoxide (sodium orthophenyl phenol), 2-benzyl-4-chlorophenol (chlorophene), p-chlorophenol (parachlorophenol), 4-chloro-3,5-dimethylphenol (parachlorometaxylenol), and 2-methyl-3-chlorophenol (parachlorometacresol);
a phthalimide-based agent such as N-(fluorodichloromethylthio)-phthalimide (Fluorofolpet, Briventol A3);
a peptide-based agent such as ε-poly-L-lysine (polylysine, ε-polylysine);
morpholine-based agents such as 4-(2-nitrobutyl)morpholine/4,4'-(2-nitrotrimethylene)dimorpholine (Biopan P-1487); iodine-based agents such as diiodomethyl-p-trylsulfone (diiodomethyl-para-tolylsulfone), polyvinylpyrolidone iodide (povidone iodine, Isodine), p-chlorophenyl-3-iodopropagyl formal (para-chlorophenyl-3-iodopropagyl formal), and 3-bromo-2,3-diiodo-2-propenylethylcarbonate (SunPlus),
chlorine-based agents such as sodium hypochlorite, sodium dichlorinated isocyanurate (sodium dichloroisocyanurate), and trichlorinated isocyanuric acid,
peroxide-based agents such as hydrogen peroxide, chlorine dioxide (stabilized chlorine dioxide, Biotalk), and peracetic acid,
metal salt-based agents such as copper naphthenate, silver/zirconium phosphate (Novaron AG300), silver chloride/titanium oxide, silver-zinc/calcium phosphate (Silver Ace), silver-zinc/zeolite (silver zinc aluminosilicate, silver zinc zeolite), zinc oxide, silver/zirconium phosphate (Novaron AGZ330), N-stearoyl-L-glutamic acid AgCu salt (Holon Killer),
an antibiotic-based agent such as 1-L-(1,3,5/2,4)-1,5-diamino-4-O-(2,5-dideoxy-α-D-glucopyranosyl)-2,3-cyclohexandiol (ST-7),
oxide-based agents such as ethylene oxide (EO) and propylene oxide (PO),
quaternary ammonium salt-based agents such as 4,4'-(tetramethylenedicarbonyldiamino)bis(1-decylpyridinium bromide) (dimer 135), decyldimethylbenzylammonium chloride (benzalkonium chloride), didecyldimethylammonium chloride (Bardac 2250/80),
diisobutylphenoxyethoxydimethylbenzylammonium chloride (benzothonium chloride, Hyamine 1622), hexadecyl trimethyl ammonium bromide (cetylammonium bromide, Cetrimide, CTAB, Cetavlon), N,N'-hexamethylenebis(4-carbamoyl-1-decylpyridinium bromide) (dimer 38), N-alkyl-N,N-dimethyl-N-benzylammonium chloride (benzalkonium chloride, Hyamine 3500J), N-decyl-N-isononyl-N,N'-dimethylammonium chloride (Bardac 170P), 5-(trimethoxysilyl)propyldimethyloctadecylammonium (DC-5700), and hexadecyl pyridinium chloride (cetylpyridinium chloride),
a carbohydrate-based agent such as β-1,4-poly-D-glucosamine (chitosan),
and a urea-based agents such as N'-(3,4-dichlorophenyl)-N,N-dimethylurea (Diuron, DCMU, Priventol A6). Particularly preferred are isothiazoline-based antibacterial and antifungal agents such as 2-n-octyl-4-isothiazolin-3-one (Skane M6), a mixture of 5-chloro-2-methyl-4-isothiazolin-3-one/2-methyl-4-isothiazolin-3-one, 1,2-benzisothiazolin-3-one (BIT), and N-n-butyl-1,2-benzisothiazolin-3-one (BBIT).

Particularly preferred are isothiazoline-based antibacterial and antifungal agents such as 2-n-octyl-4-isothiazolin-3-one, a mixture of 5-chloro-2-methyl-4-isothiazolin-3-one/2-methyl-4-isothiazolin-3-one, 1,2-benzisothiazolin-3-one (BIT), and N-n-butyl-1,2-benzisothiazolin-3-one (BBIT). These antibacterial and antifungal agents can be used singly or in combination of two or more thereof.

The amount of the antibacterial and antifungal agent may be 1.5 ppm or more, 7.5 ppm or more, 30 ppm or more, 75 ppm or more, or 100 ppm or more as an active ingredient concentration relative to the total water-repellent composition, and may be 600 ppm or less, 450 ppm or less, 300 ppm or less, 200 ppm or less, 150 ppm or less, or 100 ppm or less. For example, the amount of the antibacterial and antifungal agent may be 1.5 to 450 ppm, preferably 7.5 to 300 ppm, and particularly preferably 75 to 150 ppm, relative to the total water-repellent composition.

The amount of the antibacterial and antifungal agent may be 1.5 ppm or more, 7.5 ppm or more, 30 ppm or more, 75 ppm or more, 150 ppm or more, 250 ppm or more, or 300 ppm or more, or it may be 1,500 ppm or less, 1,000 ppm or less, 750 ppm or less, 450 ppm or less, 300 ppm or less, 200 ppm or less, or 150 ppm or less, relative to the non-fluorine copolymer (A). For example, the amount of the antibacterial and antifungal agent may be 4.5 to 1,350 ppm, preferably 22.5 to 900 ppm, and particularly preferably 225 to 450 ppm, relative to the non-fluorine copolymer (A).

The antibacterial and antifungal agent may be used as the following antiseptic agents or antibacterial agents.

### (Antiseptic Agent)

The antiseptic agent may be used mainly to enhance antisepsis power and bactericidal power to maintain antiseptic during long-term storage. Examples of the antiseptic agent include isothiazoline-based organosulfur compounds, benzisothiazoline-based organosulfur compounds, benzoic acids, and 2-bromo-2-nitropropane-1,3-diol. The amount of antiseptic agent is preferably 0.0001 to 1% by weight relative to the total weight of the water-repellent composition. When the amount of antiseptic agent is the lower limit value of the aforementioned range or more, a sufficient effect of antiseptic agent added is obtained, and when the amount is the upper limit value or less, favorable storage stability of the water-repellent composition is obtained.

### (Antibacterial Agents)

The antibacterial agent is a component that exhibits the effect of inhibiting bacteria from growing on fibers and further exhibits the effect of inhibiting generation of unpleasant odors derived from decomposition products of microorganisms. Examples of the antibacterial agent include cationic bactericidal agents such as quaternary ammonium salts, zinc bis-(2-pyridylthio-1-oxide), polyhexamethylene biguanidine hydrochloride, 8-oxyquinoline, and polylysine.

### (Ultraviolet Absorber)

The ultraviolet absorber is an agent that has a protection effect against ultraviolet rays, and is a component that absorbs ultraviolet rays, converts them into infrared rays, visible rays, and the like, and emits them. Examples of the ultraviolet absorber include aminobenzoic acid derivatives, salicylic acid derivatives, silicic acid derivatives, benzophenone derivatives, azole-based compounds, and 4-t-butyl-4'-methoxybenzoylmethane.

### (Deodorants)

Examples of the deodorant include cluster dextrin, methyl-β-cyclodextrin, 2-hydroxypropyl-β-cyclodextrin, monoacetyl-β-cyclodextrin, acylamidopropyl dimethylamine oxide, and an aminocarboxylic acid-based metal complex (the zinc complex of trisodium methylglycine diacetate described in WO2012/090580).

### (Perfume)

The perfumes are not limited, and a list of usable perfume materials can be found in various literatures, including "Perfume and Flavor Chemicals", Vol. I and II, Steffen Arctander, Allured Pub. Co. (1994) and "Synthetic Perfume Chemistry and Product Knowledge", Genichi Indo, The Chemical Daily Co., Ltd. (1996) and "Perfume and Flavor Materials of Natural Origin", Steffen Arctander, Allured Pub. Co. (1994) and "Encyclopedia of Fragrance", edited by the Japan Perfume Association, Asakura Publishing Co., Ltd. (1989) and "Perfumery Material Performance V.3.3", Boelens Aroma Chemical Information Service (1996) and "Flower oils and Floral Compounds In Perfumery", Danute Lajaujis Anonis, Allured Pub. Co. (1993), each of which is incorporated herein as a part of the disclosure of the present description by reference.

### (Amount of Other Components)

The amount of the other components may be 0.1 parts by weight or more, 1 part by weight or more, 3 parts by weight or more, 5 parts by weight or more, 10 parts by weight or more, 15 parts by weight or more, or 20 parts by weight or more, per 100 parts by weight of the non-fluorine copolymer (A). The amount of the other components may be 50 parts by weight or less, 40 parts by weight or less, 30 parts by weight or less, 20 parts by weight or less, 10 parts by weight or less, or 5 parts by weight or less, per 100 parts by weight of the non-fluorine copolymer (A).

### <Production Method of Water-Repellent Composition>

The method for producing a water-repellent composition includes copolymerizing a hydrophobic monomer (a1) having a hydrocarbon group having 2 to 40 carbon atoms with at least one chloride monomer (a2) selected from the group consisting of vinyl chloride and vinylidene chloride in the presence of an isocyanate derivative (B) to yield a non-fluorine copolymer (A). According to such a method (hereinafter referred to as the first method), the water-repellent composition of the present disclosure can be obtained.

In one embodiment, the method for producing a water-repellent composition includes copolymerizing the hydrophobic monomer (a1) having a hydrocarbon group having 2 to 40 carbon atoms with at least one chloride monomer (a2) selected from the group consisting of vinyl chloride and vinylidene chloride in the presence of the isocyanate derivative (B), a surfactant, and a liquid medium to yield the non-fluorine copolymer (A). According to such a method, the water-repellent composition of the present disclosure can be obtained.

Examples of the polymerization methods include, for example, suspension polymerization and emulsion polymerization, and from the viewpoint of obtaining an emulsion of the non-fluorine copolymer (A), the emulsion polymerization is employed.

When the emulsion polymerization is adopted, first, the above-described monomers (specifically, the hydrophobic monomer (a1) having a hydrocarbon group having 2 to 40 carbon atoms, at least one chloride monomer (a2) selected from the group consisting of vinyl chloride and vinylidene chloride, the cyclic hydrocarbon group-containing monomer (a3) which is compounded, if necessary, the crosslinkable monomer (a4) which is compounded, if necessary, and the other monomer (a5) which is compounded, if necessary) are totally or partially mixed with the isocyanate derivative (B), a surfactant, and a liquid medium to prepare a mixed liquid.

A proportion of the surfactant compounded may be, for example, 1 part by weight or more and preferably 3 parts by weight or more, and for example, 10 parts by weight or less and preferably 5 parts by weight or less, per 100 parts by weight of the total amount of the monomers (specifically, the hydrophobic monomer (a1) having a hydrocarbon group having 2 to 40 carbon atoms, at least one chloride monomer (a2) selected from the group consisting of vinyl chloride and vinylidene chloride, the cyclic hydrocarbon group-containing monomer (a3) which is compounded, if necessary, the crosslinkable monomer (a4) which is compounded, if necessary, and the other monomer (a5) which is compounded, if necessary) (the same applies in the followings).

A proportion of the liquid medium compounded may be, for example, 100 parts by weight or more and preferably 200 parts by weight or more, and for example, 400 parts by weight or less and preferably 300 parts by weight or less, per 100 parts by weight of the total amount of the monomers. The liquid medium may be any of those listed above. For example, the liquid medium may be water. In emulsion polymerization, an organic solvent may be further added. The organic solvent may be any of the liquid medium listed above. The organic solvent may be a water-soluble glycol-based solvent, such as ethylene glycol or propylene glycol.

In emulsion polymerization, the organic acid listed above may be added. For example, the organic acid may be a carboxylic acid such as acetic acid. The organic acid may be, for example, 0.01 part by weight or more or 0.1 part by weight or more, and may be 1 part by weight or less or 0.5 parts by weight or less, per 100 parts by weight of the total amount of the monomers.

Next, an emulsifier may be added to this mixed liquid.

As the emulsifier, known emulsifiers may be used, for example, cationic emulsifiers and anionic emulsifiers.

As the emulsifier, the above-described surfactants may also be used.

The emulsifier may contain a reactive emulsifier. In the case of an emulsifier containing a reactive emulsifier, the non-fluorine copolymer (A) (polymer of the above-described monomer) results in formation of polymer containing a constituent unit derived from the reactive emulsifier.

The non-fluorine copolymer (A) that would be the polymer containing a constituent unit derived from the reactive emulsifier improves product stability of a water dispersion (water-repellent composition) without reduction of water-repellency.

The reactive emulsifier is an emulsifying dispersant having radical reactivity, i.e., an emulsifier having one or more polymerizable unsaturated groups in the molecule, and is an emulsifier that can be copolymerized with the aforementioned monomers.

Examples of the reactive emulsifiers include, for example, the reactive emulsifier described in JP2017-25440A and preferably a reactive emulsifier represented by the following formula:

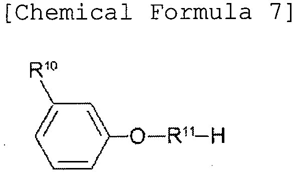

In the above formula, R¹⁰ represents an organic residue having an ethylenically unsaturated double bond group having 12 or more and 20 or less carbon atoms.

R¹¹ represents an oxyalkylene group having 2 or more and 10 or less carbon atoms and preferably an oxyethylene group.

The reactive emulsifier which would be the reactive emulsifier represented by the above formula improves product stability of a water dispersion (water-repellent composition) without water-repellency being reducible.

Examples of the reactive emulsifiers represented by the above formula preferably include, for example, a polyoxyethylene alkylphenol.

The emulsifier can be used singly or in combination of two or more thereof.

A proportion of the emulsifier compounded may be, for example, 5 parts by weight or more and, for example, 18 parts by weight or less, per 100 parts by weight of the total amount of the monomers.

The proportion of the emulsifier compounded may be, for example, 8 parts by weight or more and, for example, 20 parts by weight or less, per 100 parts by weight of the total amount of the isocyanate derivative (B) and the non-fluorine copolymer (A).

The proportion of the emulsifier compounded may be, for example, 0.5% by weight or more and, for example 5% by weight or less, relative to the water-repellent composition.

Then, after the above-described components have been mixed, the mixed liquid is stirred, and ultrasonic wave is applied to the mixed liquid to emulsify the mixed liquid.

As a method of stirring, for example, a disperser such as a homomixer, an ultrasonic homogenizer, a pressurized homogenizer, a milder, or a pressurized porous membrane disperser, is used, and preferably a homomixer is used.

The stirring conditions are set appropriately, and when a homomixer is used, the revolution per minute is set to, for example, 500 rpm or more and, for example, 10,000 rpm or less. A stirring time is, for example, 0.5 minutes or longer and, for example, 10 minutes or shorter and preferably 5 minutes or shorter. A stirring temperature is, for example, 50°C or higher and, for example, 90°C or lower.

Next, when preparing the above-described mixed liquid and partially compounding a monomer to this mixed liquid, the residual moieties of the above monomer are compounded.

Next, to this mixed liquid is compounded a polymerization initiator.

Examples of the polymerization initiators include, for example, azo compounds such as azobisisobutylamidine dihydrochloride and azobisisobutyronitrile, for example, water-soluble polymerization initiators such as persulfates such as potassium persulfate and ammonium persulfate, and, for example, oil-soluble polymerization initiators such as organic peroxides such as benzoyl peroxide, di-t-butyl peroxide, lauryl peroxide, cumene hydroperoxide, t-butyl peroxypivalate and diisopropyl peroxydicarbonate, and preferably include the azo compounds and more preferably azobisisobutyronitrile.

A proportion of the polymerization initiator compounded may be, for example, 0.01 parts by weight or more, or, for example, 10 parts by weight or less, per 100 parts by weight of the monomers.

If necessary, a chain transfer agent can also be compounded into this mixed liquid.

Examples of the chain transfer agents include, for example, mercaptan group-containing compounds such as lauryl mercaptan, thioglycol, and thioglycerol (particularly alkyl mercaptans (for example, having 1 or more and 30 or less carbon atoms)), inorganic salts such as sodium hypophosphite and sodium hydrogen sulfite, and preferably lauryl mercaptan.

A proportion of the chain transfer agent compounded may be, for example, 0.01 parts by weight or more and, for example, 10 parts by weight or less, per 100 parts by weight of the monomers.

Then, this mixed liquid is heated to polymerize the monomers.

The heating conditions are a heating temperature of, for example, 40°C or higher and, for example, 80°C or lower, and a heating time of, for example, 1 hour or longer and, for example, 6 hours or shorter.

As a result, an emulsion of the non-fluorine copolymer (A) is obtained, yielding a water-repellent composition containing the isocyanate derivative (B) and the non-fluorine copolymer (A) (emulsion).

In the first method, the above-described monomer constituting the non-fluorine copolymer (A) is polymerized in the presence of the isocyanate derivative (B), however, after having polymerized the monomer, the isocyanate derivative (B) can alternatively be compounded (the second method). Also, after having polymerized the monomer in the presence of a surfactant and a liquid medium, the isocyanate derivative (B) may also be then compounded (the third method).

The third method is similar to the above-described production method, except that the above-described monomer constituting the non-fluorine copolymer (A) is polymerized in the absence of the isocyanate derivative (B). The non-fluorine copolymer (A) obtained by the third method can be combined with the isocyanate derivative (B) to obtain the water-repellent composition of the present disclosure.

Alternatively, after having polymerized the monomer to prepare a non-fluorine copolymer (A), the obtained non-fluorine copolymer (A) can also be compounded with the isocyanate derivative (B) (the fourth method). Furthermore, after having polymerized a monomer first to prepare a non-fluorine copolymer (A), the obtained non-fluorine copolymer (A) can also be compounded with the isocyanate derivative (B), a surfactant, and a liquid medium (the fifth method).

In the fourth method and fifth method, examples of the polymerization methods include, for example, solution polymerization, suspension polymerization, and emulsion polymerization.

When the solution polymerization is adopted, a monomer is dissolved in an organic solvent in the presence of the above-described polymerization initiator, and after substitution with nitrogen, the mixture is heated with stirring.

As the polymerization initiator, the above-descried polymerization initiators may be used. A proportion of the polymerization initiator compounded may be, for example, 0.01 parts by weight or more, or, for example, 20 parts by weight or less and preferably 10 parts by weight or less, per 100 parts by weight of the monomers.

Examples of the organic solvent may include, for example, the solvents exemplified in the liquid medium described above. The organic solvent for use may be, for example, glycols (for example, glycols having 2 to 40 carbon atoms, specifically, such as ethylene glycol and propylene glycol), esters (for example, esters having 2 to 40 carbon atoms, specifically ethyl acetate and butyl acetate), ketones (for example, ketones having 2 to 40 carbon atoms, specifically methyl ethyl ketone, diisobutyl ketone, and methyl isobutyl ketone), alcohols (for example, alcohols having 1 to 40 carbon atoms, specifically ethanol, butanol, and isopropyl alcohol). As the organic solvent, a water-soluble glycol-based solvents (for example, such as ethylene glycol and propylene glycol) may be preferably used.

A proportion of the organic solvent compounded may be, for example, 10 parts by weight or more and preferably 50 parts by weight or more, and, for example, 2,000 parts by weight or less and preferably 1,000 parts by weight or less, per 100 parts by weight of the monomer.

As the heating conditions, a heating temperature may be, for example, 30°C or higher and, for example, 120°C or lower, and a heating time may be, for example, 1 hour or longer and, for example, 10 hours or shorter.

From all described above, the non-fluorine copolymer (A) is obtained.

Then, after having produced the non-fluorine copolymer (A) by solution polymerization, then removing an organic solvent, and compounding the non-fluorine copolymer (A) to a surfactant and a liquid medium together with the isocyanate derivative (B), an emulsion of the non-fluorine copolymer (A) can be obtained.

### <Applications of Water-Repellent Composition>

Examples of applications of the water-repellent composition in the present disclosure include an external treatment agent (surface-treating agent) or internal treatment agent, repellent (water-repellent agent, oil-repellent agent or water- and oil-repellent agent, or the like, particularly water-repellent agent), soil resistant agent, soil release agent, release agent, and mold release agent (external mold release agent or internal mold release agent).

### <Production Method of Treated Product>

The method for producing a treated product in the present disclosure includes applying the water-repellent composition of the present disclosure to a substrate (particularly a fibrous substrate).

### [Treated Product]

Examples of the substrate treated with the water-repellent composition of the present disclosure include textile products, stone, filters (for example, electrostatic filters), dust masks, components of fuel cells (for example, gas diffusion electrodes and gas diffusion supports), glass, paper, wood, leather, fur, asbestos, brick, cement, metals and oxides, ceramic products, plastics, painted surfaces, and plasters. Examples of the textile products include various products, including animal and vegetable natural fibers such as cotton, hemp, wool, and silk; synthetic fibers such as polyamide, polyester, polyvinyl alcohol, polyacrylonitrile, polyvinyl chloride, and polypropylene; semi-synthetic fibers such as rayon and acetate; inorganic fibers such as glass fiber, carbon fiber, and asbestos fiber; or mixed fibers thereof. As an example of a substrate to be treated with the water-repellent composition, a woven or knitted fabric will be described in detail.

### (Woven or Knitted Fabric)

### • Production method of woven or knitted fabric

A woven or knitted fabric can be obtained by weaving or knitting the aforementioned combined filament-interlaced yarns to obtain a greige fabric and then subjecting it to post-processing and water-repellent treatment. The weaving or knitting may be carried out by using a known weaving machine or knitting machine, and the preparation process prior to weaving or knitting can also be carried out by using known equipment.

In the post-processing, the greige fabric first undergoes scouring and relaxing. The scouring and relaxing may be carried out continuously or in a batch manner at a temperature of 80 to 130°C. The scouring and relaxing are usually preferably carried out in a batch manner at 100°C or lower, and in particular, it is preferably carried out by using a high-pressure liquid flow dyeing machine equipped with a jet nozzle.

After the scouring and relaxing, the woven or knitted fabric undergoes presetting. The presetting is usually carried out by dry heat treatment at 170 to 200°C for 30 to 120 seconds by using a pin tenter. After the presetting, the fabric is dyed according to an ordinary method, followed by final setting if necessary.

After the post-processing, the woven or knitted fabric may undergo water-repellent treatment. In the water-repellent treatment, first, an aqueous solution containing a water-repellent agent (the aqueous solution may be the water-repellent composition in the present disclosure) is prepared. Then, by a padding method, spray method, kiss roll coater method, slit coater method, or the like, the aforementioned aqueous solution can be applied to the woven or knitted fabric after the above post-processing, and the resultant may undergo dry heat treatment at 105 to 190°C for 30 to 150 seconds. The above aqueous solution may contain a crosslinking agent, softener, antistatic agent, and the others, as necessary. After the water-repellent treatment, the woven or knitted fabric may be subjected to calendering processing in order to further improve its water-repellent performance.

The woven or knitted fabrics are suitably used for apparel applications, particularly for uniform wear applications, ladies' wear applications, and sportswear applications.

### • Stacked fabric

The woven or knitted fabric of the present disclosure may be provided in the form of a stacked fabric having a moisture permeable and waterproof layer on one side of the woven or knitted fabric. The moisture permeable and waterproof layer may be stacked directly on the woven or knitted fabric, or it may be stacked above the woven or knitted fabric via an adhesive layer. When the stacked fabric of the present disclosure is used for apparel applications and the like, it is arranged so that the woven or knitted fabric side is exposed to rainwater and the like.

### • Moisture permeable and waterproof layer

The moisture permeable and waterproof layer is a layer that covers one side of the woven or knitted fabric and is formed by a resin having a waterproof property and moisture permeability.

The moisture permeable and waterproof layer may be formed by directly coating a woven or knitted fabric with a resin (resin for forming the moisture permeable and waterproof layer) or the layer may be stacked above one side of the woven or knitted fabric via the adhesive layer described below. In the present disclosure, combined filament-interlaced yarns with fine protrusions due to loops or slacks are used for the woven or knitted fabric. Therefore, the protrusions are firmly entangled with the adhesive layer or the moisture permeable and waterproof layer to exhibit an anchoring effect, so that it is very difficult for the woven or knitted fabric and the moisture permeable and waterproof layer to peel from each other. In a case in which an ordinary woven or knitted fabric (a woven or knitted fabric in which the aforementioned protrusions are not sufficiently retained on its surface) is used, the anchoring effect may not be sufficiently exhibited, whereby the woven or knitted fabric and the moisture permeable and waterproof layer easily peel from each other.

A resin for forming the moisture permeable and waterproof layer is not limited, and preferably contains a polyurethane resin as the main component, and for example, the resin preferably contains a polyurethane resin in an amount of 80% by weight or more. The polyurethane resin is generally suitable for forming a resin layer with moisture permeability and a waterproof property. Among them, a microporous type of polyurethane is preferred, taking moisture permeability into consideration. However, in a case in which the resin is likely to be exposed to rainfall for a long period of time or is expected to be used repeatedly via laundry or the like, a non-porous type of moisture permeable urethane may be used instead of the microporous type.

As the polyurethane resin, a conventionally known polyurethane resin obtained by reacting a polyisocyanate component with a polyol component can be employed.

The moisture permeable and waterproof layer may have a microporous structure or a non-porous structure. In the case of the microporous structure, inorganic fine powder can be contained in the moisture permeable and waterproof layer in order to secure desired moisture permeability.

Examples of the inorganic fine powder include fine powder made of, for example, silicon dioxide, aluminum dioxide, or titanium dioxide. The average primary particle size of the inorganic fine powder is preferably about 7 to 40 nm. The amount of inorganic fine powder is preferably 3 to 50% by weight relative to the total amount of moisture permeable and waterproof layer, and it is preferably 5 to 50% by weight.

The thickness of the moisture permeable and waterproof layer is preferably 5 µm or thicker and more preferably 10 to 30 µm. Within the above range of thickness, a waterproof property and moisture permeability are well-balanced, which is advantageous in terms of texture and tear strength.

### • Adhesive layer

The stacked fabric preferably includes an adhesive layer. In other words, the woven or knitted fabric and the moisture permeable and waterproof layer are preferably stacked via an adhesive layer. The reason therefor will be described below. In the present disclosure, the woven or knitted fabric is employed that has on its surface fine protrusions due to loops or slacks, as described above. Therefore, the protrusions are firmly entangled with the adhesive layer to exhibit an anchoring effect, so that it is very difficult for the woven or knitted fabric and the moisture permeable and waterproof layer to peel from each other.

Moreover, when the moisture permeable and waterproof layer is directly stacked on the aforementioned woven or knitted fabric, for example, by a coating method, the protrusions on the surface of the woven or knitted fabric may penetrate thorough the moisture permeable and waterproof layer, which results in formation of pinholes and may thus cause poor water resistance and strength. There also arises a concern that coating will not be carried out in uniform manner, resulting in uneven thickness in the moisture permeable and waterproof layer. In order to prevent this, when a surface of the woven or knitted fabric is smoothed by a calendering processing, for example, water-repellency may decrease due to reduction in the protrusions or air retention layer. Therefore, in the present disclosure, the woven or knitted fabric and the moisture permeable and waterproof layer are preferably stacked via an adhesive layer.

A type of the adhesive for forming the adhesive layer is not limited, but is preferably an adhesive excellent in miscibility with the moisture permeable and waterproof layer. For example, when a resin including a polyurethane resin as the main component is selected as a resin for forming the moisture permeable and waterproof layer, an adhesive layer composed of a polyurethane-based adhesive is preferably employed. The polyurethane-based adhesive used may be any one of etheric, esteric, polycarbonate-based adhesives, and the others; however, in view of imparting excellent moisture permeability, the etheric adhesive is preferably included.

The adhesive layer may be formed on the entire surface of one side of the woven or knitted fabric, or may be formed in pattern in view of moisture permeability, texture, or the like. The patterned form is not limited, and may be dotted, linear, lattice, checkered, tortoiseshell patterns, and the others, and any of these patterns is preferably uniformly distributed throughout the entire surface.

The thickness of the adhesive layer is preferably about 10 to 100 µm and more preferably 20 to 80 µm. The thickness less than 10 µm makes it difficult to provide a durable stacked fabric even when the area occupied by the adhesive is large, and the thickness exceeding 100 µm increases a production cost and also leads to a tendency that further adhesiveness cannot be expected, both of which are undesirable.

### • Textile fabric for lining

In the stacked fabric of the present disclosure, a textile fabric for lining may be stacked on the moisture permeable and waterproof layer (the side of the moisture permeable and waterproof layer opposite from the side thereof on which the woven or knitted fabric of the present disclosure is stacked). The moisture permeable and waterproof layer can be protected by the textile fabric for lining, thereby rendering the layer further excellent in waterproof properties (water pressure resistance) and strength. Moreover, stacking the textile fabric for lining can inhibit elongation of the entire stacked fabric. Therefore, the protrusions can be inhibited from their reduction resulting from a pull on the protrusions of the combined filament composite yarns by elongation of the woven or knitted fabric due to a finishing process after stacking, tension upon wearing, or the like, and the aforementioned water-repellency can be highly maintained. Moreover, stacking the textile fabric for lining further improves the water-repellency.

Examples of textile fabrics for lining include various types of woven fabrics and knitted fabrics. Among these, knitted fabrics are more suitable than woven fabrics because fiber yarns constituting the knitted fabrics easily protrude from their surfaces to create a less flat surface condition, and thus, the anchoring effect is more exhibited, thereby making it difficult for the fabric to peel from the moisture permeable and waterproof layer. In particular, a tricot knitted fabric, elasticity of which is inhibited compared to knitted fabrics having other structures, is preferred, because their stitch voids become not too large, allowing the water-repellency to be exhibited more effectively. The tricot knitted fabric is also preferred for the following reason: a long greige tricot knitted fabric with fewer joints can be obtained upon knitting, which makes it possible for the fabric to be uniformly stacked on the moisture permeable and waterproof layer.

A material of fibers constituting the textile fabric for lining is not limited and can be appropriately selected; however, it is preferably a nylon fiber. The reason for this is as follows: a problem with polyester fibers and the like, for which disperse dyes are used, is migration and sublimation of the disperse dyes to the moisture permeable and waterproof layer, and acid dyes are generally used for nylon fibers, thereby hardly causing such a problem. The form (long fiber, staple fiber, or spun yarn) of the constituent fiber of the textile fabric for lining, or fineness thereof is not limited, and can be appropriately selected such that the effect of the present disclosure is not impaired.

### • Characteristics of stacked fabric

The stacked fabric has an excellent waterproof property. As for a suitable example of the waterproof property of the stacked fabric of the present disclosure, the water level is, for example, 10,000 mm or more, preferably 15,000 mm or more, further preferably 16,000 mm or more, and particularly preferably 20,000 mm or more, as measured according to the water resistance test specified in the A method (low water pressure method) in JIS L 1092: 2009. The upper limit value of the water level is not limited, and is, for example, 50,000 mm or 25,000 mm.

The stacked fabric has excellent moisture permeability. As for a suitable example of the moisture permeability of the stacked fabric of the present disclosure, the moisture permeability is, for example, 10,000 g/m²·24h or more, preferably 15,000 g/m²·24h or more, and further preferably 20,000 g/m²·24h or more, as measured according to the B-1 method (potassium acetate method) in JIS L 1099: 2012. The upper limit value of the moisture permeability is not limited, and is, for example, 40,000 g/m²·24h or 35,000 g/m²·24h.

The stacked fabric inhibits interlayer peeling between the woven or knitted fabric and the moisture permeable and waterproof layer. As for a suitable example of the peel strength between the woven or knitted fabric and the moisture permeable and waterproof layer in the stacked fabric of the present disclosure, the peel strength is, for example, 5 N/2.54 cm or more, preferably 5 to 50 N/2.54 cm, further preferably 6 to 30 N/2.54 cm, and particularly preferably 9 to 25 N/2.54 cm, as measured according to the method in JIS L 1089. In order to fall the peel strength in the above range, a woven or knitted fabric without calendering processing may be employed, or an adhesive layer may be provided, for example.

### • Production method of stacked fabric

Methods for producing a stacked fabric are not limited, but include for example, the first production method and second production method described below.

The first production method: it comprises the step of applying a resin for the moisture permeable and waterproof layer to the surface of a woven or knitted fabric to form the moisture permeable and waterproof layer.

The second production method: it comprises the step of forming an adhesive layer on a woven or knitted fabric or a moisture permeable and waterproof layer, and the step of bonding the woven or knitted fabric and the moisture permeable and waterproof layer via an adhesive layer.

The woven or knitted fabric used for stacked fabrics (i.e., the woven or knitted fabrics of the present disclosure described above) preferably retain protrusions on the fabric surface as much as possible. For example, when a woven or knitted fabric undergoes calendering processing in order to facilitate coating processing or the like, fine protrusions of combined filament-interlaced yarns may be crushed to a flat surface, whereby a specific water drop rolling angle may not be achieved. Furthermore, as a result of the calendering processing, the above-described air retention layer cannot be sufficiently retained, whereby the desired water-repellency may not be attained. Therefore, conditions for calendering processing are preferably sufficiently taken into account, and for example, when a woven or knitted fabric is subjected to calendering processing, ordinary conditions (for example, a temperature of 130°C or higher, and a linear pressure of 200 to 20,000 N/cm) may be employed so that the protrusions of the combined filament-interlaced yarns are not reduced too much. Calendering processing may also be carried out without heating.

In the first production method, examples of methods for applying a resin for the moisture permeable and waterproof layer to the surface of the woven or knitted fabric include a coating method. In the coating method, a knife coater or comma coater can be used. In view of allowing a moisture permeable and waterproof layer to have excellent moisture permeability, it is preferably obtained by a wet method.

In the second production method, examples of methods for forming an adhesive layer on a woven or knitted fabric or a moisture permeable and waterproof layer include a lamination method. In the lamination method, a method involving use of a resin solution or a method involving hot melt can be employed to form the adhesive layer. First, a clearance is created on the surface of a release material (release paper, release fabric, or release film, and the like); a resin composition for forming a moisture permeable and waterproof layer (for example, a resin composition containing a resin and an organic solvent) is applied thereto while adjusting its thickness, to form a moisture permeable and waterproof layer; and the moisture permeable and waterproof layer is heat treated to completely react to thereby obtain a film. The release material can be appropriately removed after having bonded or aging.

An adhesive layer is then formed on the woven or knitted fabric or the moisture permeable and waterproof layer. For example, in the method involving use of a resin solution, a polyurethane resin solution may be applied to the entire surface of the layer or applied to the surface in a pattern, and the polyurethane resin solution may be a two-pack curable type and have an adjusted viscosity within a range of 500 to 5000 mPa·s. Thereafter, the applied solution is then dried to form the adhesive layer, the woven or knitted fabric and the moisture permeable and waterproof layer are bonded to each other via the adhesive layer, and undergo compression bonding or thermal compression bonding, whereby the second production method can be implemented.

In the case of hot melt, on the other hand, a moisture-curable resin, which reacts with moisture in the air, is preferably used, and those that melt in a temperature range of about 80 to 150°C are more suitably used in practice. In this case, the hot melt resin is first melted while taking into consideration the melting point of the resin, its viscosity when melted and the others. The surface of the woven or knitted fabric or the moisture permeable and waterproof layer is then coated with the molten resin, and the coated fabric or layer is allowed to mature while cooled at ordinary temperature to form an adhesive layer. Thereafter, the woven or knitted fabric and the moisture permeable and waterproof layer are bonded to each other via the adhesive layer, and undergo compression bonding, whereby the second production method can be implemented.

Among these production methods, the second production method is preferably employed. In a case in which the moisture permeable and waterproof layer is stacked using the coating method, there is a concern that the moisture permeable and waterproof layer may create pinholes due to fine protrusions on the surface of the woven or knitted fabric, which tends to reduce water resistance pressure. Moreover, when the woven or knitted fabric is subjected to calendering processing in an attempt to form a uniform moisture permeable and waterproof layer, there is a concern that desired water-repellency may not be achieved due to reduction of the protrusions or air retention layer, and calendering conditions are thus required to be examined separately, which may result in that the process itself may become complicated.

Thereafter, the textile fabric for lining can be stacked on the moisture permeable and waterproof layer using a known and appropriate method.

### • Applications of stacked fabric

The stacked fabric has excellent water-repellency, and moisture permeability and a waterproof property, and the moisture permeable and waterproof layer does not peel off even in harsh environments. Accordingly, the stacked fabric is suitable in the fields such as uniform clothing, sportswear clothing, outdoor products, and the like, all of which are used outdoors.

### [Treatment Method]

The water-repellent composition of the present disclosure can be applied as a treatment agent (particularly a surface-treating agent) to a substrate by conventionally known methods. A method for applying the water-repellent composition in the present disclosure may include dispersing the water-repellent composition in an organic solvent or water to dilute it therewith, if necessary, and allowing the resultant to adhere to the surface of the substrate by any known methods such as dip coating, spray coating, or foam coating, and then drying it. After drying, a textile product is obtained with a solid component in the water-repellent composition adhered. If necessary, a suitable crosslinking agent may be applied in combination with the water-repellent composition, followed by curing. Furthermore, the water-repellent composition of the present disclosure may be used in combination with various additives such as water- and/or oil-repellent agents, anti-slip agents, antistatic agents, texture modifiers, softening agents, antibacterial agents, flame retarders, coating material fixing agents, wrinkle-resistant agents, drying rate adjusters, crosslinking agents, film formation agents, compatibilizing agents, antifreeze agents, viscosity adjusters, ultraviolet absorbers, antioxidants, pH adjusters, insect repellents, and antifoaming agents. Examples of the various additives may be the same as those described in "Other components" for the water-repellent composition hereinabove. The concentration of the non-fluorine copolymer (A) in the treatment agent to be brought into contact with a substrate may be appropriately changed according to applications, but may be 0.01 to 10% by weight, for example, 0.05 to 5% by weight.

### [Textile Product]

A textile product as a substrate may be any of various products, and examples thereof include fabric products and paper products. The textile product which is the substrate is also called a fibrous substrate.

Examples of the fabric product include: flora and fauna natural fibers such as cotton, hemp, wool, and silk; synthetic fibers such as a polyamide, polyester, polyvinyl alcohol, polyacrylonitrile, polyvinyl chloride, and polypropylene; semisynthetic fibers such as rayon and acetate; inorganic fibers such as a glass fiber, carbon fiber, and asbestos fiber or a mixture of these fibers. Fabric products include woven fabrics, knitted fabrics, and non-woven fabrics, fabrics in clothing form and carpets. Fibers, yarns and intermediate textile products (for example, slivers or coarse yarns) before being formed into fabrics may also undergo treatments.

Examples of the paper product include: papers made of bleached or unbleached chemical pulps such as kraft pulp or sulfite pulp; bleached or unbleached high-yield pulps such as crushed wood pulp, mechanical pulp, or thermomechanical pulp; waste paper pulps such as waste newspaper, waste magazines, waste cardboards, or deinked waste paper; containers made of paper, and formed articles made of paper. Specific examples of the paper product include food packaging paper, base paper for gypsum board, coated base paper, medium quality paper, general liner and core, neutral pure white roll paper, neutral liner, rust-proof liner and metal joined paper, kraft paper, neutral printing and writing paper, neutral coated base paper, neutral PPC paper, neutral thermal paper, neutral pressure sensitive base paper, neutral inkjet paper and neutral information paper, and molded paper (molded containers).

The water-repellent composition can be applied to the textile products by any of the methods known for treating textile products (for example, fabrics) with liquids. The textile product may be immersed in a water-repellent composition, or the solution may be adhered to or sprayed on the textile product. The treated textile product is dried and subjected to curing, preferably by heating, in order to develop water-repellency. The heating temperature may be, for example, 100°C to 200°C, 100°C to 170°C, or 100°C to 120°C. Favorable performance can be obtained even by heating at lowered temperatures (for example, 100°C to 140°C) in the present disclosure. In the present disclosure, the heating time may be 5 seconds to 60 minutes, for example, 30 seconds to 3 minutes.

Alternatively, the water-repellent composition may be applied to the textile product by a cleaning method, for example, in laundry application or dry cleaning methods.

The textile products to be treated may be fabrics, including woven textiles (woven fabrics), knitted textiles (knitted fabrics) and nonwoven fabrics, fabrics in clothing form and carpets. The textile products may also be fibers or yarns or intermediate textile products (for example, sliver or coarse yarn). The water-repellent composition of the present disclosure is particularly effective in rendering textile products (for example, synthetic fibers) water-repellent.

Fibers constituting the textile product may be natural, synthetic, semi-synthetic, regenerated or inorganic fibers. Fibers may be used singly or in combination of two or more thereof.

Examples of the natural fibers include cellulosic fibers such as cotton, flax, and pulp, chitin, chitosan, wool, and silk. Specific examples of the wood pulp include mechanical pulp such as ground wood pulp (GP), pressurized ground wood pulp (PGW), and thermomechanical pulp (TMP), chemical pulp such as high-yield softwood unbleached kraft pulp (HNKP; N material), softwood bleached kraft pulp (NBKP; N material, NB material), hardwood unbleached kraft pulp (LUKP; L material), hardwood bleached kraft pulp (LBKP, L material), waste paper pulp such as deinking pulp (DIP) and waste pulp (WP), and semi-chemical pulp (CP).

Examples of the synthetic fibers include polyesters such as polyethylene terephthalate, polybutylene terephthalate, polytrimethylene terephthalate, and copolymerized polyesters; polyolefins such as linear low density polyethylene, low density polyethylene, high density polyethylene, and polypropylene; polyamides such as nylon 6, nylon 66, nylon 610, and nylon 46; and acrylic fibers such as polyacrylonitrile; polyvinyl alcohol, polyurethane, and polyvinyl chloride.

Examples of the semi-synthetic fibers include acetate and triacetate. Examples of the regenerated fibers include rayon, cupra, polynosic rayon, lyocell, and tencel. Examples of inorganic fibers are a glass fiber and carbon fiber.

Alternatively, the textile product may be leather. In order to render the leather water- and oil-repellent, the polymeric product in the form of an aqueous solution or aqueous emulsion may be applied to the leather at various stages of leather processing, for example, during a wet processing of the leather or during a finishing of the leather.

Alternatively, the textile product may be paper. The polymeric product may be applied to paper that has been produced, or may be applied at various stages of papermaking, for example, during drying the paper.

The term "treatment" means applying the water-repellent composition to a substrate by dipping, spraying, coating, etc. The treatment allows the non-fluorine copolymer (A) and the isocyanate derivative (B), which are active ingredients of the water-repellent composition, to penetrate into an inside of the substrate and/or adhere to a surface of the substrate. In other words, the treatment provides a substrate (for example, a textile product) to which the non-fluorine copolymer (A) and the isocyanate derivative (B) in the water-repellent composition of the present disclosure are adhered.

### [Pretreatment of Textile Product]

The textile product may be pretreated prior to treatment with the water-repellent composition of the present disclosure. When a pretreated textile product is treated with the water-repellent composition, the textile product after the treatment with the water-repellent composition has excellent fastness.

Examples of pretreatment of textile products include cationization treatments by reaction with reactive quaternary ammonium salts or the like, anionization treatments such as sulfonation, carboxylation and phosphorylation, acetylation treatment after anionization treatment, benzoylation treatment, carboxymethylation treatment, grafting treatment, tannin acid treatment, and polymer coating treatment.

The method for pretreating the textile product is not limited, and the textile product can be pretreated by any of conventionally known methods. The method for pretreatment may include dispersing a pretreatment liquid in an organic solvent or water to dilute it therewith, as necessary, and allowing the diluted pretreatment liquid to adhere to the surface of the textile product by any known methods such as dip coating, spray coating, foam coating, and the like, and then drying the resultant. The pH, temperature, etc. of the pretreatment liquid may be adjusted according to an extent of treatment desired. As an example of the method for pretreating a textile product, a method for pretreating the textile product with a hydrocarbon-based water-repellent agent will be described in detail.

The method for pretreating a textile product may include the step of applying, to a fiber, at least one functional group (hereinafter may be referred to as "specific functional group") selected from a monovalent group represented by -SO₃M¹ wherein M¹ represents a monovalent cation, a monovalent group represented by - COOM² wherein M² represents a monovalent cation, and a monovalent group represented by -O-P(O)(OX¹)(OX²) wherein X¹ and X² each independently represent a hydrogen atom or an alkyl group having 1 to 22 carbon atoms.

Examples of M¹ include H, K, Na, or an ammonium ion which may have a substituent. Examples of M² include H, K, Na, or an ammonium ion which may have a substituent. When X¹ or X² is an alkyl group, it is preferably an alkyl group having 1 to 22 carbon atoms and more preferably an alkyl group having 4 to 12 carbon atoms.

Fibers containing the aforementioned specific functional groups (hereinafter, also referred to as "functional group-containing fibers") can be prepared, for example, by the following methods.
(i) A compound having the above specific functional group is allowed to adhere to a fiber material. The adhesion of the compound may be in a condition such that a portion of the compound and a portion of the fibers are chemically bonded as long as the above specific functional groups remain in a sufficient amount.
(ii) A fiber is provided in which the above specific functional group has been directly introduced into the material forming the fiber.

In the case of (i), for example, a functional group-containing fiber can be obtained by treating the fiber material with a pretreatment liquid containing one or more compounds having the above specific functional group, namely, by the step of introducing the functional group.

Raw materials of the fiber material are not limited, and examples thereof include natural fibers such as cotton, hemp, silk, and wool, semi-synthetic fibers such as rayon and acetate, synthetic fibers such as polyamides (nylon and the like), polyester, polyurethane, polypropylene, and composite fibers and blended fibers thereof. The fiber material may be in any form of fibers (tows, slivers, and the like), yarns, knitted fabrics (including interknitted fabrics), woven fabrics (including interwoven fabrics), nonwoven fabrics, papers, and the like.

In the present embodiment, in view of favorable water-repellency of the textile products to be obtained, fiber materials containing a polyamide and polyester as a raw material are preferably used, and in particular, nylons such as nylon 6 and nylon 6,6, polyesters such as polyethylene terephthalate (PET), polytrimethyl terephthalate, and polylactic acid, and mixed fibers containing these materials are preferably used.

A Phenolic polymer can be used as the compound having -SO₃M¹ described above. Examples of such a phenolic polymer include those containing at least one compound represented by the following general formula: 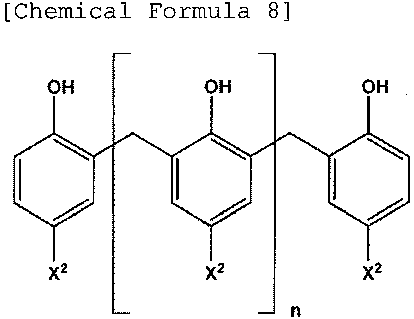 wherein in formula (2), X² represents -SO₃M³, wherein M³ represents a monovalent cation, or a group represented by the following general formula, and n is an integer of 20 to 3,000; 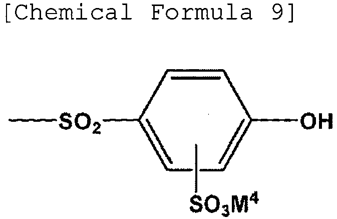 wherein M⁴ represents a monovalent cation.

Examples of M³ include H, K, Na or an ammonium ion that may have a substituent.

Examples of M⁴ include H, K, Na or an ammonium ion which may have a substituent.

The compounds represented by the general formula above may be, for example, formalin condensates of phenol sulfonic acid and formalin condensates of sulfonated bisphenol S.

Examples of the compound having -COOM² above include a polycarboxylic acid-based polymer.

The polycarboxylic acid-based polymer used can be, for example, a polymer synthesized by using acrylic acid, methacrylic acid, maleic acid, and the like as monomers by a conventionally known radical polymerization method, or a commercially available polymer.

A method for producing the polycarboxylic acid-based polymers may include, for example, adding a radical polymerization initiator to an aqueous solution of the aforementioned monomer and/or salt thereof and heating and reacting the mixture at 30 to 150°C for 2 to 5 hours. In this case, alcohols such as methanol, ethanol, and isopropyl alcohol, or aqueous solvents such as acetone may be added to the aqueous solution of the above monomer and/or salt thereof. Examples of the radical polymerization initiator include persulfates such as potassium persulfate, sodium persulfate, and ammonium persulfate; redox-based polymerization initiators such as a combination of a persulfate with sodium bisulfite; hydrogen peroxide, and water-soluble azo-based polymerization initiators. These radical polymerization initiators may be used singly or in combination of two or more thereof. Furthermore, a chain transfer agent (for example, octyl thioglycolate) may be added upon radical polymerization for the purpose of adjusting the degree of polymerization.

In addition to the aforementioned monomers, a copolymerizable monomer can be used for radical polymerization. Examples of the copolymerizable monomer include vinyl monomers such as ethylene, vinyl chloride, and vinyl acetate, acrylamide, acrylates, and methacrylates. The acrylates and methacrylates preferably have a hydrocarbon group having 1 to 3 carbon atoms that may have a substituent such as a hydroxyl group. Examples of such acrylates or methacrylates include methyl acrylate, methyl methacrylate, ethyl acrylate, ethyl methacrylate, 2-hydroxyethyl acrylate, 2-hydroxyethyl methacrylate, propyl acrylate, and propyl methacrylate. These copolymerizable monomers may be used singly or in combination of two or more thereof.

The carboxyl group in the polycarboxylic acid-based polymer may be free or neutralized with an alkali metal, an amine-based compound, or the others. Examples of the alkali metal include sodium, potassium, and lithium, and examples of the amine-based compound include ammonia, monoethanolamine, diethanolamine, and triethanolamine.

A weight average molecular weight of the polycarboxylic acid-based polymer is preferably 1,000 to 20,000 and more preferably 3,000 to 15,000 in view of favorable water-repellency of the textile product to be obtained.

Commercially available products of the polycarboxylic acid-based polymer can be used, including "NEOCRYSTAL 770" (trade name, manufactured by NICCA CHEMICAL CO., LTD.) and "CELLOPOL PC-300" (trade name, manufactured by Sanyo Chemical Industries, Ltd.).

Examples of the compound having -O-P(O)(OX¹)(OX²) as described above include phosphate ester compounds represented by the following general formula: 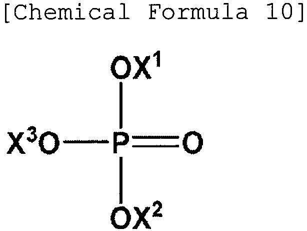 wherein, X¹ or X² is the same as defined above, and X³ represents an alkyl group having 1 to 22 carbon atoms.

As the aforementioned phosphoric acid ester compound, phosphoric acid monoesters, diesters and triesters, and mixtures thereof can be used in which the alkyl ester moiety is an alkyl group having 1 to 22 carbon atoms.

In view of favorable water-repellency of the textile products to be obtained, lauryl phosphoric acid ester and decyl phosphoric acid ester are preferably used.

As the phosphoric acid ester compound, commercially available products such as PHOSPHANOL ML-200 (trade name, manufactured by TOHO Chemical Industry Co., Ltd.) can be used.

A pretreatment liquid containing one or more of the compounds having the aforementioned specific functional group can be, for example, an aqueous solution of the compound described above. The pretreatment liquid may also contain an acid, alkali, surfactant, chelating agent, and the others.

Examples of the method for treating a fiber material with the above pretreatment liquid include padding treatment, dip treatment, spray treatment, and coating treatment. Examples of padding treatment include the method involving using the padding apparatus as described on pages 396 to 397 of Seni Sensyoku Kako Jiten (in Japanese; Fiber-dyeing process dictionary) (published by THE NIKKAN KOGYO SHIMBUN, LTD., 1963) and pages 256 to 260 of Irozome Kagaku (in Japanese; dyeing chemistry) III (published by JIKKYO SHUPPAN CO., LTD., 1975). Examples of the coating treatment include the method involving using a coating machine as described on pages 473 to 477 of Sensyoku Shiage Kiki Soran (in Japanese; Comprehensive guide to dyeing and finishing machines) (published by Fiber Japan CO., LTD., 1981). Examples of the dip treatment include the method involving using a batch type dyeing machine as described in pages 196 to 247 of Sensyoku Shiage Kiki Soran (in Japanese) (published by Fiber Japan CO., LTD., 1981), and for example, a jet dyeing machine, air flow dyeing machine, drum dyeing machine, wince dyeing machine, washer dyeing machine, and cheese dyeing machine can be used. Examples of the spray treatment includes a method involving using an air spray that nebulizes and sprays a treatment liquid by compressed air, or an air spray by hydraulic pressure nebulization system. In this case, the concentration of the treatment liquid and treatment conditions of heat treatment after application can be adjusted appropriately, taking into consideration various conditions such as their purposes and performance. Moreover, in a case in which the pretreatment liquid contains water, it is preferably dried to remove water after the pretreatment liquid has been allowed to adhere to the fiber material. The Drying method are not limited, and either a dry heat method or a wet heat method may be employed. Drying temperatures are also not limited, and for example, drying may be carried out at room temperature to 200°C for 10 seconds to several days. Heat treatment at a temperature of 100 to 180°C for about 10 seconds to 5 minutes may be carried out after the drying, as necessary.

In a case in which the textile material is those to be dyed, treatment with the pretreatment liquid may be carried out either before dyeing or in the same bath as in dyeing. However, in a case in which reduction soaping is carried out, there is a risk that the compounds having the aforementioned specific functional groups (for example, phenolic polymer compounds and the like) adsorbed may drop off in the course, and therefore, the treatment with the pretreatment liquid is preferably carried out following the reduction soaping after the dyeing.

The treatment temperature in the dip treatment can be 60 to 130°C. The treatment time can be 5 to 60 minutes.

The step of introducing the functional group by the pretreatment liquid is preferably treatment such that the amount of the adhering compound having the aforementioned specific functional group is 1.0 to 7.0 parts by weight, per 100 parts by weight of the fiber material. Within this range, both durable water-repellency and texture can be achieved at a high level.

The pH of the pretreatment liquid is preferably adjusted to 3 to 5. The pH adjustment can be carried out by using a pH adjuster such as acetic acid or malic acid.

A salt can be used in combination with the pretreatment liquid to adsorb the compound having the aforementioned specific functional group effectively onto the fiber material by a salting effect. Examples of the salt that can be used include sodium chloride, sodium carbonate, ammonium sulfate, and sodium sulfate.

In the step of introducing the functional group by the pretreatment liquid, an excess amount of the compound having the aforementioned specific functional group, which has been given by the treatment, is preferably removed. Examples of the removal method include washing with water. Sufficient removal can avoid inhibition of development of water-repellency in the subsequent water-repellent treatment, and additionally, the textile product to be obtained has the favorable texture. The functional group-containing fibers to be obtained are preferably sufficiently dried before contacting them with the hydrocarbon-based water-repellent agent.

Examples of (ii) the fiber in which the aforementioned specific functional group has been introduced directly into the material forming the fiber include a cation-dyeable polyester (CD-PET).

In view of favorable water-repellency of the textile products to be obtained, the functional group-containing fiber preferably has a zeta potential of its surface of - 100 to -0.1 mV and more preferably -50 to -1 mV. The zeta potential of the fiber surface can be measured, for example, using a zeta potential and particle size measurement system, ELSZ-1000ZS (manufactured by Otsuka Electronics Co., Ltd.).

The embodiments have been described above, however, it will be understood that various changes can be made in the forms and details without departing from the gist and scope of the claims.

### Examples

Hereinbelow, Examples of the present disclosure will be specifically illustrated; however, Examples do not restrict the present disclosure.

### [Water-Repellency Test]

The treated test fabric was evaluated for water-repellency by the spray method according to the JIS-L-1092 (AATCC-22).

The water-repellency was evaluated according to the following criteria. The higher the score, the more favorable the water-repellency.
100: No wet or water droplets adhered were observed on the front surface.
90: No wet but small water droplets adhered were observed on the front surface.
80: Wet in the form of separate small water droplets was observed on the front surface.
70: Wet was observed on half of the front surface and the permeation of separate small wet into the fabric, was observed.
50: Wet was observed on the entire front surface.
0: Wet was observed on the entire front surface and the entire back surface.

### [Slipperiness]

The test fabric was tested for a warp sliding at a load of 160 N in accordance with ISO 13936-2, and a seam sliding (mm) was measured. The smaller the seam sliding value, the better the slip resistance.

### [Preparation of Raw Material]

### (Production Example of Acrylic Polymer-Containing Water-Dispersion)

### Production Example 1

A 500 ml plastic container was charged with 30 g of water-soluble glycol-based solvent as an organic solvent, 120 g of pure water as a liquid medium, 58.2 g of stearyl acrylate as a long chain aliphatic hydrocarbon group-containing (meth)acrylate, 2 g of sorbitan fatty acid ester as a surfactant, 0.1 g of acetic acid as an organic acid, 2 g of cationic emulsifier, and 6 g of polyoxyethylene alkyl ether, the mixture was heated to 80°C, stirred with a homomixer at 2,000 rpm for 1 minute, and then emulsified and dispersed with ultrasonic waves for 15 minutes.

Next, this mixture was transferred to a 500 ml autoclave, and after nitrogen substitution, 0.2 g of lauryl mercaptan as a chain transfer agent and 1.8 g of vinyl chloride as a copolymerizable monomer were charged. To the mixture was further added 1 g of an azo group-containing water-soluble initiator as a polymerization initiator, and was raised to a temperature of 60°C and reacted for 4 hours to obtain a water dispersion of an acrylic polymer (hydrocarbon-based water-repellent resin). This dispersion was further diluted with pure water to prepare a water dispersion of a hydrocarbon-based water-repellent resin with a solid content concentration of 30% (in detail, a water dispersion containing the hydrocarbon-based water-repellent resin, the surfactant and the liquid medium).

### Production Example 2 to Production Example 7

Each water dispersion containing an acrylic polymer, a surfactant, and a liquid medium were prepared in the same manner as in the Production Example 1, except that the compounding formulation was changed according to Table 1.

**[Table 1]**

| | Production Example 1 | Production Example 2 | Production Example 3 | Production Example 4 | Production Example 5 | Production Example 6 | Production Example 7 |
|---|---|---|---|---|---|---|---|
| Stearyl acrylate | 58.2 | 57 | 55.8 | 55.8 | 60 | 51. 6 | 48 |
| Stearyl group-containing amide acrylate | | | | 1.2 | | | |
| Vinyl chloride | 1.8 | 3 | 4.2 | 3 | | 8.4 | 12 |
| Azo group-containing water-soluble initiator | 1 | 1 | 1 | 1 | 1 | 1 | 1 |
| Lauryl mercaptan | 0.2 | 0.2 | 0.2 | 0.2 | 0.2 | 0.2 | 0.2 |
| Water-soluble glycol-based solvent | 30 | 30 | 30 | 30 | 30 | 30 | 30 |
| Cationic emulsifier | 2 | 2 | 2 | 2 | 2 | 2 | 2 |
| Reactive emulsifier | | | | | | | |
| Sorbitan fatty acid ester | 2 | 2 | 2 | 2 | 2 | 2 | 2 |
| Polyoxyethylene alkyl ether | 6 | 6 | 6 | 6 | 6 | 6 | 6 |
| Acetic acid | 0.1 | 0.1 | 0.1 | 0.1 | 0.1 | 0.1 | 0.1 |
| Pure water | 120 | 120 | 120 | 120 | 120 | 120 | 120 |

### (Production Example of Polyurethane-Containing Water Dispersion)

### Production Example 8

### 1. Synthesis of Aliphatic Polyisocyanate Derivative

In a reactor equipped with a thermometer, stirrer, nitrogen inlet pipe and cooling pipe, under a nitrogen atmosphere, 500 parts by mass of 1,6-hexamethylene diisocyanate (HDI, trade name, Takenate 700, manufactured by Mitsui Chemicals, Inc), 0.25 parts by mass of 2,6-di(tert-butyl)-4-methylphenol (another name: dibutylhydroxytoluene, BHT, a hindered phenolic antioxidant), 0.25 parts by mass of tetraphenyl•dipropylene glycol•diphosphite (organic phosphorous acid ester, a promotor), were mixed, to this mixed liquid was then added 10.7 parts by mass of 1,3-butanediol, and nitrogen was introduced into the liquid phase for 1 hour. Thereafter, the mixed liquid was raised to a temperature of 80°C, reacted for 3 hours, then lowered to a temperature of 60°C. To the mixed liquid was then added 0.2 parts by mass of trimethyl-N-2-hydroxypropylammonium•2-ethylhexanoate as an isocyanuration catalyst, and was reacted for 1.5 hours. Thereafter, 0.04 parts by mass of o-toluenesulfonamide was added per 100 parts by mass of HDI. Then, this reaction mixed liquid was passed through a thin film distillation apparatus (temperature 150°C, degree of vacuum 93.3 Pa) and distilled until the amount of residual HDI monomer reached 0.5% or less to obtain an aliphatic polyisocyanate derivative (isocyanurate derivative of hexamethylene diisocyanate). The isocyanate group content of the obtained aliphatic polyisocyanate derivative was 20.9%, and the average number of isocyanate functional groups was 3.0.

### 2. Production of Hydrocarbon-Based Polyurethane

In a reactor equipped with a stirrer, thermometer, cooling pipe, and nitrogen gas inlet pipe, 100.20 g of the aliphatic polyisocyanate derivative and 67.60 g of KALCOL 8098 (stearyl alcohol, manufactured by Kao Corporation) as a long chain active hydrogen compound and 22.30 g of oleic alcohol were mixed, and the mixture was reacted under a nitrogen atmosphere at 110°C for 4 hours until the concentration of isocyanate groups reached 3.67%.

Next, the reaction liquid was cooled to 80°C, 9.90 g of N-methyldiethanolamine as a cationic active hydrogen compound was added thereto, and reacted at 80°C for 1 hour.

Next, to the reaction liquid was added 50.00 g of methyl ethyl ketone as a solvent, and reacted at 80°C until disappearance of the isocyanate group was confirmed in an infrared absorption spectrum.

Next, to the reaction liquid was added 57.69 g of methyl ethyl ketone, raised to a temperature of 80°C, and mixed until the reaction liquid was completely dissolved, and then cooled to 75°C.

Thereafter, to the reaction liquid was added 18.96 g of acetic acid as an acid compound, and neutralized.

Next, while being kept at 75°C, to the reaction liquid was gradually added 800.0 g of ion exchanged water heated to 70°C, and emulsified (internal emulsification).

Next, until the solid content concentration became 20% by weight or more, the solvent was removed in an evaporator under reduced pressure at a water bath temperature of 60°C.

Next, with ion exchanged water, the solid content concentration excluding the acid compound (acetic acid) was adjusted to 20% by weight to obtain a water dispersion containing a polyurethane.

### Production Example 9

A 500 mL four-necked flask equipped with a stirring bar, thermometer, and reflux pipe was charged with 116 g of sorbitan tristearate and 150 g of 4-methyl-2-pentanone (MIBK). Next, in order to remove excess water vapor from the mixed liquid, it was stirred while being kept at the temperature thereof of 70°C, refluxed for 1 hour, and then cooled to 50°C. While kept stirring, the mixed liquid was added dropwise with 30 g of Desmodur N-100 (biuret derivative of hexamethylene diisocyanate, manufactured by Covestro AG) by using a dropping funnel. After completion of the dropwise addition, to the mixed liquid was added one drop of dibutyltin dilaurate as a catalyst, and was reacted at 80°C for 1 hour. Next, to the mixed liquid was added 25 g of sorbitan monostearate, and was further reacted at 80°C for 4 hours.

Next, after having been cooled to 60°C, the reaction liquid was collected and was slowly mixed with water at 60°C, containing an arbitrary amount of a cationic emulsifier and a polyoxyethylene alkyl ether. The mixed liquid was stirred at 6,000 rpm for 1 minute using a homomixer, and was then emulsified and dispersed using ultrasonic waves for 15 minutes. Thereafter, the solvent (MIBK) was removed by a reduced pressure operation, and then pure water was added to adjust the concentration of the mixed liquid to obtain a water dispersion containing a polyurethane with a solid content concentration of 20%.

### Production Example 10

A 500 mL four-necked flask equipped with a stirring bar, thermometer, and reflux pipe was charged with 150 g of methyl ethyl ketone (MEK) and 51 g of stearyl alcohol. Next, in order to remove excess water vapor from the mixed liquid, it was stirred while being kept at the temperature thereof of 70°C, refluxed for 1 hour, and then cooled to 50°C. To the mixed liquid was then added 30 g of Desmodur N3200A (biuret derivative of hexamethylene diisocyanate, manufactured by Covestro AG) and was further reacted at 80°C for 4 hour.

Next, after having been cooled to 60°C, the reaction liquid was collected, and slowly mixed with water at 60°C, containing an arbitrary amount of a polyoxyethylene alkyl ether. The mixed liquid was stirred at 6,000 rpm for 1 minute by using a homomixer, and was then emulsified and dispersed using ultrasonic waves for 15 minutes.

Thereafter, the solvent (MEK) was removed by a reduced pressure operation, and then pure water was added to adjust the concentration of the mixed liquid to obtain a water dispersion containing a polyurethane with a solid content concentration of 20%.

### (Production Example of Silicone-Containing Water Dispersion)

### Production Example 11

A 200 mL four-necked flask equipped with a stirring bar, thermometer, and reflux pipe was charged with 12 g of methyl hydrogen silicone oil (the SiH:SiCH₃ molar ratio measured by 1H NMR = 50:50) and 0.02 g of platinum catalyst. Next, a dropping funnel was charged with 36 g of 1-hexacosene and it was added dropwise from the dropping funnel while being kept at the temperature at 70°C. After completion of the dropwise addition, the reaction was further carried out at 70°C for 3 hours. Infrared spectroscopy (IR) confirmed disappearance of a SiH peak and 47 g of a solid silicone polymer was obtained.

Next, a 250 ml glass container was charged with 28 g of silicone polymer, 5.6 g of water-soluble glycol-based solvent, 60 g of pure water, 1.7 g of sorbitan fatty acid ester, 0.7 g of polyoxyethylene alkyl ether, and 0.6 g of cationic emulsifier, the mixture was heated to 75°C, stirred for 1 minute at 2,000 rpm using a homomixer, and then emulsified and dispersed using ultrasonic waves for 10 minutes to obtain a water dispersion of a silicone polymer. Thereafter, pure water was added to prepare a water dispersion of a silicone polymer with a solid content concentration of 30% by weight.

### (Production Example of Wax-Containing Water Dispersion)

### Production Example 12

A pressurable reaction container was charged with 150 g of paraffin wax (melting point 75°C), 350 g of pure water, 4.5 g of polyoxyethylene alkyl ether, and 3 g of sorbitan fatty acid ester and sealed, the mixture was raised to a temperature of 110 to 120°C while stirred, and then was subjected to high-pressure emulsification under high pressure for 30 minutes to prepare a water dispersion of wax. Thereafter, pure water was added to prepare a water dispersion of wax with the solid content of 30% by weight.

### Production Example 13

A reaction container was charged with 150 g of polypropylene oxide wax having a melting point of 150°C, an acid value of 44 mg KOH/g, and a density of 0.93, 325 g of ion exchanged water, 25 g of surfactant with an HLB of 15, and 5 g of 48% potassium hydroxide aqueous solution, and sealed, the mixture was raised to a temperature of 160°C while stirred, and then was subjected to high-pressure emulsification under high pressure for 1 hour, followed by cooling to 90°C to obtain a water dispersion of polypropylene wax. Thereafter, pure water was added to prepare a water dispersion of polypropylene wax with the solid content of 30% by weight.

### [Examples 1 to 11 and Comparative Examples 1 to 4]

The aforementioned water dispersion and the hydrophilic particles (average primary particle size 25 nm, zeta potential +45 mV, and turbidity 2.0 ppm) shown in Table 2 were added and mixed to obtain each water dispersion with a solid content concentration of 30% so that a composition weight ratio matched with that shown in Table 2. This water dispersion was diluted with tap water to prepare 1,000 g of a test liquid with a solid content concentration of 1.0% by weight. Next, test fabrics (polyester fabric and nylon fabric) were impregnated with this test liquid, followed by passed through a mangle, and were passed through a pin tenter at 160°C for 1 minute, dried and cured to carry out the aforementioned test.

### [Example 12]

The above-described water dispersion and the antibacterial and antifungal agent shown in Table 2 (75 ppm of benzisothiazolin-3-one, and further 75 ppm of a mixture of 5-chloro-2-methyl-2H-isothiazol-3-one and 2-methyl-2H-isothiazol-3-one (weight ratio 3:1)) were added and mixed to obtain a water dispersion with a solid content concentration of 30% so that a composition weight ratio matched with that shown in Table 2. This water dispersion was diluted with tap water to prepare 1000 g of a test liquid with a solid content concentration of 1.0% by weight. Next, test fabrics (polyester fabric and nylon fabric) were impregnated with this test liquid, followed by passed through a mangle, and were passed through a pin tenter at 160°C for 1 minute, dried and cured to carry out the aforementioned test.

**[Table 2]**

| | Classification | Remarks | Example | | | | | | | | | | | | Comparative Example | | | |
|---|---|---|---|---|---|---|---|---|---|---|---|---|---|---|---|---|---|---|
| | | | 1 | 2 | 3 | 4 | 5 | 6 | 7 | 8 | 9 | 10 | 11 | 12 | 1 | 2 | 3 | 4 |
| (A) Non-fluorine polymer | Acrylic compound | Production Example 1 | 100 | | | | 75 | | | | | | | | | | | |
| | | Production Example 2 | | 100 | | | | 75 | | | 75 | 75 | 70 | 70 | | | | |
| | | Production Example 3 | | | 100 | | | | 75 | | | | | | | | | |
| | | Production Example 4 | | | | 100 | | | | 75 | | | | | | | | |
| | | Production Example 5 | | | | | | | | | | | | | 100 | | | |
| | | Production Example 6 | | | | | | | | | | | | | | 100 | | 75 |
| | | Production Example 7 | | | | | | | | | | | | | | | 100 | |
| (B) Isocyanate derivative | Urethane compound | Production Example 8 | | | | | 5 | 5 | 5 | 5 | | | | | | | | 5 |
| | | Production Example 9 | | | | | | | | | 5 | | | | | | | |
| | | Production Example 10 | | | | | | | | | | 5 | 5 | 5 | | | | |
| Other components | Silicone | Production Example 11 | | | | | 5 | 5 | 5 | 5 | 5 | 5 | 5 | 5 | | | | 5 |
| | Wax | Production Example 12 | | | | | 10 | 10 | 10 | 10 | 10 | 10 | 10 | 10 | | | | 10 |
| | | Production Example 13 | | | | | | | | | | | 5 | 5 | | | | |
| | Silica particles | | | | | | 5 | 5 | 5 | 5 | 5 | 5 | 5 | 5 | | | | 5 |
| | Antibacterial and antifungal agent | | | | | | | | | | | | | 150 ppm | | | | |
| Evaluation items | Water-repellency | Polyester | 85 | 85 | 90 | 85 | 90 | 95 | 95 | 95 | 95 | 95 | 95 | 95 | 80 | 95 | 95 | 95 |
| | | Nylon | 90 | 90 | 90 | 90 | 85 | 90 | 90 | 90 | 90 | 90 | 90 | 90 | 80 | 90 | 95 | 90 |
| | Slipperiness | Polyester | 2.5 | 3 | 3.8 | 3 | 1 | 1.4 | 1.8 | 1.3 | 1.3 | 1.3 | 1.4 | 1.4 | 2 | 4.1 | 6.5 | 2.3 |

The embodiments have been described above, however, it will be understood that various changes can be made in the forms and details without departing from the gist and scope of the claims.

## Claims

1. A water-repellent composition comprising a non-fluorine copolymer (A) comprising a repeating unit derived from a hydrophobic monomer (a1) having a hydrocarbon group having 2 to 40 carbon atoms, and a repeating unit derived from at least one chloride monomer (a2) selected from the group consisting of vinyl chloride and vinylidene chloride,
wherein in the non-fluorine copolymer (A), an amount of repeating units derived from the monomer (a2) is 1 to 9% by weight based on a sum of an amount of repeating units derived from the monomer (a1) and the amount of repeating units derived from the monomer (a2).

2. The water-repellent composition according to claim 1, wherein the hydrocarbon group in the hydrophobic monomer (a1) is a linear alkyl group having 10 or more carbon atoms.

3. The water-repellent composition according to claim 1 or 2, wherein the hydrophobic monomer (a1) is a compound represented by formula:
CH₂=C(-R¹²)-C(=O)-Y¹¹-(R¹¹)ₖ
wherein R¹¹ is a hydrocarbon group having 2 to 40 carbon atoms,
R¹² is a hydrogen atom, a monovalent organic group or a halogen atom,
Y¹¹ is a divalent to tetravalent group composed of at least one selected from a direct bond, a divalent to tetravalent hydrocarbon group having one carbon atom, - C₆H₄-, -O-, -C(=O)-, -S(=O)₂- and -NR'-, wherein R' is a hydrogen atom or a hydrocarbon group having 1 to 4 carbon atoms, and
k is 1 to 3.

4. The water-repellent composition according to any one of claims 1 to 3, comprising silicone.

5. The water-repellent composition according to claim 4, wherein an amount of the silicone is 0.1 to 20 parts by mass per 100 parts by mass of the non-fluorine copolymer (A).

6. The water-repellent composition according to any one of claims 1 to 5, wherein in the non-fluorine copolymer (A), the amount of repeating units derived from the monomer (a2) is 3 to 7% by weight based on the sum of the amount of repeating units derived from the monomer (a1) and the amount of repeating units derived from the monomer (a2).

7. The water-repellent composition according to any one of claims 1 to 6, further comprising an isocyanate derivative (B).

8. The water-repellent composition according to claim 7, wherein the isocyanate derivative (B) has an alkyl group having 12 or more and 30 or less carbon atoms.

9. The water-repellent composition according to claim 7 or 8, wherein the isocyanate derivative (B) is polyurethane.

10. The water-repellent composition according to any one of claims 7 to 9, wherein an amount of the isocyanate derivative (B) is 0.1 to 20 parts by mass per 100 parts by mass of the non-fluorine copolymer (A).

11. The water-repellent composition according to any one of claims 7 to 10, wherein the isocyanate derivative (B) is a compound obtained by a reaction of at least one active hydrogen compound selected from the group consisting of a hydrocarbon alcohol, a modified sugar alcohol compound, and a modified hydroxy acid compound, with at least one raw material isocyanate selected from the group consisting of an acyclic aliphatic polyisocyanate and a derivative thereof.

12. The water-repellent composition according to claim 1,
wherein the hydrophobic monomer (a1) is a compound represented by formula:
CH₂=C(-R¹²)-C(=O)-Y¹¹-(R¹¹)ₖ
wherein R¹¹ is a hydrocarbon group having 2 to 40 carbon atoms,
R¹² is a hydrogen atom, a monovalent organic group or a halogen atom,
Y¹¹ is a divalent to tetravalent group composed of at least one selected from a direct bond, a divalent to tetravalent hydrocarbon group having one carbon atom, - C₆H₄-, -O-, -C(=O)-, -S(=O)₂- and -NR'-, wherein R' is a hydrogen atom or a hydrocarbon group having 1 to 4 carbon atoms, and
k is 1 to 3, and
in the non-fluorine copolymer (A), the amount of repeating units derived from the monomer (a2) is 3 to 7% by weight based on the sum of the amount of repeating units derived from the monomer (a1) and the amount of repeating units derived from the monomer (a2).

13. The water-repellent composition according to claim 1,
wherein the hydrophobic monomer (a1) is a compound represented by formula:
CH₂=CH-C(=O)-Y¹¹-R¹¹
wherein R¹¹ is an alkyl group having 12 or more and 25 or less carbon atoms,
Y¹¹ is -O- or -O-(CH₂)ₘ-NH-C(=O)-, and
m is an integer of 2 or 4,
the chloride monomer (a2) is vinyl chloride, and
in the non-fluorine copolymer (A), the amount of repeating units derived from the monomer (a2) is 3 to 7% by weight based on the sum of the amount of repeating units derived from the monomer (a1) and the amount of repeating units derived from the monomer (a2).

14. A method for producing a textile product, comprising applying the water-repellent composition according to any one of claims 1 to 13 to a fibrous substrate.

15. The method for producing a textile product according to claim 14, comprising, before applying the water-repellent composition to the fibrous substrate, imparting to fibers one or more functional groups selected from the group consisting of
a monovalent group represented by -SO₃M¹, wherein M¹ represents a monovalent cation,
a monovalent group represented by -COOM², wherein M² represents a monovalent cation, and
a monovalent group represented by -O-P(O)(OX¹)(OX²),
wherein X¹ and X² each independently represent a hydrogen atom or an alkyl group having 1 to 22 carbon atoms.

16. A textile product to which the non-fluorine copolymer (A) in the water-repellent composition according to any one of claims 1 to 13 is adhered.

17. The textile product according to claim 16, to which a compound having one or more functional groups selected from the group consisting of
a monovalent group represented by -SO₃M¹, wherein M¹ represents a monovalent cation,
a monovalent group represented by -COOM², wherein M² represents a monovalent cation, and
a monovalent group represented by -O-P(O)(OX¹)(OX²),
wherein X¹ and X² each independently represent a hydrogen atom or an alkyl group having 1 to 22 carbon atoms, is adhered.
